(19) Europäisches Patentamt
European Patent Office
Office européen des brevets

(11) **EP 3 671 601 A2**

(12) **EUROPEAN PATENT APPLICATION**
published in accordance with Art. 153(4) EPC

(43) Date of publication:
**24.06.2020 Bulletin 2020/26**

(51) Int Cl.:
*G06Q 20/06* *(2012.01)*    *G06Q 20/38* *(2012.01)*

(21) Application number: **18846936.5**

(22) Date of filing: **16.08.2018**

(86) International application number:
**PCT/JP2018/030399**

(87) International publication number:
**WO 2019/035470 (21.02.2019 Gazette 2019/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.08.2017   JP 2017157181**

(71) Applicant: **NTI, Inc.**
**Yokkaichi-shi**
**Mie 510-8021 (JP)**

(72) Inventor: **NAKAMURA, Takatoshi**
**Yokkaichi-shi**
**Mie 510-8021 (JP)**

(74) Representative: **Gill Jennings & Every LLP**
**The Broadgate Tower**
**20 Primrose Street**
**London EC2A 2ES (GB)**

(54) **DATA STRUCTURE, TRANSMISSION DEVICE, RECEPTION DEVICE, SETTLEMENT DEVICE, METHOD, AND COMPUTER PROGRAM**

(57)    Provided is a data structure of virtual currency data with high safety. The virtual currency data, which is used in combination with a settlement device that accepts settlement when the virtual currency data is received from a predetermined device via a network and when predetermined conditions are satisfied, includes virtual currency encryption data which is data generated by encrypting, according to a predetermined encryption method, original data including at least amount information that is information for specifying a monetary value of the virtual currency data, and by further extracting characters, in conformity with a predetermined rule, from a character string obtained by the encryption.

（A）

| USER ID | BALANCE OF DEPOSIT ACCOUNT (YEN) |
|---|---|
| kgpi4649a | 2500 |
| LP000ddaa | 0 |
| d2af1apfa | 100000 |
| 220piiai1 | 25000 |
| iaorzkk00 | 300000 |
| . | . |
| . | . |
| . | . |

FIG. 11

（B）

| SERIAL NUMBER | CREDIT INFORMATION |
|---|---|
| 000000001 | 2500YEN |
| 000000002 | 10000YEN |
| 000000003 | 100000YEN |
| 000000004 | 25000YEN |
| 000000005 | 300000YEN |
| . | . |
| . | . |
| . | . |

FIG. 11

2

**Description**

**Technical Field**

The present invention relates to a virtual currency (virtual cash).

**Background Art**

In recent years, various proposals related to FinTech have been made, and some of the proposals have already been put into practical use.

Some of the proposals are called virtual currency. For example, Bitcoin (trademark), which began with a thesis published by someone using the name Satoshi Nakamoto and is realized by a system constructed on the Internet, is also generally called a virtual currency. On the other hand, bitcoin is sometimes referred to as cryptocurrency or crypto cash.

First, a structure of bitcoin will be described. Bitcoin is generally established by the following structure.

First, bitcoin is generated as follows.

A person who has the right to generate bitcoins is limited to an administrator who manages nodes to be described below. The node administrator participates in a certain game played on the Internet. The game is repeated, and the node administrator, who has won the game, can obtain a predetermined number of bitcoins every time the administrator wins the game.

The bitcoins generated in this way are transferred to a third party including a person other than the node administrator from the node administrator who obtains the bitcoins, for example, for "payment" in the same manner as general currency, and will be distributed as a result.

By the way, how to prevent double transfer is very important problem in the field of virtual currency or virtual money without being limited to bitcoin. Since general money, which is a tangible object, disappears from the transferor's hands when transferred from the transferor to the transferee, after the transferor transfers the money to the transferee, it is not possible for the transfer to transfer the same money to another transferee in principle. However, since the virtual currency is easy to duplicate and it is possible that the virtual currency as data owned by the transferor is not extinguished even when the transferor transfers the virtual currency to the transferee, it is very easy to transfer the same virtual currency to many people. Unless the same virtual currency can be prevented from being transferred to many people, such virtual currency cannot gain any trust as currency.

Bitcoin intends to solve such a problem of double transfer through a method of preserving all transaction records. The transaction records are as follows, for example. For simplicity, it is assumed that only four persons A to D participate in the structure of bitcoin and the node administrators are only two persons A and B. Assuming that the node administrator A wins the above-described game and gains 1,000 bitcoins, and the node administrator B wins the above-described game and gains 500 bitcoins.

In this state, A to D respectively have bitcoins described as follows.

[Table 1]

| | |
|---|---|
| A | +1000 |
| B | +500 |
| C | 0 |
| D | 0 |

Next, assuming that A has paid 100 bitcoins to C and B has paid 200 bitcoins to D.

In this state, A to D respectively have bitcoins described as follows.

[Table 2]

| | | |
|---|---|---|
| A | +1000 | -100 (to C) |
| B | +500 | -200 (to D) |
| C | 0 | +100 (from A) |
| D | 0 | +200 (from B) |

Next, assuming that A has paid 300 bitcoins to B and D has paid 100 bitcoins to C.

In this state, A to D respectively have bitcoins described as follows.

[Table 3]

| | | | |
|---|---|---|---|
| A | +1000 | -100 (to C) | -300 (to B) |
| B | +500 | -200 (to D) | +300 (from A) |
| C | 0 | +100 (from A) | +100 (from D) |
| D | 0 | +200 (from B) | -100 (to C) |

All of the records indicated in Tables 1 to 3 described above are transaction records. According to the transaction records described above, it can be seen at the time of Table 3 that A has bitcoins of 600 (= +1000 - 100 - 300), B similarly has bitcoins of 600, C has bitcoins of 200, and D has bitcoins of 100.

The bitcoin having such a structure is interesting in that some data as a main body of bitcoin is not delivered from the transferor to the transferee in the transfer of bitcoin between A to D in the example described above. In spite of this, attraction of the bitcoin structure is to specify the current balance of bitcoin of A to D as long as the transaction records exist. Again, in the bitcoin structure, there is no data corresponding to a coin entity, even though a naming of "coin" is used to recall a tangible object.

Noted that the phenomenon that the node administrator in the bitcoin structure wins the game and gains bitcoins can occur after the transaction is advanced to some extent, for example, after the time of Table 3.

In the bitcoin structure, as described above, each participant who participates in the bitcoin structure does not have data corresponding to his/her bitcoin. In other words, even though each participant's wallet is empty, since all past transaction records exist so as to be accessible and the balance of bitcoin at that time is specified in this way from the access record, the bitcoin structure is established based on mutual understanding or common illusion that the bitcoin of each participant should be like this.

For that reason, in order for all participants to believe in the common illusion, it is necessary to guarantee that the transaction record is accurate at any time or the transaction record cannot be falsified.

Bitcoin ensures the guarantee with block chain and the technology and idea of proof-of-work. The transaction records of bitcoin have a structure in which new transaction records are linked to previous transaction records. As new transaction record data (blocks) are continuously linked to the past transaction records, the transaction record data are linked in the form of chain of blocks. This is called a block chain. When a new block added to the block chain is generated, a value obtained by encryption of the previous block (more precisely, a hash value created from the data of the past block) is added to the new block. Thus, if the past block is falsified after the time when the new block is added to the block chain, the hash value is changed and the falsification is detected, and thus the data of the past block created previously cannot be falsified in actual fact.

In addition, blockchain data is recorded in a server called a node, which exists in large numbers on the Internet. The same blockchain data is recorded in each of the nodes. As described above, the administrator of the node is a participant in a certain kind of game described above. A person who can add a new transaction record block to the past transaction record is only a winner of the game described above. That is, when the number of persons, who can add a new block to a node, is limited to only one person, appropriate block data is ensured.

With the structure described above, since the blockchain recorded in each node cannot be falsified by the hash value or the hash value is changed when the falsification is made, the evidence of falsification is detected. Even when some of the blockchains recorded in each node are falsified likewise, including the hash value (for example, even when some of the blockchains recorded in multiple nodes are also falsified) so that the falsification of the past block data is not detected, if a large number of non-falsified blockchains exist out of the blockchains recorded in a large number of nodes, the falsification of the past block data can be made helpless including the hash value by setting this state to true, and the theory of majority rule is adopted in actual bitcoin. As described above, the node administrator can obtain bitcoins as a reward by winning the game. Using the bitcoins as motivation, the node administrators improve computing power of his/her computer. In order for a malicious third party to falsify a majority of the blockchains recorded in the node, it is necessary to prepare a computer having computing power of at least half of the sum of the computing power of many computers of the node administrators. A person who participates in the bitcoin structure trusts that the computer having such computing power cannot be prepared in actual fact. Such trust or confidential relationship guarantees the legitimacy of not only the blockchain but also the transaction record, and gives a certain kind of trust to the bitcoin.

**Summary of Invention**

**Technical Problem**

The structure of bitcoin is as described above, but the inventor of the present invention has big doubts that bitcoin is called virtual currency or bitcoin is even called crypto cash.

This is because, in the structure of bitcoin, a cryptographic technique is only used to guarantee the legitimacy of transaction records. That is, when a new block is added to the blockchain described above, a hash value of the previous block is taken.

Moreover, as described above, there is no data that is delivered from the value transferor to the transferee at the time of transferring the value. This means that currency (banknote or coin) of a tangible object is not used which mediates the transfer of value through the transfer thereof in functioning the currency.

That is, bitcoin may function as currency, but has not entity as money and is also extremely limited in the use of cryptography. The problem with the lack of entity as money is that all of the past transaction records are required to be recorded, resulting in causing great efforts and waste in recording of the large amount of data. Actually, the amount of blockchain data recorded in bitcoin is already enormous, and recording of the enormous blockchain data and recording of the same blockchain data in a large number of nodes cause tremendous waste. On the other hand, when data is circulated among users in replace of money, the safety of the data becomes a problem.

From such a point of view, although being very vague, there is an idea that a cryptographic technique should be utilized to establish virtual currency, and there is a possibility that safe virtual currency, more specifically, safe virtual money can be established using appropriately the cryptographic technique.

By the way, for virtual currency, the important things are reliability and safety, which begets the reliability, in the first place. In a case where a cryptographic technique is used, the safety is improved by possibly preventing third parties from finding what encryption method is used.

The present invention has an object to provide virtual currency that is data created as crypto cash in a true meaning, and an object to prevent third parties from finding the encryption method used.

**Solution to Problem**

In order to solve such a problem, the inventor of the present invention proposes the invention to be described below.

The present invention is a data structure of virtual currency data which is electronic data having a monetary value and is sent to a settlement device via a predetermined network to thereby be settled by the settlement device.

The data structure of the virtual currency data includes virtual currency encryption data which is a character string extracted, in conformity with a predetermined rule, from a character string obtained by encrypting plaintext original data which is data including at least amount information specifying a monetary value of the virtual currency data.

The virtual currency data having such a data structure is used in combination with the settlement device that determines whether the settlement is accepted.

The settlement device is what utilizes a cryptographic technique. In detail, the settlement device, having received the virtual currency data, is allowed to perform processing that generates encryption data for confirmation which is a character string extracted, in conformity with a rule identical to the predetermined rule used when the virtual currency encryption data is generated, from a character string obtained by encrypting, according to a method identical to a method used when the original data is encrypted, original data for confirmation which is original data identical to the original data serving as an origin of the virtual currency encryption data included in the received virtual currency data, and when the virtual currency encryption data coincides with the encryption data for confirmation, the processing determines that the virtual currency encryption data is authentic, and accepts settlement.

When the received virtual currency data is determined to be authentic, this settlement device accepts settlement of the amount of money specified by the amount information included in the original data encrypted and included in the virtual currency data. Here, determination of authenticity of the virtual currency data (or determination of authenticity of the virtual currency encryption data; in this application, since the virtual currency data is treated to be authentic when the virtual currency encryption data is authentic, determination of authenticity of the virtual currency data and determination of authenticity of the virtual currency encryption data are substantially identical to each other) is performed according to whether the encryption data for confirmation identical to the virtual currency encryption data included in the virtual currency data can be generated again or not. The virtual currency encryption data is generated by extracting, in conformity with a predetermined rule, a partial character string from a character string obtained by encrypting plaintext original data including amount information. The settlement device encrypts, according to a method identical to the method used when encrypting the original data, original data for confirmation identical to the original data serving as an origin of the virtual currency encryption data included in the virtual currency data which is a target of determination of authenticity, and extracts a part of a character string from the character string obtained by the encryption, in conformity with the rule identical to that used when the virtual currency encryption data is generated, thereby generating encryption data for confirmation. The virtual currency encryption data and the encryption data for confirmation, which are obtained by applying the same process to the original data and the original data for confirmation identical to each other, should be the same unless the virtual currency encryption data is falsified by a malicious third party. Based on such a theory, the settlement device according to the present invention determines the authenticity of the virtual currency encryption data.

Note that although "encryption" generally often indicates reversible conversion of the data in a returnable manner allowing no third party to be able to read (understand) the data without a specific knowledge if he/she views the data, the term "encryption" in the present invention indicates conversion of the data allowing no third party to read the data without a specific knowledge if he/she views the data, and encompasses not only decryptable conversion but also a case of irreversible conversion, such as a case of generating a hash value. Since the settlement device in the present invention executes an encryption process but executes no decryption process, not only an encryption process used by the settlement device but also an encryption process used when the virtual currency encryption data is generated is not required to be reversible conversion. As irreversible conversion, a technique of generating a hash value of certain data has been known, and such a publicly known technique can be applied to "encryption" in the present invention. It is, however, a matter of course that "encryption" in the present invention may be reversible.

The virtual currency data having the above-described data structure has high safety because the virtual currency encryption data, which is the main body of its monetary value, is generated by encrypting the original data. In addition, since the virtual currency realized by the virtual currency data having the data structure of the present application has virtual currency data to be exchanged at the time of value exchange, the virtual currency has the nature of entity as money, and therefore it is not necessary to record a large number of transaction record data.

The virtual currency data having the data structure according to the present invention has further advantageous effects. As described above, the virtual currency encryption data is not a character string itself obtained by encrypting the original data, and is a part of a character string obtained by encrypting the original data, the part being extracted in conformity with a predetermined rule. Consequently, if the encryption method used in the present invention is reversible, it is impossible to restore the virtual currency encryption data to the original data. Since the virtual currency encryption data that is included in the virtual currency data and circulates in the world cannot return to the original data, it is naturally impossible for a malicious third party having obtained the virtual currency encryption data to find out the encryption method on the basis of the virtual currency encryption data. Consequently, the virtual currency data having the data structure as in the present invention, and the virtual currency encryption data included therein have high safety.

Note that the virtual currency encryption data is a part of a character string obtained by encrypting the original data as described above, and the part of character string is required to precisely determine, only by itself, the authenticity of the virtual currency encryption data such that the probability of erroneous determination can be regarded to be substantially 0%, the erroneous determination being caused because a plurality of virtual currency encryption data happen to coincide with each other or because a virtual currency encryption data suitably generated by a malicious third party happens to coincide with the authentic virtual currency encryption data. Consequently, the character string included in the virtual currency encryption data is required to have at least a certain number of digits, and a certain degree of effort of preventing the character string included in the virtual currency encryption data from overlapping the character string included in other virtual currency encryption data, is required to be applied to a method of encrypting the original data or a predetermined rule for extracting a part of the character string from the character string obtained by encrypting the original data. However, increase in the length of the character string included in the virtual currency encryption data can substantially solve this problem.

The rule for extracting a part of a character string from the character string obtained by encrypting the original data may be any rule and is not necessarily always the same. Note that such "character string" in the present application includes at least one type among characters, numbers, and symbols. Note that in a case where "character string" consists only of numbers, the number of numerals constituting the character string is appropriately referred to as the number of digits, and in a case where "character string" includes characters, symbols and the like, the number of characters and the like constituting the character string is appropriately referred to as the number of characters, however, in the present invention, in cases where all the components of the character string or not all thereof are numbers, the number of characters constituting the character string is referred to as the number of digits, for the sake of simplicity. If it is assumed, for example, that the character string obtained by encrypting the original data has 10000 digits, the rule for extracting a part of a character string obtained by encrypting the original data may be extraction of only the even number digits or only the odd number digits from the character string, extraction of an appropriate number of digits, for example, a first part, a last part or an intermediate part having about 500 digit, extraction of only letters, only numbers or only letters and numbers from a character string including letters, numbers and symbols in a mixed manner, or extraction of only a predetermined number of digits of only letters, only numbers or only letters and numbers from a character string including letters, numbers and symbols in a mixed manner.

The virtual currency data of the present invention includes the virtual currency encryption data as described above. Here, the virtual currency encryption data is obtained by encrypting the original data and extracting a part thereof in conformity with a predetermined rule. The original data includes at least amount information. The original data may include another data.

For example, the original data may include issue subject information that includes at least information on the issuer of the virtual currency data, or may include credit information that is information for supporting the credit of the virtual currency data.

What is specified by the issue subject information may be a country that issues the virtual currency data in a centralized manner, a local government, a large-scale legal entity or the like having for example a certain degree of credit, or an individual. The virtual currency data having data structure in the present invention can be issued by an individual. In other words, the virtual currency data having the data structure in the present invention is generated by a virtual currency data generating device to be described below, and alternatively, the virtual currency data generating device can be owned by an individual in some cases.

The credit information may be information for specifying a predetermined asset that is an origin for credit of the virtual currency data. Such an asset has a character such as deposit or collateral for the virtual currency data, or is collateral or deposit itself. When the virtual currency data is created corresponding to an asset having at least the value to some extent regardless of whether it is the same as the amount of money specified by the amount information, when the virtual currency encryption data included in the virtual currency data includes the information for specifying the asset that is an origin for credit of the virtual currency data, for example, information corresponding to the virtual currency data one to one, and when a rule can be created so that a certain virtual currency data can be exchanged with an asset included in the virtual currency encryption data included in the virtual currency data, the virtual currency data has a character like convertible money and the value thereof is guaranteed at least to some extent.

Encryption condition data which is information for specifying a condition when the original data is encrypted may be further attached to the virtual currency data. The encryption condition data is not included in the virtual currency encryption data, but is included in the virtual currency data in a manner of being attached to the virtual currency encryption data instead. As will be described below, the encryption condition data is for specifying the condition when the virtual currency encryption data included in the virtual currency data is encrypted (the condition may be for at least indirectly specifying the encryption method when the virtual currency encryption data is encrypted, and for specifying the encryption method itself used when the virtual currency encryption data is encrypted). The encryption method used when the original data is encrypted and the virtual currency encryption data is generated may be one method, but in some cases, the method may be changed. In the case where the encryption method used for generating the virtual currency encryption data is changed, a settlement device encryption means of the settlement device should determine the encryption method to be used when the original data for confirmation is encrypted so as to coincide with the method used when the virtual currency encryption data whose authenticity is to be checked is encrypted. As will be described in detail below, to achieve such an object, the encryption condition data is useful. Note that the encryption condition data may be encrypted or may not. However, when the settlement device uses the encryption condition data, the settlement device is required to decrypt the data. In the case where the encryption condition data is encrypted and the method of encryption method is changed, since the settlement device possibly, further requires data for allowing the encryption condition data to be decrypted, to encrypt the encryption condition data, the encryption method should be always designated to be identical.

Naturally, the virtual currency data having the data structure of the virtual currency data described above may be recorded in a recording medium. The recording medium is not limited to a portable recording medium, and may be a recording medium built in a predetermined device. The recording medium built in the predetermined device is, for example, a random access memory (RAM) or a hard disk drive (HDD).

The predetermined device may be a receiving device including a receiving device receiving means receives data via the network, the recording medium described above built therein, and the virtual currency data may be recorded on the recording medium after being received by the receiving device receiving means.

The predetermined device may be a transmission device including a transmission device transmitting means transmits data via the network, the recording medium described above built therein, and the virtual currency data is transmitted to the settlement device via the network by the transmission device transmitting means.

Next, settlement devices will be described. All settlement devices to be described below receive any of the virtual currency data described above and perform settlement under predetermined conditions.

A settlement device of the present invention includes: a settlement device receiving means that receives virtual currency data from a predetermined device for requesting settlement, via a network, the virtual currency data including virtual currency encryption data which is a character string extracted, in conformity with a predetermined rule, from a character string obtained by encrypting plaintext original data which is data including at least amount information specifying a monetary value of the virtual currency data; a settlement device encryption means that generates encryption data for confirmation which is a character string extracted, in conformity with a rule identical to the predetermined rule used when the virtual currency encryption data is generated, from a character string obtained by encrypting, according to a method identical to a method used when the original data is encrypted, original data for confirmation which is original data identical to the original data serving as an origin of the virtual currency encryption data included in the received virtual currency data; a determination means that compares the virtual currency encryption data included in the virtual currency data received by the settlement device receiving means with the encryption data for confirmation generated by the settlement device encryption means, and determines that the virtual currency data including the virtual currency encryption data is authentic, when both the data coincide with each other; and a settlement means that accepts settlement of an amount of money specified by the amount information included in the original data, when the determination means determines that the virtual currency data is authentic.

Such a settlement device accepts settlement when the virtual currency data is received from a predetermined device for requesting settlement. Generally, the predetermined device, an aspect of which is the above described transmission device, and which transmits the virtual currency data to the settlement device, is not a device having generated the virtual currency data, but is a device owed by a person having received the virtual currency data from the device having generated the virtual currency data, the owner thereof or the like.

Upon receiving the virtual currency data, the settlement device determines the authenticity of the virtual currency data by the determination means. The method of determination of the authenticity of the virtual currency data performed by the determination means is basically as described above, and it is based on the theory that the virtual currency encryption data and the encryption data for confirmation, which are obtained by applying the same process to the original data and the original data for confirmation identical to each other, should be the same unless the virtual currency encryption data is falsified by a malicious third party. That is, the authenticity of the virtual currency encryption data is determined according to whether or not the settlement device can create the encryption data for confirmation identical to the virtual currency encryption data.

The settlement device causes the settlement device encryption means to encrypt, according to a method identical to the method used when encrypting the original data, original data for confirmation identical to the original data serving as an origin of the virtual currency encryption data included in the virtual currency data which is a target of determination of authenticity, and extract a part of a character string from the character string obtained by the encryption, in conformity with the rule identical to that used when the virtual currency encryption data is generated, thereby generating encryption data for confirmation. The settlement device then causes the determination means to compare the virtual currency encryption data with the encryption data for confirmation, and determine that the virtual currency encryption data, in turn, the virtual currency data is authentic when both the data coincide with each other. Note that as will be described below, the number of generated encryption data for confirmation is not necessarily one, and in a case of multiple encryption data for confirmation, the determination means determines that the virtual currency encryption data is authentic when the virtual currency encryption data coincides with at least one piece of encryption data for confirmation. As a result, the settlement device causes the settlement means to accept settlement of the amount of money specified by the amount information included in the original data, when the determination means determines that the virtual currency data is authentic.

The encryption data for confirmation used for confirming the authenticity of the virtual currency data is required to be generated only before the determination means of the settlement device determines the authenticity of the virtual currency data described above. There are two typical timings of generating the encryption data for confirmation.

The settlement device receives the virtual currency data sent for settlement and subsequently generates the encryption data for confirmation, in some cases. Such a settlement device includes, for example, a first recording means that records the original data for confirmation; when the settlement device receiving means receives the virtual currency data, the settlement device encryption means reads, from the first recording means, original data for confirmation identical to the original data serving as an origin of the virtual currency encryption data included in the virtual currency data, and generates the encryption data for confirmation, based on the read original data for confirmation. That is, the settlement device preliminarily records the original data for confirmation in the first recording means, and when the determination of authenticity of the virtual currency data is required, this device reads the required original data for confirmation and generates the encryption data for confirmation on the basis of the read data. The determination means compares the encryption data for confirmation generated after the settlement device receives the virtual currency data with the virtual currency encryption data included in the virtual currency data sent for settlement.

Before receiving the virtual currency data sent for settlement, that is, irrespective of the timing when the virtual currency data is received from another predetermined device, the settlement device preliminarily generates the encryption data for confirmation, in some cases. Such a settlement device includes a second recording means that records the encryption data for confirmation, and when the settlement device receiving means receives the virtual currency data, the determination means compares the encryption data for confirmation recorded in the second recording means with the virtual currency encryption data included in the virtual currency data received by the settlement device receiving means, and when the encryption data for confirmation identical to the virtual currency encryption data is recorded in the second recording means, the determination means determines that the virtual currency data including the virtual currency encryption data is authentic. That is, the settlement device generates the original data for confirmation, for example, generates the original data for confirmation and, at the same time or immediately thereafter, causes the settlement device encryption means to generate the encryption data for confirmation from the original data for confirmation, and records the generated encryption data for confirmation in the second recording means. When determination of authenticity of the virtual currency data is required, the settlement device causes the determination means to compare the encryption data for confirmation from the second recording means with the virtual currency encryption data included in the virtual currency data sent for settlement.

The virtual currency encryption data included in the virtual currency data may be a character string extracted, in conformity with a predetermined rule, from a character string obtained as a result of encryption according to the always identical method, or a character string extracted, in conformity with a predetermined rule, from a character string obtained as a result of encryption according to a different method. However, the safety of the virtual currency data is more clearly improved in a case where the virtual currency encryption data is encrypted by multiple methods, or by methods different from each other, if possible.

Here, the process of encryption by "identical method" means that the processing method for executing encryption when the encryption process is executed is identical, in the present application. For example, since the encryption process is, typically, executed using an algorithm and a key, in a case where at least one of the algorithm and the key is different, it can be regarded that the encryption is performed according to a different method. On the other hand, in a case where the algorithm used for the encryption process is the identical, it is represented that the encryption is performed according to the identical method, in the present application. For example, in a case where the encryption processes when the virtual currency encryption data are generated apply the algorithm for identical encryption to the original data serving as an origin thereof but performs encryption using the unique encryption keys, it can be regarded that the encryption processes when the virtual currency encryption data are generated are different from each other.

As described above, in the case where multiple encryption methods are present, the settlement device is required to determine the encryption method for encrypting certain original data for confirmation. Needless to say, for example, multiple virtual currency data are present in the transmission device and the receiving device described above, accordingly, for example, multiple original data for confirmation as many as virtual currency data are generated in the settlement device, and thus situations where the settlement device is required to determine the encryption method are further inevitable. In such a case, that is, a case where the settlement device encryption means of the settlement device determines the encryption method, the encryption condition data as described above is used. The virtual currency data includes encryption condition data which is information for specifying a condition when the original data is encrypted, and when the original data for confirmation is encrypted, the settlement device encryption means may determine a method of encrypting the original data for confirmation, based on the encryption condition data included together with the virtual currency encryption data in the virtual currency data.

The inventor of the present invention also proposes a method executed by the settlement device described above, as one aspect. The effect thereof is equal to that of the settlement device. For example, the method is as follow.

The method is a settlement method executed by a settlement device capable of receiving data via a network and including a computer for performing data processing.

The settlement method includes steps executed by the computer of: a settlement device receiving step that receives virtual currency data from a predetermined device for requesting settlement, via a network, the virtual currency data including virtual currency encryption data which is a character string extracted, in conformity with a predetermined rule, from a character string obtained by encrypting plaintext original data which is data including at least amount information specifying a monetary value of the virtual currency data; a settlement device encryption step that generates encryption data for confirmation which is a character string extracted, in conformity with a rule identical to the predetermined rule used when the virtual currency encryption data is generated, from a character string obtained by encrypting, according to a method identical to a method used when the original data is encrypted, original data for confirmation which is original data identical to the original data serving as an origin of the virtual currency encryption data included in the received virtual currency data; a determination step that compares the virtual currency encryption data included in the virtual currency data received by the settlement device receiving step with the encryption data for confirmation generated by the settlement device encryption step, and determines that the virtual currency data including the virtual currency encryption data is authentic, when both the data coincide with each other; and a settlement step that accepts settlement of an amount of money specified by the amount information included in the original data, when the determination step determines that the virtual currency data is authentic.

The inventor of the present invention also proposes, for example, a computer program for causing a general-purpose computer to function as the settlement device described above, as one aspect of the present invention. For example, the computer program is as follow.

The computer program is a computer program for causing a computer capable of receiving data via a network and performing data processing to function as a settlement device.

The computer program is a computer program for causing the computer to execute steps of: a settlement device receiving step that receives virtual currency data from a predetermined device for requesting settlement, via a network, the virtual currency data including virtual currency encryption data which is a character string extracted, in conformity with a predetermined rule, from a character string obtained by encrypting plaintext original data which is data including at least amount information specifying a monetary value of the virtual currency data; a settlement device encryption step that generates encryption data for confirmation which is a character string extracted, in conformity with a rule identical to the predetermined rule used when the virtual currency encryption data is generated, from a character string obtained by encrypting, according to a method identical to a method used when the original data is encrypted, original data for confirmation which is original data identical to the original data serving as an origin of the virtual currency encryption data included in the received virtual currency data; a determination step that compares the virtual currency encryption data included in the virtual currency data received by the settlement device receiving step with the encryption data for confirmation generated by the settlement device encryption step, and determines that the virtual currency data including the virtual currency encryption data is authentic, when both the data coincide with each other; and a settlement step that accepts settlement of an amount of money specified by the amount information included in the original data, when the determination step determines that the virtual currency data is authentic.

The inventor of the present invention also proposes the virtual currency data generating device for generating the virtual currency data having the data structure of the virtual currency data according to the present invention, as one aspect of the present invention. The effect according to this aspect is equal to that described in the data structure of the virtual currency data according to the present invention.

An example of the virtual currency data generating device includes a generating device encryption means that generates virtual currency encryption data which is a character string extracted, in conformity with a predetermined rule, from a character string obtained by encrypting plaintext original data which is data including at least amount information specifying a monetary value of the virtual currency data, and thus being capable of generating virtual currency data which includes the virtual currency encryption data and is data on virtual currency having a monetary value.

The virtual currency data generating device may further include a means that adds the encryption condition data to the virtual currency encryption data. The effect thereof is equal to that of the virtual currency data that includes the encryption condition data.

The virtual currency data generating device includes a generating device encryption means that generates virtual currency encryption data which is a character string extracted, in conformity with a predetermined rule, from a character string obtained by encrypting plaintext original data which is data including at least amount information specifying a monetary value of the virtual currency data, and thus being capable of generating virtual currency data which includes the virtual currency encryption data and is data on virtual currency having a monetary value; this device may be integrated with the settlement device described above.

The inventor of the present invention also proposes the method executed by the virtual currency data generating device described above, as one aspect of the present invention. The effect thereof is equal to that of the virtual currency data generating device. For example, the method is as follow.

The method is a method executed by a virtual currency data generating device including a computer and capable of generating virtual currency data which is data of virtual currency having a monetary value.

This method is a method including a step executed by the computer of generating virtual currency encryption data which is a character string extracted, in conformity with a predetermined rule, from a character string obtained by encrypting plaintext original data which is data including at least amount information specifying a monetary value of the virtual currency data, and thus generating virtual currency data which includes the virtual currency encryption data and is data on virtual currency having a monetary value.

The inventor of the present invention also proposes, for example, a computer program for causing a general-purpose computer to function as the virtual currency data generating device described above, as one aspect of the present invention. For example, the computer program is as follow.

The computer program is a computer program for causing a computer to function as the virtual currency data generating device capable of generating virtual currency data which is the data of the virtual currency having the monetary value.

The computer program is a computer program causing the computer to execute a step of generating virtual currency encryption data which is a character string extracted, in conformity with a predetermined rule, from a character string obtained by encrypting plaintext original data which is data including at least amount information specifying a monetary value of the virtual currency data, and thus generating virtual currency data which includes the virtual currency encryption data and is data on virtual currency having a monetary value.

**Brief Description of Drawings**

FIG. 1 is a diagram showing an overall structure of a settlement system according to a first embodiment;
FIG. 2 is a diagram showing an external appearance of a user terminal included in the settlement system shown in FIG. 1;
FIG. 3 is a diagram showing a configuration of hardware of the user terminal included in the settlement system shown in FIG. 1;
FIG. 4 is a block diagram showing functional blocks generated inside the user terminal included in the settlement system shown in FIG. 1;
FIG. 5 is a diagram showing a configuration of hardware of a settlement device included in the settlement system shown in FIG. 1;

FIG. 6 is a block diagram showing functional blocks generated inside the settlement device included in the settlement system shown in FIG. 1;

FIG. 7 is a diagram showing a configuration of hardware of a settlement terminal included in the settlement system shown in FIG. 1;

FIG. 8 is a block diagram showing functional blocks generated inside the settlement terminal included in the settlement system shown in FIG. 1;

FIG. 9 is a diagram showing a flow of a process to be executed at the time of settlement on the settlement system shown in FIG. 1;

FIG. 10 is a diagram showing an example of an image displayed on a display of the user terminal included in the settlement system shown in FIG. 1;

FIG. 11 is a diagram showing notionally the content of a part of data recorded on a credit information recording unit in the settlement device included in the settlement system shown in FIG. 1;

FIG. 12(A) is a diagram showing notionally a data structure of original data serving as an origin of virtual currency encryption data contained in virtual currency data used in the settlement system shown in FIG. 1, and FIG. 12(B) is a diagram showing notionally a data structure of the virtual currency data used in the settlement system shown in FIG. 1;

FIG. 13 is a diagram showing another example of an image displayed on the display of the user terminal included in the settlement system shown in FIG. 1;

FIG. 14 is a diagram showing further another example of an image displayed on the display of the user terminal included in the settlement system shown in FIG. 1;

FIG. 15 is a block diagram showing functional blocks generated inside a settlement device included in a settlement system of Modification Example 1;

FIG. 16 is a block diagram showing functional blocks generated inside a settlement device included in a settlement system of Modification Example 2;

FIG. 17 is a block diagram showing functional blocks generated inside a user terminal included in a settlement system of a second embodiment;

FIG. 18 is a block diagram showing functional blocks generated inside a settlement device included in a settlement system of a second embodiment;

FIG. 19 is a diagram showing a flow of a process to be executed at the time of settlement on the settlement system of the second embodiment;

FIG. 20 is a block diagram showing functional blocks generated inside a user terminal included in a settlement system of Modification Example 3;

FIG. 21 is a block diagram showing a functional block generated inside a settlement device included in a settlement system of Modification Example 3;

FIG. 22 is a block diagram showing functional blocks generated inside a settlement device included in a settlement system of Modification Example 4;

FIG. 23 is a diagram showing a flow of a process to be executed at the time of settlement on the settlement system of Modification Example 4; and

FIG. 24 is a block diagram showing functional blocks generated inside a settlement device included in a settlement system of Modification Example 5.

**Description of Embodiments**

First and second embodiments of the present invention will be described below. In the description of each embodiment and modification example, the same element is denoted by the same reference numeral and duplication description will not be presented in some cases.

Unless specifically contradicted, the configurations of each embodiment and each modification example can be combined with each other.

<<First Embodiment>>

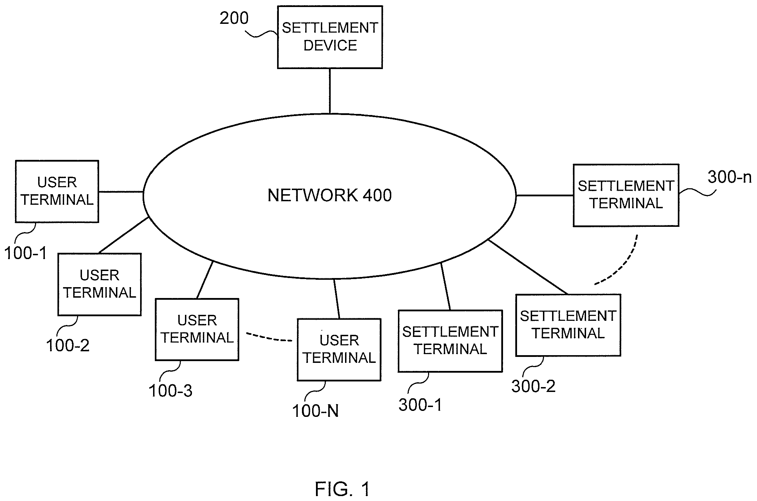

FIG. 1 schematically shows an overall configuration of a settlement system according to a first embodiment.

The settlement system is configured to include a plurality of user terminals 100-1 to 100-N (which may also hereinafter simply be described as "user terminal 100."), a settlement device 200, and a plurality of settlement terminals 300-1 to 300-n (which may also hereinafter simply be described as "settlement terminal 300."). These are all connectable to a network 400.

The network 400 is the Internet in this embodiment without being limited thereto.

The user terminal 100 is an example of a receiving device according to the present invention, the settlement terminal 300 is an example of a transmission device according to the present invention, and the settlement device 200 is an example of a settlement device and a virtual currency data generating device according to the present invention. That is, the settlement device 200 in this embodiment serves as both the settlement device and the virtual currency data generating device in the present invention. In this embodiment, the virtual currency data is generated by the settlement device 200.

Although not limited thereto, in this embodiment, payment of money using virtual currency data to be described below is, in principle, performed on an administrator (who manages or owns the settlement terminal 300, for example) of the settlement terminal 300 from an administrator (owner) of the user terminal 100, and is performed on an administrator of another user terminal 100 from an administrator of one user terminal 100 in some cases.

Normally, the user terminal 100 is possession of each user. The user terminal 100 includes a computer. The user terminal 100 is a mobile phone, a smartphone, a tablet, a notebook computer, a desktop computer, or the like. Among them, the smartphone or the tablet is particularly preferable for use as the user terminal 100, considering that the smartphone or the tablet is portable and suitable for installation of computer programs to be described below. The smartphone is, for example, an iPhone that is manufactured and sold by Apple Japan, LLC. An example of the tablet is an iPad that is manufactured and sold by Apple Japan, LLC. Hereinafter, the description is made assuming that the user terminal 100 is the smartphone, but is not limited thereto.

In this embodiment, the user terminal 100 at least needs to be capable of receiving data, but may also be capable of transmitting data. In this embodiment, since the user terminal 100 is the smartphone, it is naturally possible to receive and transmit data.

A configuration of the user terminal 100 will be described below. Each of the user terminals 100-1 to 100-N has the same configuration in relation to the present invention.

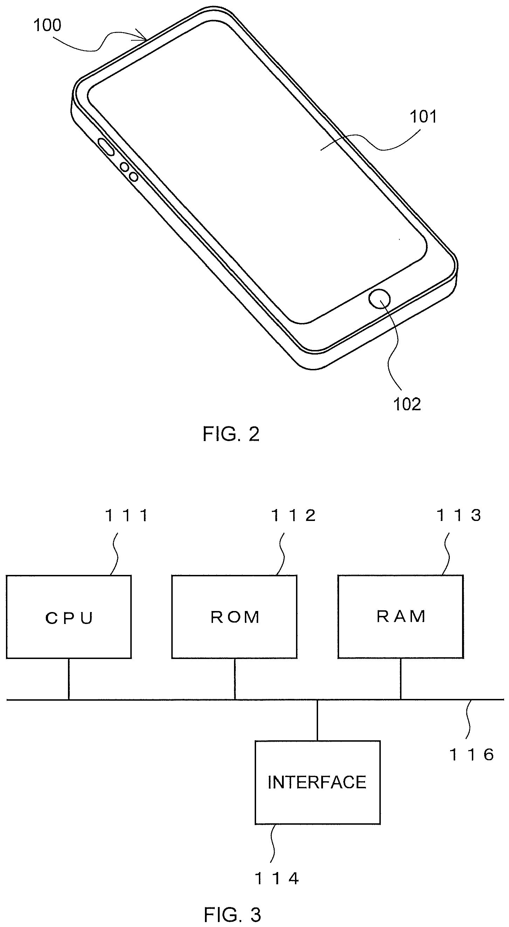

An example of external appearance of the user terminal 100 is shown in FIG. 2.

The user terminal 100 includes a display 101. The display 101 is used to display still images or moving images, and a publicly known or well-known display can be used. The display 101 is, for example, a liquid crystal display. The user terminal 100 also includes an input device 102. The input device 102 is used for the user to perform a desired input on the user terminal 100. A publicly known or well-known input device can be used as the input device 102. The input device 102 of the user terminal 100 in this embodiment is a button-type input device, but is not limited thereto, and a numeric keypad, a keyboard, a trackball, a mouse, or the like can also be used. Moreover, when the display 101 is a touch panel, the display 101 also has a function of the input device 102, which is applied to this embodiment.

Data input from the input device 102 will be described in detail below, but include, for example, generation request information on a generation request of virtual currency data, payment information on use of virtual currency data, transfer information on transfer of virtual currency data, and a user ID.

A configuration of hardware of the user terminal 100 is shown in FIG. 3.

The hardware includes a CPU (central processing unit) 111, a ROM (read only memory) 112, a RAM (random access memory) 113, and an interface 114, which are interconnected by a bus 116.

The CPU 111 is an arithmetic operation device that performs arithmetic operations. The CPU 111, for example, executes a computer program recorded in the ROM 112 to execute processing to be described below. It should be noted that the computer program used herein includes at least a computer program for causing the user terminal 100 to function as a receiving device of the present invention. The computer program may be pre-installed in the user terminal 100, or may be post-installed. The computer program may be installed in the user terminal 100 via a predetermined recording medium (not shown) such as a memory card, or may be installed via a network such as the Internet.

The ROM 112 records computer programs and data necessary for the CPU 111 to execute processing to be described below. The computer program recorded in the ROM 112 is not limited thereto. For example, when the user terminal 100 is the smartphone, a computer program and data are recorded, for example, for executing telephone calls or e-mails, which are required to cause the user terminal 100 to function as the smartphone. The user terminal 100 can also browse a homepage based on data received via the network 400, and is mounted with a publicly known web browser for enabling the browsing of the homepage.

The RAM 113 provides a work area necessary for the CPU 111 to perform processing. Virtual currency data to be described below may be recorded in the RAM 113.

The interface 114 performs data exchange between the CPU 111 and the RAM 113 connected via the bus 116 and the outside. The display 101 and the input device 102 described above are connected to the interface 114. The operation content input from the input device 102 is input to the bus 116 from the interface 114, and image data to be described below is output to the display 101 from the interface 114. The interface 114 is also connected to a transmission and reception unit, which is not shown.

The transmission and reception unit transmits and receives data via the network 400 that is the Internet. Such communication may also be performed in a wired manner, but when the user terminal 100 is the smartphone, the communication is wirelessly performed in general. As long as it is possible, the transmission and reception unit may have a publicly known or well-known configuration. The data (for example, virtual currency data) received by the transmission and reception unit from the network 400 is received through the interface 114, and the data (for example, virtual currency data) passed from the interface 114 to the transmission and reception unit is sent to the outside, for example, to the settlement device 200 by the transmission and reception unit via the network 400.

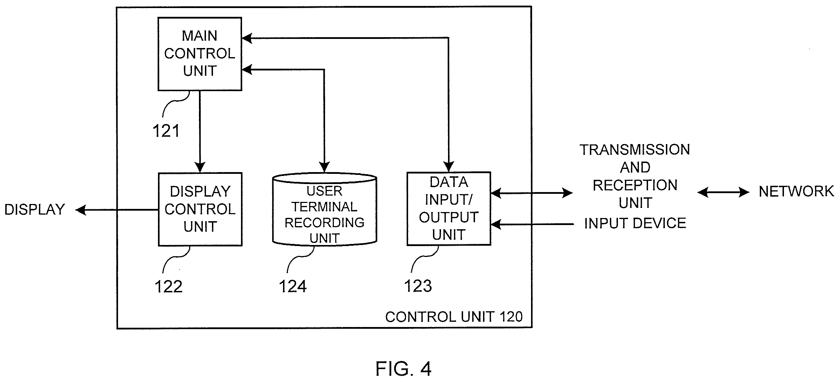

Functional blocks as shown in FIG. 4 are generated within the user terminal 100 when the CPU 111 executes the computer program. It should be noted that while the following functional blocks may be generated with functions of the above-described computer program alone for causing the user terminal 100 to function as the user terminal of the present invention, the following functional blocks may be generated in cooperation with the above-described computer program and an OS and other computer programs installed in the user terminal 100.

A control unit 120 to be described below is generated in the user terminal 100 in relation to functions of the present invention, and a main control unit 121, a display control unit 122, a data input/output unit 123, and a user terminal recording unit 124 are generated in the control unit 120.

The control unit 120 executes information processing as will be described below.

The main control unit 121 performs overall control within the control unit 120. For example, the main control unit 121 controls the display control unit 122 based on data received from the data input/output unit 123 to be detailed below.

The main control unit 121 may receive virtual currency data to be described below from the data input/output unit 123 that will be described below. Upon receiving the data, the main control unit 121 sends it to the user terminal recording unit 124 or the display control unit 122. The main control unit 121 may read the virtual currency data from the user terminal recording unit 124 as will be described below. The main control unit 121, which has read the virtual currency data, instructs the display control unit 122 to display based on the virtual currency data, and sends it to the data input/output unit 123 in some cases.

From the data input/output unit 123, the main control unit 121 may receive the above-described generation request information, payment information, or transfer information input from the input device 102. Upon receiving such information, the main control unit 121 performs processing to be described below. For example, upon receiving the generation request information, the main control unit 121 adds necessary information thereto, sends it to the data input/output unit 123. The generation request information added with the necessary information is sent from the data input/output unit 123 to the transmission and reception unit, and is sent from the transmission and reception unit to the settlement device 200 via the network 400.

The display control unit 122 controls images to be displayed on the display 101 under control of the main control unit 121. An image based on the data sent from the display control unit 122 is displayed on the display 101. The main control unit 121 sends an instruction on what image should be displayed on the display 101, to the display control unit 122.

The data input/output unit 123 inputs and outputs data to/from the control unit 120. Specifically, the data input/output unit 123 receives the input from the input device 102. For example, the generation request information, the payment information, or the transfer information is input from the input device 102 to the data input/output unit 123. Such information is sent from data input/output unit 123 to the main control unit 121.

In addition, the data input/output unit 123 receives, from the transmission and reception unit, the virtual currency data sent from the settlement device 200 via the network 400. The data input/output unit 123 sends the received virtual currency data to the main control unit 121.

Further, the data input/output unit 123 may receive the virtual currency data from the main control unit 121. The data input/output unit 123, which has received the virtual currency data, sends the virtual currency data to the transmission and reception unit, and the virtual currency data is sent from the transmission and reception unit to the settlement device 200, for example. A transmission destination of the virtual currency data is designated by the main control unit 121 according to the input from the input device 102, as will be described below.

As described above, when the main control unit 121 receives the virtual currency data from the data input/output unit 123, the user terminal recording unit 124 receives the virtual currency data from the main control unit 121 and records it. When viewed as hardware, the user terminal recording unit 124 is configured by a part of the RAM 113.

In addition, the virtual currency data recorded in the user terminal recording unit 124 may be read by the main control unit 121 at a timing to be described below.

The settlement device 200 will be described below.

The settlement device 200 is a general computer, and in this embodiment, is a general server device in more detail. Hardware configuration thereof may be equivalent to that of a settlement device in the conventional settlement system.

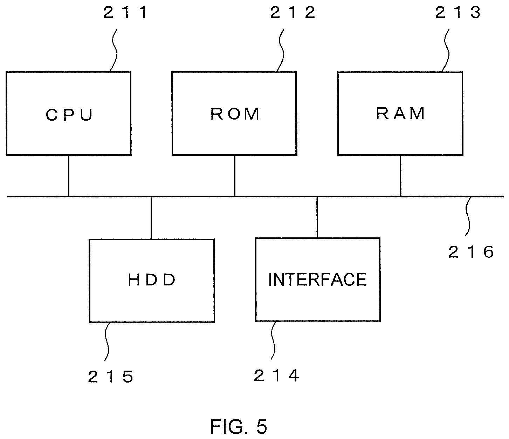

An example of the hardware configuration of the settlement device 200 is shown in FIG. 5.

The hardware includes a CPU 211, a ROM 212, a RAM 213, an interface 214, and a large-capacity recording medium that is an HDD (hard disk drive) 215 in this embodiment, and these are connected to each other by a bus 216.

The CPU 211 is an arithmetic operation device that performs arithmetic operations. The CPU 211, for example, executes a computer program recorded in the ROM 212 to execute processing to be described below. It should be noted that the computer program used herein includes at least a computer program for causing the settlement device 200 to function as a settlement device (alternatively, a virtual currency data generating device) of the present invention. The computer program may be pre-installed in the settlement device 200, or may be post-installed. The computer program may be installed in the settlement device 200 via a predetermined recording medium such as a memory card, or may be installed via the network such as the Internet.

The ROM 212 records the computer program and data necessary for the CPU 211 to execute processing to be described below. The computer program recorded in the ROM 212 is not limited thereto, and any other necessary computer programs may be recorded.

The RAM 213 provides a work area necessary for the CPU 211 to perform processing.

The interface 214 performs data exchange between the CPU 211, the RAM 213, and the like connected via the bus 216 and the outside. The interface 214 is at least connected to the transmission and reception unit. The data received by the transmission and reception unit from the network 400 is received by the interface 214, and the data passed from the interface 214 to the transmission and reception unit is sent to the outside, for example, to the user terminal 100 by the transmission and reception unit, via the network 400.

The HDD 215 is a large-capacity recording medium as described above, and records data. At least a part of the computer program or data necessary for the CPU 211 to execute processing to be described below may be recorded on the HDD 215 instead of the ROM 212, and most of the computer program and data is more practically recorded on the HDD 215.

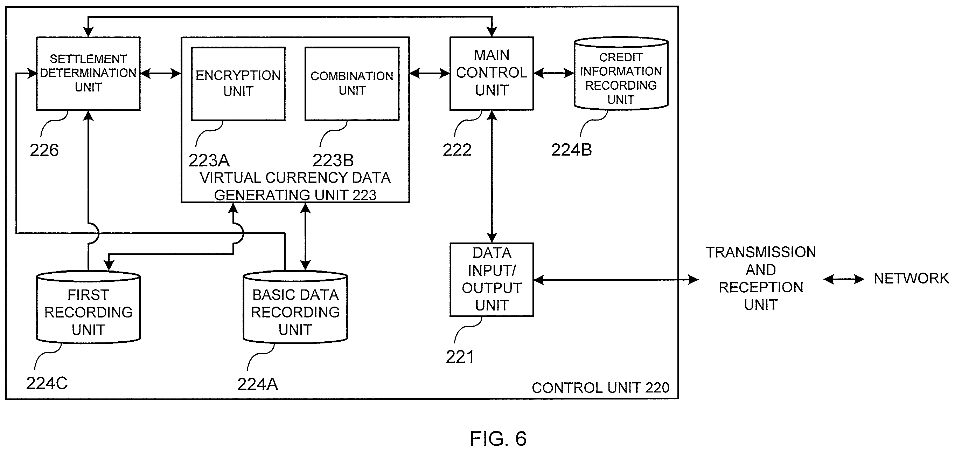

Functional blocks as shown in FIG. 6 are generated within the settlement device 200 when the CPU 211 executes the computer program. It should be noted that while the following functional blocks may be generated with functions of the above-described computer program alone for causing the settlement device 200 to function as the settlement device of the present invention, the following functional blocks may be generated in cooperation with the above-described computer program and the OS and other computer programs installed in the settlement device 200.

A control unit 220 to be described below is generated in the settlement device 200 in relation to the functions of the present invention. A data input/output unit 221, a main control unit 222, a virtual currency data generating unit 223, a basic data recording unit 224A, a credit information recording unit 224B, a first recording unit 224C, and a settlement determination unit 226 are generated in the control unit 220.

The data input/output unit 221 inputs and outputs data to/from the control unit 220. Specifically, the data input/output unit 221 receives various data to be described below, from the main control unit 222.

For example, the data input/output unit 221 receives virtual currency data from the main control unit 222. The received virtual currency data is sent to the transmission and reception unit from the data input/output unit 221, and is sent to the user terminal 100 via the network 400.

The data input/output unit 221 also receives various data to be described below, which are received by the transmission and reception unit from the user terminal 100 or the settlement terminal 300 via the network 400, from the transmission and reception unit, and sends the received data to the main control unit 222. For example, the data input/output unit 221 may receive virtual currency data or generation request information from the transmission and reception unit, and the data input/output unit 221, which has received any one of the virtual currency data and the generation request information, sends any one to the main control unit 222.

The main control unit 222 performs overall control within the control unit 220. For example, the main control unit 222 is configured to perform settlement processing to be described below, and is configured to perform necessary processing by sending data to be described below to the virtual currency data generating unit 223, settlement determination unit 226, and the like.

As described above, the main control unit 222 may receive the generation request information from the data input/output unit 221, and the main control unit 222, which has received the information, sends the information with the attached data to the virtual currency data generating unit 223.

As described above, the main control unit 222 may receive the virtual currency data from the data input/output unit 221, and the main control unit 222, which has received the virtual currency data, sends the virtual currency data to the settlement determination unit 226. In this case, only the virtual currency encryption data among the data included in the virtual currency data may be sent to the settlement determination unit 226.

The main control unit 222 may also receive final determination data, which will be described below, from the settlement determination unit 226. As will be described below, the final determination data is data indicating whether the settlement is accepted or the settlement is not accepted. Upon receiving the positive final determination data with the content of accepting the settlement which will be described below, the main control unit 222 performs settlement processing. In this embodiment, the settlement processing is a process for accepting payment of money to the settlement terminal 300 that has sent the virtual currency encryption data. The main control unit 222 retains data indicating what kind of payment has been made. For example, the main control unit 222 is configured to cause a recording medium (not shown) for each settlement terminal 300 to record information indicating how much payment is finally permitted to anybody (administrator of any settlement terminal 300, etc.).

On the other hand, upon receiving the negative final determination data, which will be described below, indicating that payment is not accepted, the main control unit 222 does not perform processing for accepting the settlement.

The main control unit 222 also has a function of performing credit determination to be described below. When performing the credit determination, the main control unit 222 of this embodiment uses data recorded in the credit information recording unit 224B, but is not limited thereto. Details of the data recorded in the credit information recording unit 224B will be described below.

As described above, the virtual currency data generating unit 223 may receive the generation request information from the main control unit 222. Upon receiving the generation request information with the data attached thereto, the virtual currency data generating unit 223 generates the virtual currency data. The virtual currency data generating unit 223 includes an encryption unit 223A and a combination unit 223B. The encryption unit 223A has a function of encrypting the original data or the original data for confirmation to thereby convert the data into virtual currency encryption data or encryption data for confirmation. Meanwhile, the combination unit 223B has a function of adding required data to the virtual currency encryption data to generate virtual currency data.

Before generating the virtual currency data, the virtual currency data generating unit 223 generates original data to be described below, on the basis of the data added to the generation request information. The virtual currency data generating unit 223 causes the encryption unit 223A to encrypt such original data, and generates a character string extracted, in conformity with a predetermined rule to be described below, from the character string obtained by encrypting the original data. The thus obtained character string is the virtual currency encryption data. The virtual currency data is generated on the basis of the virtual currency encryption data. The details of how the virtual currency data generating unit 223 generates the original data, how the encryption unit 223A of the virtual currency data generating unit 223 generates the virtual currency encryption data, and how the combination unit 223B generates the virtual currency data, will be described below.

Although not limited thereto, the virtual currency data generating unit 223 in this embodiment uses the data recorded in the basic data recording unit 224A when generating the virtual currency data. More exactly, the virtual currency data generating unit 223 reads out and uses necessary data out of the data recorded in the basic data recording unit 224A at the time of generation of the virtual currency data.

The virtual currency data generating unit 223 sends the generated virtual currency data to the main control unit 222.

Data necessary for generating the virtual currency data is recorded in the basic data recording unit 224A. Details of the data recorded in the basic data recording unit 224A will be described below.

Meanwhile, after generating the original data, the virtual currency data generating unit 223 causes the encryption unit 223A to encrypt the data, and records the data in the first recording unit 224C. Although the original data recorded in the first recording unit 224C is not changed from the original data in view of the content, the original data when recorded in the first recording unit 224C is referred to as original data for confirmation. Since such a process is repeatedly performed, the first recording unit 224C is typically brought into a state where multiple original data for confirmation are recorded therein.

The virtual currency data generating unit 223 sometimes receives a request for generating the encryption data for confirmation issued by the settlement determination unit 226. Upon receipt of such a request, the virtual currency data generating unit 223 reads the original data for confirmation from the first recording unit 224C and encrypts the data to generate encryption data for confirmation. The method of generating the encryption data for confirmation will be described below. Note that the virtual currency data generating unit 223 sends the generated encryption data for confirmation to the settlement determination unit 226.

As described above, the settlement determination unit 226 receives the virtual currency data (or the virtual currency encryption data) from the main control unit 222 in some cases.

Upon receiving the virtual currency data (or virtual currency encryption data), the settlement determination unit 226 performs settlement determination that is determination as to whether the settlement is accepted or not. As a result, the settlement determination unit 226 generates final determination data that is data including the content of either of acceptance of the settlement or not acceptance of the settlement. As will be described below, the settlement determination unit 226 may use the data recorded in the basic data recording unit 224A when performing such a determination. Although it will be described below how the settlement determination unit 226 generates final determination data, the settlement determination unit 226 in this embodiment requests the encryption unit 223A to generate encryption data for confirmation before performing the final determination. The settlement determination unit 226 uses, for the final determination, the encryption data for confirmation generated by the encryption unit 223A based on the request and supplied from the encryption unit 223A to the settlement determination unit 226.

When generating the final determination data, the settlement determination unit 226 sends it to the main control unit 222.

The settlement terminal 300 will be described below.

The settlement terminal 300 plays the same role as the settlement terminal used in the settlement system using the credit card, and is a general computer. For example, it is assumed that the settlement terminal 300 is configured by a tablet.

The settlement terminal 300 includes a touch panel display (not shown), but an external appearance thereof is not shown because of the same as that in FIG. 2. As a result, the settlement terminal 300 includes a display and an input device. However, the settlement terminal 300 may alternatively include a display that is not a touch panel type and an input device including necessary input devices selected from publicly known or well-known input devices such as a numeric keypad, a keyboard, a mouse, and a trackball, in other words, may include the display and the input device separately. The description will be made below assuming that the settlement system in this embodiment includes a touch panel display.

In addition, the settlement terminal 300 includes a camera (not shown). The camera may be externally attached, but the settlement terminal 300, which is a tablet, generally includes a publicly known built-in camera. This applies to this embodiment.

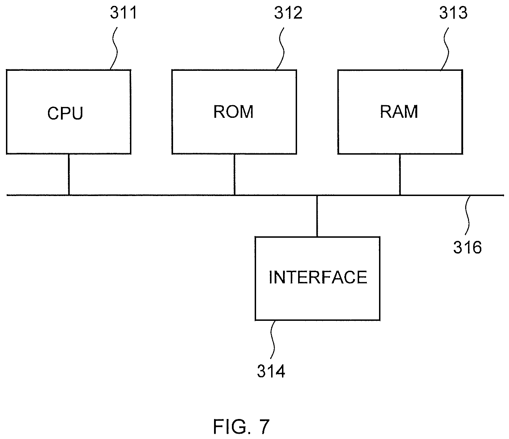

A configuration of hardware of the settlement terminal 300 is shown in FIG. 7.

The hardware includes a CPU 311, a ROM 312, a RAM 313, and an interface 314, which are interconnected by a bus 316.

The CPU 311 is an arithmetic operational device that performs arithmetic operations. The CPU 311, for example, executes a computer program recorded in the ROM 312 to execute processing to be described below. The computer program may be pre-installed in the settlement terminal 300, or may be post-installed. The computer program may be installed in the settlement terminal 300 via a predetermined recording medium such as the memory card, or may be performed via a network such as the LAN or the Internet.

The ROM 312 records the computer program and data necessary for the CPU 311 to execute processing to be described below, in other words, for causing the computer to function as a transmission device according to the present invention. The computer program recorded in the ROM 312 is not limited thereto, and any other necessary computer programs may be recorded.

The RAM 313 provides a work area necessary for the CPU 311 to perform processing.

The interface 314 performs data exchange between the CPU 311, the RAM 313 and the like connected via the bus 316 and the outside. The Interface 314 is at least connected to the transmission and reception unit which is not shown. The transmission and reception unit may be connected to the network 400 to at least transmit data via the network 400, but is configured to transmit and receive data via the network 400 in this embodiment. The data passed to the transmission and reception unit from the interface 314 is sent to the outside, for example, to the settlement device 200 by the transmission and reception unit, via the network 400. The data output from the interface 314 and transmitted from the transmission and reception unit is mainly virtual currency data in relation to this embodiment.

The interface 314 is also connected to the input device provided on the touch panel display so as to accept an input from the input device. The interface 314 is connected to the touch panel display so as to send data for displaying an image to be described below, to the touch panel display. The data input from the input device to the interface 314 is, for example, data instructing the start of payment, a settlement terminal ID to be described below, and the like.

The interface 314 is also connected to the camera described above. Image data including an image for specifying the virtual currency data is input from the camera to the interface 314. The virtual currency data is actually input to the interface 314 from the camera, which is slightly inaccurate.

The hardware may include a large-capacity recording medium, and the function at this time is as described above.

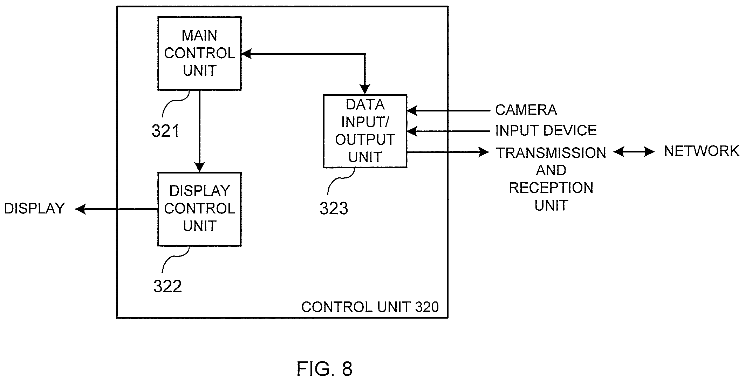

Functional blocks as shown in FIG. 8 are generated within the settlement terminal 300 when the CPU 311 executes the computer program. It should be noted that the following functional blocks may be generated with functions of the above-described computer program alone for causing the settlement terminal 300 to function as the settlement terminal of the present invention, the following functional blocks may be generated in cooperation with the above-described computer program and the OS and other computer programs installed in the settlement terminal 300.

A control unit 320 to be described below is generated in the settlement terminal 300 in relation to the functions of the present invention, and a main control unit 321, a display control unit 322, and a data input/output unit 323 are generated in the control unit 320.

The control unit 320 executes information processing as will be described below.

The main control unit 321 performs overall control within the control unit 320. For example, the main control unit 321 controls the display control unit 322 based on data received from the data input/output unit 323 to be detailed below.

The main control unit 321 is configured to receive virtual currency data from the data input/output unit 323 to be described below. The main control unit 321 of each settlement terminal 300 records a unique settlement terminal ID for each settlement terminal 300. The main control unit 321 attaches data of the settlement terminal ID to the received virtual currency data and sends it to the data input/output unit 323.

The display control unit 322 controls the images to be displayed on the above-described display of the touch panel type under control of the main control unit 321. An image based on the data sent from the display control unit 322 is displayed on the display. The main control unit 321 sends an instruction on what image should be displayed on the display, to the display control unit 322.

The data input/output unit 323 inputs and outputs data to/from the control unit 320.

Specifically, the data input/output unit 323 receives the input from the input device and sends it to the main control unit 321. An example of data input from the input device to the data input/output unit 323 is data for instructing the start of settlement. In addition, the settlement terminal ID described above may be input. Further, image data including the virtual currency data captured by the camera may be input to the data input/output unit 323.

Moreover, the data input/output unit 323 outputs the data to the transmission and reception unit, which is not shown. The data output to the transmission and reception unit is the virtual currency data sent from the main control unit 321. The settlement terminal ID is attached to the virtual currency data. The data output to the transmission and reception unit is transmitted to the settlement device 200 from the transmission and reception unit via the network 400.

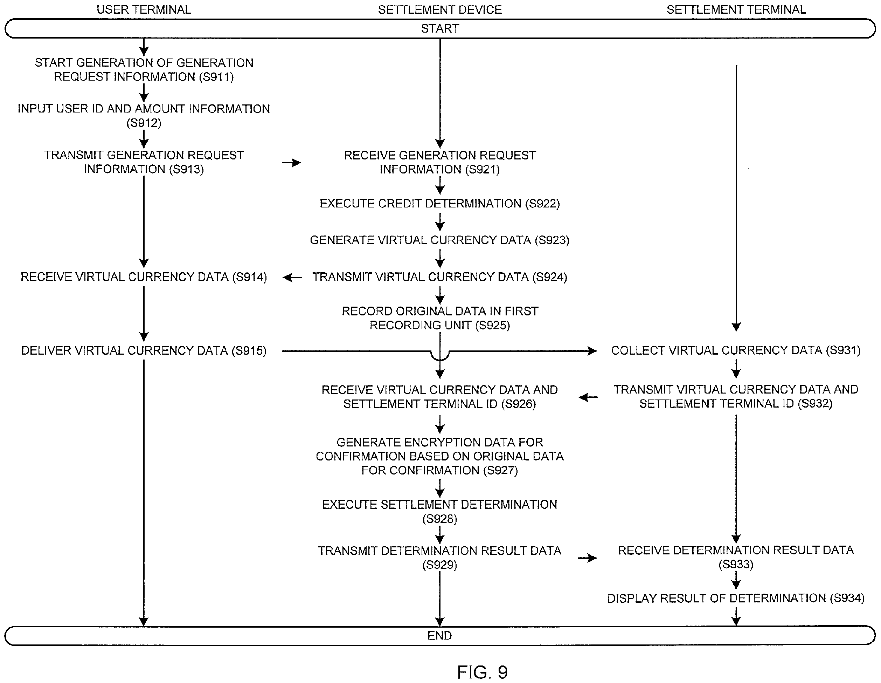

A method of using the settlement system as described above and an operation thereof will be described below with reference to FIG. 9.

First, as preparation for using such a system, a user ID is set in each of the user terminals 100 and a settlement terminal ID is set in each of the settlement terminals 300.

The user ID is an ID unique to each of the user terminals 100 for identifying each of the user terminals 100, and is generally an enumeration of alphabetic characters, numbers, and symbols. The same also applies to the settlement terminal ID. In order to avoid duplication of a large number of user IDs, the settlement device 200 (or the administrator thereof) may issue a user ID to each of the user terminals 100. The same also applies to the settlement terminal ID. Alternatively, an individual identification number embedded in the hardware of the user terminal 100 from the time of shipment can be used as the user ID. The same also applies to the settlement terminal ID.

The administrator of each of the user terminals 100 inputs the user ID for the user terminal 100 by operating the input device. Note that such an input is not necessary when the individual identification number is used as the user ID. Data of the user ID is sent from the input device to the interface 114 and sent from the interface 114 to the control unit 120. The data input/output unit 123 of the control unit 120 receives the data and sends it to the main control unit 121. The main control unit 121 retains the data, or records it in the main control unit 121.

On the other hand, the main control unit 121 sends the user ID data to the data input/output unit 123. The user ID data is sent from the data input/output unit 123 to the transmission and reception unit, and then sent to the settlement device 200 via the network 400.

The settlement device 200 receives the user ID data at the transmission and reception unit. The user ID data is sent from the transmission and reception unit to the interface 214 and is sent from the interface 214 to the control unit 220. The data input/output unit 221 of the control unit 220 receives the data, and sends it to the main control unit 222. The main control unit 222 retains the data, or records it in the main control unit 222. When all the user terminals 100 perform this processing, the main control unit 222 has a list of all the user terminals 100. Using such a list, the settlement device 200 specifies that the virtual currency data is generated for anybody (who owns any user terminal 100).

The administrator of each of the settlement terminals 300 inputs the settlement terminal ID for the settlement terminal 300 by operating the input device. Data of the settlement terminal ID is sent from the input device to the interface 314, and then is sent from the interface 314 to the control unit 320. The data input/output unit 323 of the control unit 320 receives the data and sends it to the main control unit 321. The main control unit 321 retains the data, or records it in the main control unit 321.

On the other hand, the main control unit 321 sends the data of the settlement terminal ID to the data input/output unit 323. The data of the settlement terminal ID is sent from the data input/output unit to the transmission and reception unit, and is sent to the settlement device 200 via the network 400.

The settlement device 200 receives the data of the settlement terminal ID at the transmission and reception unit. The data of the settlement terminal ID is sent from the transmission and reception unit to the interface 214, and is sent from the interface 214 to the control unit 220. The data input/output unit 221 of the control unit 220 receives the data and sends it to the main control unit 222. The main control unit 222 retains the data, or records it in the main control unit 222. When all the settlement terminals 300 perform this processing, the main control unit 222 has a list of all the settlement terminals 300. Using such a list, the settlement device 200 specifies that payment (settlement) is accepted for anybody (administrator of any settlement terminal 300) .

First, the virtual currency data is generated.

Although not limited thereto, in this embodiment, generation of the virtual currency data starts from a point where the user starts generation of generation request information (S911).

In order to start the generation of the generation request information, for example, the user may touch an icon (not shown) displayed on the display 101. Then, the operation content is sent from the input device 102 to the main control unit 121 via the interface 114 and the data input/output unit 123, and the generation of the generation request information is started.

The generation request information is generated when the user operates the input device 102 of the user terminal 100. The generation request information includes at least a user ID, and amount information specifying the amount of money that the user intends to use for payment.

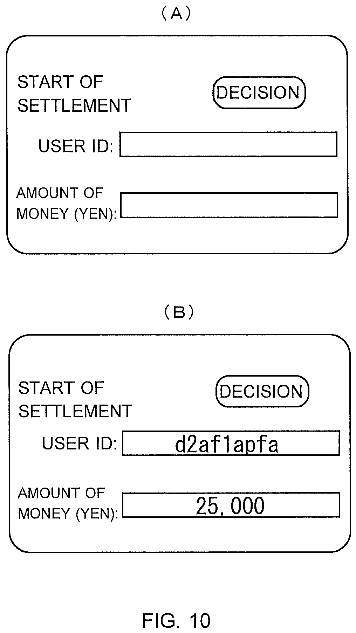

When the generation of the generation request information is started, the main control unit 121 sends an instruction to the display control unit 122 to display an image for urging the user to input the user ID or the like on the display 101. The display control unit 122, which has accepted this instruction, displays, on the display 101, an image for urging the user to input the user ID and the amount of money for which the user intends to perform the payment, as shown in FIG. 10(A), for example. The user inputs the user ID on the right side of a field indicated as "User ID", and inputs the amount of money for which the user intends to pay on the right side of a field indicated as "Amount of money (yen)", respectively (S912). Here, although the unit of money is yen, the unit of money is not limited thereto, and the unit of money may be a unit of legal currency or another unit. Data on the user ID and the amount information, which is information for specifying the amount of money, input by the user is input from the input device 102 to the data input/output unit 123 via the interface 114, and sent to the main control unit 121. Since the user ID and the amount information, which are input by the user, are displayed on the display 101, also including during the input, under control of the display control unit 122 controlled by the main control unit 121, the user can input the user ID and the amount information while checking the display 101. According to an example shown in FIG. 10(B), the user intends to pay 25,000 yen using this settlement system.

When the input of the user ID and the amount information is completed, the user clicks a button of "Decision" displayed on the display 101.

When the user clicks the button of "Decision", the user ID and the amount information are sent from the data input/output unit 123 to the main control unit 121. The main control unit 121 adds the user ID and the amount information to the generation request information. Note that other types of information may be added to the generation request information.

The generation request information is sent, with the user ID and the amount information, from the main control unit 121 to the data input/output unit 123, and is then sent from the data input/output unit 123 to the transmission and reception unit. The generation request information is sent, with the added information, from the transmission and reception unit to the settlement device 200 via the network 400 (S913).

As in the case hereinafter, all communications performed via the network 400 in this embodiment may be encryption communications. Techniques used for encryption and decryption in this case can be publicly known or well-known.

The settlement device 200 accepts the data of the generation request information with the added information at the transmission and reception unit (S921). The transmission and reception unit sends the data of the generation request information to the data input/output unit 221 with the added information, and the data input/output unit 221 sends the data to the main control unit 222.

Although not necessarily limited to this, the main control unit 222 in this embodiment performs credit determination, which is determination as to whether virtual currency data may be generated with respect to the user terminal 100 specified by the user ID (S922). As will be described below, if there is no particular problem, the settlement device 200 issues virtual currency data to the user terminal 100, but since the virtual currency data is data having a monetary value, determination as to whether such data may be issued to the user, who has sent the generation request information, is performed. When such credit determination is performed, the credibility of virtual currency data issued thereafter is improved.

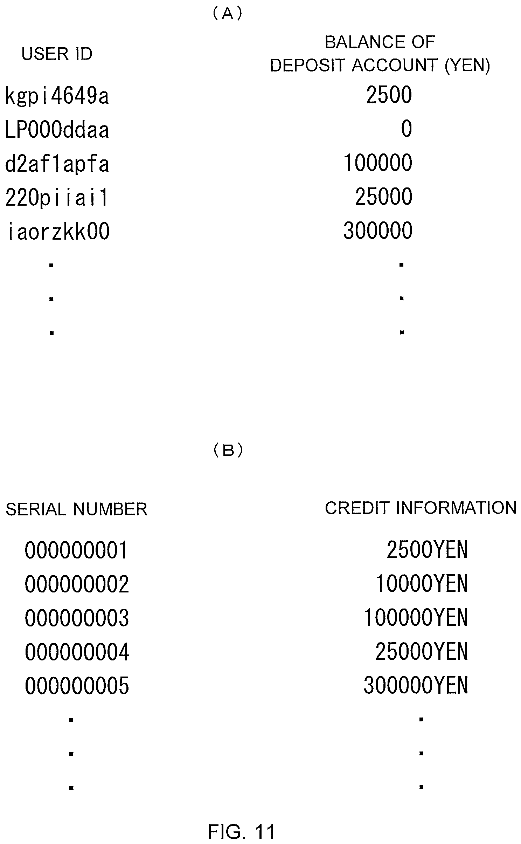

Although not limited thereto, in this embodiment, data recorded in the credit information recording unit 224B is used for the credit determination. The balance of the deposit account of each user is record in the credit information recording unit 224B of the embodiment, but is not limited thereto. As shown in FIG. 11(A) for example, the deposit account of each user is associated with the user ID. The balance of the deposit account of each user is the amount of money obtained by deducting the amount of money used to generate the credit information as will be described below from the amount of money paid in advance to the administrator or the like of the settlement device 200 by each user (including a case of being paid several times). According to FIG. 11(A), the balance of the deposit account of the user whose user ID is d2aflapfa is 100,000 yen. The main control unit 222 reads the balance of the deposit account associated with the user ID from the credit information recording unit 224B.

For example, the main control unit 222 compares the amount of money specified by the amount information with the read deposit account balance to perform the credit determination. For example, when the amount of money specified by the amount information is smaller than the balance of the deposit account at that time, the main control unit 222 can accept the credit. Upon accepting the credit, for example, the main control unit 222 deducts the amount of money (25,000 yen in the embodiment) specified by the amount information from the balance of the deposit account, and moves the deducted amount of money to an account managed by the administrator or the like of the settlement device 200. Thus, the administrator or the like of the settlement device 200 can pay the amount of money specified by the amount information or be responsible for the payment, regardless of whether to create a structure for the administrator of the settlement device 200 to follow the responsibility to make the payment, and thus, the virtual currency data having a value specified by the amount information and generated as will be described below becomes extremely high in reliability. In this case, the money of the amount of money deposited in the deposit account or the money moved to the account of the administrator or the like of the settlement device 200 from the deposit account has a character such as deposit or collateral for the virtual currency data, or will be collateral or deposit itself.

Note that a credit determination method is merely an example in which the main control unit 222 accepts the credit when the amount of money specified by the amount information is smaller than the balance of the deposit account at that time, and, for example, the main control unit 222 can accept the credit when 80% or 50% of the amount of money specified by the amount information is smaller than the balance of the deposit account at that time or other rules can be set. For example, if the credit is accepted when 80% of the amount of money specified by the amount information is smaller than the balance of the deposit account at that time, the main control unit 222 can deduct 80% of the amount of money from the balance of the deposit account, or can also deduct the amount of money itself specified by the amount information from the balance of the deposit account. Further, it is also possible to apply different rules depending on the case of generating the virtual currency data (for example, depending on the time or the user).

Alternatively, when the user terminal 100 sends the generation request information to the settlement device 200, the settlement device 200 urges the user, who operates the user terminal 100 sent the generation request information, to pay the amount of money specified by the amount information transmitted in a state of including the generation request information (or a part of the amount of money, for example, 80% or 50% of the amount of money). When it is confirmed that the user pays the amount of money to the administrator of the settlement device 200 from, for example, the user terminal 100 with a credit card (the payment through the online by the credit card is publicly known or well-known), the main control unit 222 of the settlement device 200 may determine that the credit of the user is accepted. Even in this case, the money having the property of deposit or collateral is accumulated in the account of the administrator or the like of the settlement device 200 as in the case of the above-described example.

In any case, when the credit of the user is accepted, the main control unit 222 generates the credit information, adds the credit information to the user ID and the amount information added to the generation request information sent by the user, and sends it to the virtual currency data generating unit 223.

In the embodiment, the credit information may be information that "a cash of 25,000 yen is entrusted to the administrator or the like of the settlement device 200" or information referred simply to as "25,000 yen". More specifically, when an actual item of the money (for example, banknotes) entrusted to the administrator or the like of the settlement device 200 exists, it can be also considered that the serial number of the banknote is further attached or, for example a part of the image of the banknote is further attached. In the embodiment, it is assumed that the credit information is the information referred as "25,000 yen" in the example of the embodiment, which indicates how much money is entrusted to the administrator of the settlement device 200.

The virtual currency data generating unit 223, which has received the user ID, the amount information and the credit information, generates virtual currency data (S923).

Before generating the virtual currency data, the virtual currency data generating unit 223 generates original data. The original data is plaintext data including at least the amount information. Although not limited thereto, the original data in this embodiment includes issue subject information and credit information in addition to the amount information.

Further, as described above, the virtual currency data generating unit 223 uses the data recorded in the basic data recording unit 224A, if required, when generating the virtual currency data. In order to describe a method of generating the virtual currency data, first, the data recorded in the basic data recording unit 224A will be described.

The data recorded in the basic data recording unit 224A in the embodiment is information that can be the issue subject information.

The issue subject information is information including information about the issuer of the virtual currency encryption data, and is substantially information indicating circumstances of issue of the virtual currency data. The information capable of being the issue subject information is, for example, issuer information specifying the issuer of the virtual currency data, and is information for specifying the settlement device 200 being an issuer of the virtual currency data, and is, for example, an IP address of the settlement device 200. Note that a sender of the generation request information can be an issuer, and, in this case, the issuer information is an IP address of the user terminal 100. Another example of information that can be issue subject information is authentication information that is issued by a person who has the authority to guarantee authenticity of the virtual currency data, for example, a government organization and is information for guaranteeing the authenticity of the virtual currency data. Still another example of information that can be issue subject information is serial number information that is information unique to each virtual currency data for distinguishing the virtual currency data from other virtual currency data. The issue subject information may include another information, or may include data that is not recorded in the basic data recording unit 224A as will be described below. Of these, what is essential is only information for specifying the issuer of the virtual currency data (in this embodiment, it is assumed to be user terminal 100.). Further, information other than the authentication information and the serial number information may be recorded in the basic data recording unit 224A, as information that can be the issue subject information.

The serial number information described above will be complementally described. The serial number information is information on the serial number. For example, banknotes issued by the Japanese government (precisely, the Bank of Japan) are recorded with serial numbers that are enumerated by numbers and letters and are unique to each banknote. Similarly, in order to distinguish between the previously issued virtual currency data and the newly issued virtual currency data, original data may include serial number information. The serial number information is, for example, a serial number of a multi-digit number starting from 1 (for example, 1,000-digit number) represented in hexadecimal notation as in the serial number printed on banknotes issued by the Japanese government. The basic data recording unit 224A is recorded with, as the serial number information, the serial number information next to the serial number information included in the virtual currency data issued immediately before. The serial number information is rewritten as will be described below.

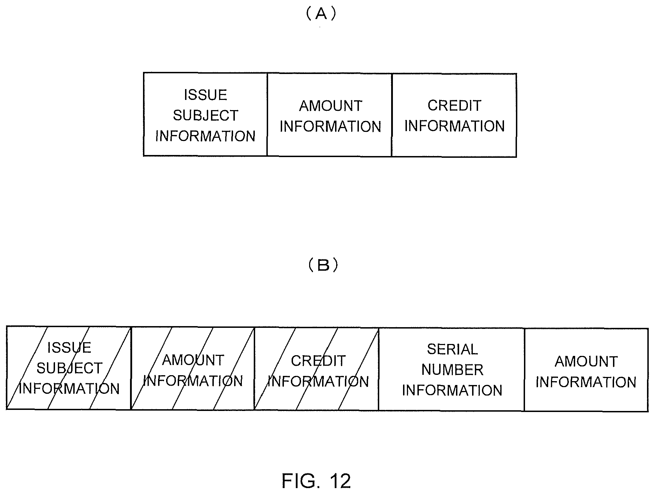

The virtual currency data generating unit 223, which has received the amount information or the like, reads the information that can be the issue subject information recorded in the basic data recording unit 224A when generating the virtual currency data. Original data (see FIG. 12(A)) that are data obtained by combination of the issue subject information, the amount information, and the credit information (although not necessarily in this order) is generated.

The issue subject information in this embodiment includes issuer information that is information for specifying the settlement device 200 that is the issuer of the virtual currency data, authentication information, serial number information, and timing information, but is not limited thereto. When reading the serial number information, the virtual currency data generating unit 223 overwrites the serial number information recorded in the basic data recording unit 224A with "+1". Thus, the serial number information is always kept up-to-date. In addition, the timing information indicates the date and time at which the virtual currency data generating unit 223 generates such virtual currency data (for example, a time at which the virtual currency data generating unit 223 receives the amount information or the like) in units of seconds, for example. In order to make this, the virtual currency data generating unit 223 always receives date and time information from a clock (not shown) included in the settlement device 200.

In this embodiment, the amount information is information for specifying the amount of money of 25,000 yen as described above.

Then, original data shown in FIG. 12(A) is encrypted by the encryption unit 223A in the virtual currency data generating unit 223. Although the encryption process, which is performed here, is not necessarily a reversible one allowing subsequent decoding, in this embodiment, the process is reversible, but is not limited thereto. Execution of encryption obtains a certain number of digits of character string. Furthermore, the encryption unit 223A extracts partial characters from the character string in conformity with a predetermined rule, and generates a new character string. The character string obtained by encrypting the original data is a character string having a certain length, for example, of 1000-digit number or more. If it is assumed, for example, that the character string obtained by encrypting the original data has 2000 digits, the rule of the encryption unit 223A extracting a part of a character string obtained by encrypting the original data may be extraction of only the even number digits or only the odd number digits from the character string, extraction of an appropriate number of digits, for example, a first part, a last part or an intermediate part having about 1000 digit, extraction of only letters, only numbers or only letters and numbers from a character string including letters, numbers and symbols in a mixed manner, or extraction of only a predetermined number of digits of only letters, only numbers or only letters and numbers from a character string including letters, numbers and symbols in a mixed manner. The character string finally obtained as described above is the virtual currency encryption data.

The virtual currency data generating unit 223 sequentially generates virtual currency data according to a large number of requests from a large number of users. For the sake of description in FIG. 12(B), it is assumed that the encrypted portion of the data structure (precisely, a part corresponding to the character string further extracted, in conformity with a predetermined rule, from the character string obtained by encrypting the original data; similar to the character string obtained by encrypting the original data, such a part is resultantly in an unreadable state) is subjected to shading. Although not limited thereto, in this embodiment, the encryption method executed in the process of generating the virtual currency data is also applied to a case of generating any virtual currency data. In this embodiment, the encryption method is applied even in the case of generating any virtual currency data by making the algorithm and key used to encryption unchanged.

By the way, as described above, in this embodiment, the original data to be encrypted includes serial number information and timing information on the premise that the content is changed. In particular, there is no same serial number information. Therefore, there is also no same virtual currency encryption data. The virtual currency encryption data is formed by alphabetic characters, numbers, symbols, or a combination of two or more thereof, and is enumerated by characters having a certain number of digits or more.

When the encryption unit 223A generates the virtual currency encryption data, the virtual currency encryption data is sent to the combination unit 223B. The combination unit 223B combines a predetermined one of the original data encrypted and included in virtual currency encryption data, that is, a predetermined one of the issue subject information, the amount information, and the credit information included in the original data with the virtual currency encryption data in plaintext. Virtual currency data is obtained by combining the above-described plaintext data with the virtual currency encryption data. Information added to the virtual currency encryption data may be a part or all of the issue subject information, the amount information, and the credit information, or may include other types of information, but is the serial number information and the amount information in the embodiment. The content of the serial number information and the amount information in plaintext can be grasped not only by the settlement device 200 but also by the user terminal 100 or the settlement terminal 300 without any special processing (because of being readable, the content is understood by reading). When a malicious third party obtains the virtual currency data, the malicious third party can also read the plaintext data, but cannot grasp all the contents of the data that is encrypted and included in the virtual currency encryption data, so that the malicious third party is difficult to misuse the virtual currency data.

The generated virtual currency data is sent from the virtual currency data generating unit 223 to the main control unit 222.

The main control unit 222, which has received the virtual currency data, records the credit information in the credit information recording unit 224B in a state where the correspondence relation between the virtual currency data and the credit information included in an encrypted state in the virtual currency encryption data included in the virtual currency data can be grasped. As described above, the credit information is originally generated by the main control unit 222 and is sent from the main control unit 222 to the virtual currency data generating unit 223. On the other hand, the main control unit 222 retains the credit information until the virtual currency data is sent back from the virtual currency data generating unit 223. Then, the main control unit 222 associates the retained credit information with the serial number included in the virtual currency data in which the encrypted credit information is included in the virtual currency encryption data, and records the retained credit information in the credit information recording unit 224B. As shown in FIG. 11(B), the serial number is recorded in the credit information recording unit 224B in association with the credit information. Note that the information to be recorded in the credit information recording unit 224B is each virtual currency data and credit information used as a basis for the credit of each virtual currency data, and the correspondence relation between the virtual currency data and the credit information can be grasped. Therefore, the information to be recorded in association with the credit information is not the serial number, but may be the virtual currency data itself or the virtual currency encryption data, for example.

In addition, the main control unit 222 instructs the user terminal 100, which is specified by the user terminal ID attached to the generation request information serving as an application for generating the virtual currency data, to return the virtual currency data, and sends the virtual currency data to the data input/output unit 221. The virtual currency data is further sent to the transmission and reception unit and sent to the user terminal 100 specified by the user ID, via the network 400 (S924).

The transmission and reception unit of the user terminal 100 receives the sent virtual currency data (S914). The received virtual currency data is sent from the data input/output unit 123 to the main control unit 121.

The virtual currency data can be used in this state. That is, the user, an owner of the user terminal 100, can pay to a third party using the virtual currency data. The user performs an operation for preserving the virtual currency data using the input device 102. Then, the operation content of the purport is sent from the input device 102 to the main control unit 121 via the interface 114 and the data input/output unit 123. The virtual currency data is sent from the main control unit 121 to the user terminal recording unit 124, and is recorded in the user terminal recording unit 124 that is a part of the RAM 113 when viewed as hardware. The same user can naturally store a plurality of virtual currency data in his/her user terminal 100. In this case, the plurality of virtual currency data is recorded in the user terminal recording unit 124.

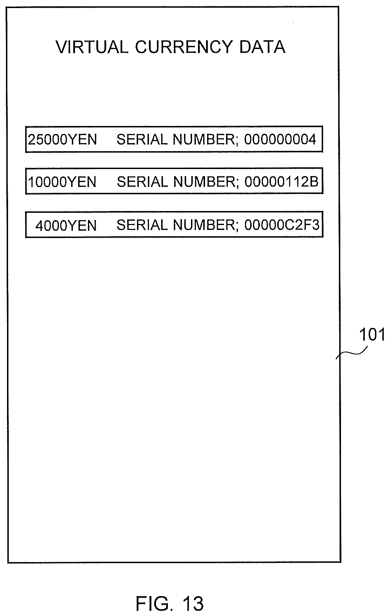

The user can use the virtual currency data preserved in the user terminal 100 for payment at any time. When the user wants to use the virtual currency data, the user operates the input device 102 of the user terminal 100 to input the purport. Such an input is input to the main control unit 121 via the interface 114 and the data input/output unit 123. Upon receiving the input, the main control unit 121 reads, for example, all the virtual currency data from the user terminal recording unit 124, and, based on the data, instructs the display control unit 122 to display the image as shown in FIG. 13 .

As shown in FIG. 13, the plurality of virtual currency data is displayed on the display 101 so that one of them can be selected. The displays including the amount of money surrounded by a square frame correspond to the virtual currency data, respectively. As described above, the data of the virtual currency data include the encrypted virtual currency encryption data and the respective plaintext serial number information and amount information. Since the user terminal 100 can read plaintext information, the user terminal 100 can display information based on the information described in plaintext on the display 101, as an image corresponding to each virtual currency data. In this embodiment, although not limited thereto, the amount of money specified by the amount information and the information on the serial number are displayed on the display 101. Note that the image displayed on the display 101 can include a display based on all of the data described in plaintext, but need not include a display based on all of the data described in plain text or may not be displayed at all based on the data described in plaintext.

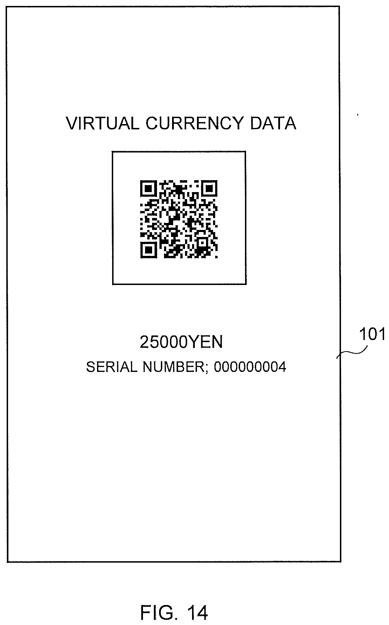

The user operates the input device 102, which is one of functions of the display 101, to select virtual currency data used for payment. Such an input is input to the main control unit 121 as described above. Then, the display on the display 101 is switched as shown in FIG. 14. Under the control of the main control unit 121, the display control unit 122 displays on the display 101 a display corresponding to the virtual currency data (or obtained by reversibly converting the virtual currency encryption data), and more specifically, a display obtained by converting the virtual currency data into a two-dimensional barcode. Information included in such a two-dimensional barcode needs to correspond to the virtual currency encryption data at a minimum, but, in this embodiment, is assumed to correspond to the entire virtual currency data.

The user delivers the virtual currency data from the user terminal 100 to the settlement terminal 300 which is managed by, for example, a clerk of a store as a counterpart who receive the payment (S915).

The virtual currency data is delivered by capturing the image of the two-dimensional barcode displayed on the display 101 of the user terminal 100 with a camera provided in the settlement terminal 300. The captured image data is sent from the camera of the settlement terminal 300 to the data input/output unit 323 via the interface 314 and then sent from the data input/output unit 323 to the main control unit 321. The main control unit 321 generates virtual currency data from the two-dimensional barcode reflected in the image data. Thereby, the virtual currency data is delivered from the user terminal 100 to the settlement terminal 300 (S931).

The virtual currency data is delivered from the user terminal 100 to the settlement terminal 300 by reading of the two-dimensional barcode in this embodiment, but the virtual currency data may be delivered using not only the two-dimensional barcode but also a one-dimensional barcode or another identifier. Furthermore, the virtual currency data is not required to be delivered from the user terminal 100 to the settlement terminal 300 by reading of such an identifier, and may be delivered by transmission of the virtual currency data itself through Bluetooth (trademark) or another communication. In an extreme case, the virtual currency data may be delivered in a manner that the user verbally tells to the administrator or the like of the settlement terminal 300 or the virtual currency data is displayed on the display 101 and shown to the administrator or the like of the settlement terminal 300. In this case, the administrator or the like of the settlement terminal 300 may input the virtual currency data to the settlement terminal 300 by manually inputting the data using the input device, for example.

In any case, the main control unit 321 temporarily records the virtual currency data, for example, at least until payment due to the virtual currency data is completed. Such recording is performed on the RAM 313 as hardware. As described above, the settlement terminal 300 can read serial number information and amount information described in plaintext in the virtual currency data. Accordingly, the main control unit 321 can cause the display control unit 322 to display the information (shown in FIG. 14), which is specified by these types of information, on the display. For example, the administrator or the like of the settlement terminal 300 can check the amount of payment to be expected by displaying the amount of money specified by the amount information. When the payment is inappropriate, the administrator or the like of the settlement terminal 300 may receive other virtual currency data from the user.

When the virtual currency data received from the user is appropriate, the administrator or the like of the settlement terminal 300 operates the input device of the settlement terminal 300 to perform an operation for sending the virtual currency data to the settlement device 200.

When such an operation is performed, the operation content is sent from the input device to the main control unit 321 via the data input/output unit 323. When the operation content is input, the main control unit 321 sends data, which is obtained by imparting the settlement terminal ID to the virtual currency data, to the data input/output unit 323. The data input/output unit 323 sends the data to the transmission and reception unit, and the transmission and reception unit sends the data to the settlement device 200 via the network 400 (S932). At this time, at least virtual currency encryption data needs to be sent to the settlement device 200 together with the settlement terminal ID, but in this embodiment, the entire virtual currency data is sent to the settlement device 200 together with the settlement terminal ID.

As described above, the virtual currency data generated by the settlement device 200 is sent to the user terminal 100 via the network 400, passed from the user terminal 100 to the settlement terminal 300 by a certain method, and is returned from the settlement terminal 300 to the settlement device 200 via the network 400.

Meanwhile, in parallel to transmission of the virtual currency data from the settlement device 200 to the user terminal 100, the following processes are performed in the settlement device 200.

As described above, in the virtual currency data generating unit 223 of the settlement device 200, first, the original data is generated, and based on the original data, the virtual currency encryption data is generated in the encryption unit 223A in the virtual currency data generating unit 223. The virtual currency data generating unit 223 sends the original data shown in FIG. 12(A) as original data for confirmation to the first recording unit 224C, and the data is recorded in the first recording unit 224C (S925). Since such a process is typically repeatedly performed, the first recording unit 224C is brought into a state where multiple original data for confirmation are recorded therein.

Note that the timing when the original data is recorded in the first recording unit 224C may be before or after transmission of the virtual currency data to the user terminal 100.

The description is returned to the previous point. As described above, the virtual currency data is sent from the settlement terminal 300 to the settlement device 200 via the network 400 (S932).

The settlement device 200 receives the data of the settlement terminal ID and the virtual currency data at the transmission and reception unit (S926). These data are sent to the main control unit 222 via the interface 214 and the data input/output unit 221.

The main control unit 222, which has received such data, sends the data of the settlement terminal ID and the virtual currency data to the settlement determination unit 226. At this time, with the settlement terminal ID, at least the virtual currency encryption data is required to be sent to the settlement determination unit 226. In this embodiment, with the settlement terminal ID, the entire virtual currency data is sent to the settlement determination unit 226.

The settlement determination unit 226, having received these data, eventually performs settlement determination, however, prior thereto, executes the following processes.

The settlement determination unit 226, having received the virtual currency data with the settlement terminal ID, first, extracts the serial number information included as plaintext in the virtual currency data. The original data for confirmation recorded in the first recording unit 224C are searched for the original data for confirmation including the serial number information, and when the original data for confirmation including the same serial number information as the serial number information included in the virtual currency data sent from the settlement terminal 300, the original data including the serial number information is read from the first recording unit 224C.

When the original data for confirmation including the same serial number information as the serial number information included in the virtual currency data received from the main control unit 222 is not found in the data recorded in the first recording unit 224C, the settlement determination unit 226 does not read the original data for confirmation.

When the original data for confirmation is read, the settlement determination unit 226 sends, to the virtual currency data generating unit 223, the original data for confirmation read from the first recording unit 224C, and requests the encryption unit 223A to generate the encryption data for confirmation on the basis of the sent data.

Upon receipt of such a request, the encryption unit 223A generates the virtual currency encryption data (S927).

More specifically, the encryption unit 223A encrypts the original data for confirmation received from the settlement determination unit 226, and converts the data into virtual currency encryption data. As described above, the encryption method executed by the encryption unit 223A in this embodiment is a single fixed method using the same algorithm and the same key, and accordingly, the encryption unit 223A encrypts the original data for confirmation according to the single method, that is, the same encryption method as that used when generating the virtual currency encryption data. As a result of encryption in the encryption unit 223A, the original data for confirmation is changed to a certain character string. The encryption unit 223A then extracts characters from the character string in conformity with a predetermined rule, thereby generating the encryption data for confirmation. The predetermined rule used here is the same rule as the rule used when the encryption unit 223A extracts the characters from the character string obtained by encrypting the original data, for generating the virtual currency encryption data.

The encryption data for confirmation newly created by the encryption unit 223A of the virtual currency data generating unit 223 is sent from the virtual currency data generating unit 223 to the settlement determination unit 226.

The settlement determination unit 226 compares the virtual currency encryption data included in the virtual currency data sent from the main control unit 222 with the encryption data for confirmation newly generated in the virtual currency data generating unit 223 in response to the request of the settlement determination unit 226, thereby performing the settlement determination (S928).

When both the data coincide with each other as a result of the above-described comparison, the settlement determination unit 226 in this embodiment determines that the virtual currency encryption data received from the main control unit 222, that is, the virtual currency data received from the main control unit 222 is authentic, and when both do not coincide, it is determined that the virtual currency encryption data received from the main control unit 222, that is, the virtual currency data received from the main control unit 222 is not authentic. Note that also when the serial number information included in the virtual currency data received from the main control unit 222 cannot be found from the data recorded in the first recording unit 224C, the settlement determination unit 226 determines that the virtual currency encryption data received from the main control unit 222 is not authentic.

As described above, the encryption performed by the encryption unit 223A is always executed by the same method, when generating the virtual currency encryption data, and also when generating the encryption data for confirmation. The predetermined rule for extracting, from the character string obtained as a result of encryption, the character string that is a part thereof is always the same, when the generating the virtual currency encryption data, and also when generating the encryption data for confirmation. If there is no falsification of the virtual currency encryption data, which is sent from the main control unit 222, by a malicious third party, since the virtual currency encryption data included in the virtual currency data sent from the main control unit 222 coincides with the encryption data for confirmation newly generated by the virtual currency data generating unit 223 in response to the request of the settlement determination unit 226, the authenticity of the virtual currency encryption data included in the virtual currency data and the virtual currency data sent from the main control unit 222 can be determined depending on whether the virtual currency encryption data and the encryption data for confirmation coincide with each other.

As described above, among data sent from the main control unit 222 to the settlement determination unit 226, only the virtual currency encryption data in the virtual currency data is used for the settlement determination in this embodiment. This is a reason that the data sent from the main control unit 222 to the settlement determination unit 226 may be the virtual currency encryption data only, in some cases. However, in this embodiment, to select the original data for confirmation that is to be converted into the encryption data for confirmation in the encryption unit 223A, plaintext serial number information included in the virtual currency data is used, and accordingly, the data sent from the main control unit 222 to the settlement determination unit 226 is the entire virtual currency data.

The settlement determination unit 226 may determine the authenticity of the virtual currency encryption data, in turn, the virtual currency data, based only on the above-described determination of whether the virtual currency encryption data coincides with the encryption data for confirmation or not. In this embodiment, the following determination is additionally performed, thereby performing settlement determination.

When the settlement determination unit 226 determines whether the virtual currency encryption data coincides with the encryption data for confirmation, this unit further determines the authenticity of the virtual currency encryption data, in turn, the virtual currency data, using the original data for confirmation preliminarily read from the first recording unit 224C. Specifically, the correctness of the settlement determination is complemented by whether the same information as the information included in the issue subject information included in the original data for confirmation is recorded in the basic data recording unit 224A or not.

As described above, the issue subject information includes the information for specifying the settlement device 200 that is the issuer of the virtual currency data. Since the same data is recorded in the basic data recording unit 224A, the settlement determination unit 226 reads the data from the basic data recording unit 224A, and compares with both data. When both data coincide with each other, the settlement determination unit 226 determines that the virtual currency encryption data is authentic.

As described above, the issue subject information may include the authentication information that is issued by a person who has the authority to guarantee authenticity of the virtual currency data, for example, a government organization. When such data is used for authentication, since information for authentication also exists in the basic data recording unit 224A, the settlement determination unit 226 reads the data from the basic data recording unit 224A, and compares both information for authentication with each other. When both information for authentication coincide with each other, the settlement determination unit 226 determines that the virtual currency encryption data is authentic.

Similarly, the serial number information, the timing information, the amount information, the credit information and the like may be used to determine the authenticity of the virtual currency encryption data. However, since the confirmation that the virtual currency encryption data is authentic is actually performed by the fact that the virtual currency encryption data coincides with the encryption data for confirmation, the additional confirmation of the authenticity of the virtual currency encryption data and the virtual currency data may be omitted herein.

In any case, only when all the determination results are positive, the settlement determination unit 226 determines that the virtual currency encryption data, in turn, the virtual currency data is authentic. When such determination is made, the settlement determination unit 226 generates final determination data indicating positive information that accepts the payment of the amount of money specified by the amount information.

On the other hand, when the settlement determination unit 226 cannot read the original data for confirmation from the first recording unit 224C or when at least one of the aforementioned various determinations is negative, the settlement determination unit 226 does not determine that the virtual currency encryption data is authentic. When it is not determined that the virtual currency encryption data, in turn, the virtual currency data is authentic, the settlement determination unit 226 generates final determination data indicating negative information that does not accept the payment of the amount of money specified by the amount information.

In any case, the generated final determination data is sent from the settlement determination unit 226 to the main control unit 222.

When such determination is made, it is desirable that the data read by the settlement determination unit 226 from among the original data for confirmation recorded in the first recording unit 224C be erased from the first recording unit 224C after completion of payment to the administrator or the like of the settlement terminal 300 using the virtual currency data corresponding thereto, for example.

The main control unit 222 receives the final determination data and performs the following processing.

When the final determination data is positive, the main control unit 222 executes a process of paying the amount of money specified by the final determination data to the administrator of the settlement terminal 300. The settlement processing is a process of accepting the payment of the money to the settlement terminal 300 that has sent the virtual currency encryption data. In this embodiment, the main control unit 222 retains data indicating what kind of settlement has been made. For example, the main control unit 222 records to the recording medium (not shown) for the data information indicating how much payment was finally permitted to who (administrator or the like of which settlement terminal 300) for each settlement terminal 300. These data are sent, for example, to the bank where the bank account specified by the administrator of the settlement terminal 300 exists, and as a result, payment is made to the administrator of the settlement terminal 300 from, for example, the administrator (or, from the bank account or the like specified by the user using the virtual currency data) of the settlement device 200.

When the final determination data is positive, the main control unit 222 generates positive determination result data that is data including at least information on the fact that payment has been made and the amount of money.

On the other hand, when the final determination data is negative, the main control unit 222 does not perform the settlement processing. Further, the main control unit 222 generates negative determination result data that is data including at least information that payment has not been made.

In any case, the determination result data is sent from the main control unit 222 to the transmission and reception unit via the data input/output unit 221 and is transmitted to the settlement terminal 300 via the network 400 (S929). Although the transmission of the determination result data to the settlement terminal 300 can be omitted, but will be normally performed.

The determination result data is received by the transmission and reception unit of the settlement terminal 300 (S933).

The determination result data received by the transmission and reception unit is sent to the main control unit 321 as in the previous cases.

The main control unit 321 instructs the display control unit 322 to display on the display according to the determination result data. As a result, the display control unit 322 causes the display to display according to the determination result data (S934). Although not shown, the display will include, for example, the fact that the payment is accepted and the amount of money in the case where the determination result data is positive, and include the fact that the settlement is not accepted in the case where the determination result data is negative. In the latter case, the determination result data includes the information for specifying the reason why the settlement is not accepted, and thus the reason why the settlement is not accepted is desirably displayed on the display.

The determination result data can also be transmitted to the user terminal 100, and the image based on the determination result data can be displayed on the display 101 even in the user terminal 100.

Thus, the payment processing using the virtual currency data from the user to the administrator of the settlement terminal 300 is completed.

In the above description, the recipient of payment due to the virtual currency data using a certain user terminal 100 is only the administrator or the like of the settlement terminal 300. However, a recipient of payment due to the virtual currency data using a certain user terminal 100 can be a user of another user terminal 100.

In this case, the user terminal 100 owned by the user who receives the payment may have the same functional blocks as those of the settlement terminal 300 by installing the same computer program as that installed in the settlement terminal 300. This is possible when the user terminal 100 is a smartphone including a computer. In addition, although the settlement terminal 300 is equipped with the camera as hardware, the user terminal 100 has a camera in common sense when being a smartphone, and thus the user terminal 100 also satisfies the conditions. In this case, the basic data recording unit 224A of the settlement device 200 will be required to be recorded with the data, which are equivalent to various data recorded in association with the settlement terminal ID of each settlement terminal 300, in association with the user ID of each user terminal 100.

In this embodiment, the virtual currency data is delivered from the user terminal 100 to the settlement terminal 300 without using the network 400. However, regardless of whether such a delivery is a delivery of the virtual currency data from the user terminal 100 to the settlement terminal 300 or a delivery of the virtual currency data between the user terminals 100, such a delivery may be realized by transmission/reception of the virtual currency data via the network 400 (in some cases, transmission/reception via the settlement device 200 to prevent double transfer of the virtual currency data). Further, the virtual currency data can be simply transferred between two user terminals 100, between the user terminal 100 and the settlement terminal 300, or two settlement terminals 300, without settlement processing in the settlement device 200. In this case, for example, when the virtual currency data is transferred between the user terminals 100, the user as a transferor inputs transfer information for transferring the virtual currency data to the user terminal 100 of the transferor. The transfer information includes at least the contents of which virtual currency data is transferred to which person. The user as a transferee can be designated by the user ID, for example. When such transfer is performed through the settlement device 200, the problem of double transfer of the virtual currency data can be prevented. The transfer information is sent from the user terminal 100 operated by the user as the transferor to the settlement device 200 via the network 400 together with the virtual currency data, for example. The settlement device 200 sends the virtual currency data to the user terminal 100 designated by the user ID. Thus, the virtual currency data is transferred or moved from the user terminal 100 of the user who is the transferor to the user terminal 100 of the user who is the transferee. The virtual currency data is recorded in the user terminal recording unit 124 by the main control unit 121 in the user terminal 100 of the user who is the transferee.

Note that in this embodiment, as described above, in a state where the correspondence relation with the credit information included in an encrypted manner in the virtual currency encryption data included in certain virtual currency data can be grasped, the credit information is recorded in the credit information recording unit 224B of the settlement device 200. For example, it can be configured such that the user of the user terminal 100 recording the virtual currency data, the administrator or the like of the settlement terminal 300 recording the virtual currency data, or everyone can browse the credit information via the network 400, for example. This configuration can improve the credit of the virtual currency data. For example, in this embodiment, this can be achieved by sending browsing request information that is information requesting credit information browsing, from the user terminal 100 to the settlement device 200. The browsing request information includes information for specifying virtual currency data that the user desires to confirm the credit information. The information for specifying virtual currency data that the user desires to confirm the credit information may be the virtual currency data itself that the user desires to confirm the credit information, but may be virtual currency encryption data included in the virtual currency data or serial number information included in the virtual currency data. As shown in FIG. 13, the display 101 of the user terminal 100 can display the serial number of each virtual currency data. Therefore, the serial number information can be included in the browsing request information by each user. When the user operates the input device 102 to select a serial number (may select a plurality of serial numbers), serial number information on the selected serial number is sent from the data input/output unit 123 to the main control unit 121. Then, the main control unit 121 generates browsing request information to which the received serial number information is added. The browsing request information added with the serial number information is sent from the data input/output unit 123 to the transmission and reception unit, and is sent from the transmission and reception unit, via the network 400, to the settlement device 200. Upon receiving the browsing request information added with the serial number information at the transmission and reception unit, the settlement device 200 sends it from the data input/output unit 221 to the main control unit 222. Then, the main control unit 222 of the settlement device 200 reads the credit information associated with the serial number specified by the serial number information added to the browsing request information, from the credit information recording unit 224B. Then, the read credit information is sent to the user terminal 100 in association with the serial number information associated with the credit information through proceeding and reverse steps by the main control unit 222. The main control unit 121 of the user terminal 100 receives the information sent from the main control unit 222. The main control unit 121 causes the display 101 to display the serial number specified by the serial number information and the virtual currency data corresponding to the serial number in association with each other. Such an image is displayed on the display 101 according to image data generated by the display control unit 122 based on an instruction from the main control unit 121. The user observes the display on the display 101, and thus can confirm the credit information used as a basis for the credit of the virtual currency data (in some cases, a plurality of pieces) that the user desires to confirm, in a state where the credit information is associated with each of the virtual currency data.

Note that in the embodiment, the settlement device 200 functions as the virtual currency data issuing device of the present invention having the function of issuing the virtual currency data and sending it to the outside, and the settlement device of the present invention having the function of determining whether the settlement of the virtual currency data is permitted, but the virtual currency data issuing device and the settlement device of the virtual currency data can also be separated from each other, which have these functions, respectively.

In this case, both of the devices can be the same as the settlement device 200 described above as the hardware configuration; and regarding the functional block, the virtual currency data issuing device has a functional block having a function necessary until the virtual currency data is sent to the user terminal 100, and the settlement device has a functional block having a function necessary for the subsequent settlement of the virtual currency data.

<Modification Example 1>

A settlement system according to Modification Example 1 is almost the same as the settlement system according to the first embodiment. In particular, the configuration of the user terminal 100 and the settlement terminal 300 and the process executed therein are no different from those in the first embodiment. Furthermore, the data structure of the virtual currency data is the same as that in the first embodiment.

The configuration of the settlement device 200 and the process executed therein are different from those in the first embodiment. Nevertheless, the configuration of the settlement device 200 according to Modification Example 1 and the process executed therein are mostly the same as those in the first embodiment.

In the settlement system of the first embodiment, the encryption method used by the encryption unit 223A to generate the virtual currency encryption data included in each of the multiple virtual currency data is identically applied to all the cases of generating the virtual currency encryption data. On the other hand, in this modification example 1, a plurality of encryption methods are executed to obtain virtual currency encryption data. In other words, in Modification Example 1, the encryption method that the encryption unit 223A executes to obtain the virtual currency encryption data is changed at predetermined timing.

As with Modification Example 1, in the first embodiment, the encryption unit 223A encrypts the original data in order to generate the virtual currency encryption data, and encrypts the original data for confirmation in order to generate the encryption data for confirmation. It is not strange that the encryption method used to encrypt the original data for confirmation originated from certain original data should coincide with the encryption method to be used to encrypt the original data. This is because, if not, the basis of the principle that confirms the authenticity of the virtual currency encryption data, in turn, the virtual currency data by coincidence between the virtual currency encryption data and the encryption data for confirmation executed by the settlement determination unit 226 collapses. The difference of the settlement device 200 in Modification Example 1 from the settlement device 200 in the first embodiment is that an effort is made for causing the encryption method used to encrypt the original data for confirmation originated from certain original data to coincide with the encryption method used to encrypt the original data.

In this embodiment, the encryption performed by the encryption unit 223A is different for each virtual currency encryption data, but is not limited thereto. In other words, the encryption method executed by the encryption unit 223A is changed every time the virtual currency encryption data is generated. Consequently, every process for encrypting the original data for confirmation executed by the encryption unit 223A is different every time when the original data for confirmation is encrypted. There are three types of method for changing the encryption methods: changing an algorithm, changing a key, and changing both of the algorithm and the key. All of three types can be adopted, but the method for changing the key is adopted in this embodiment.

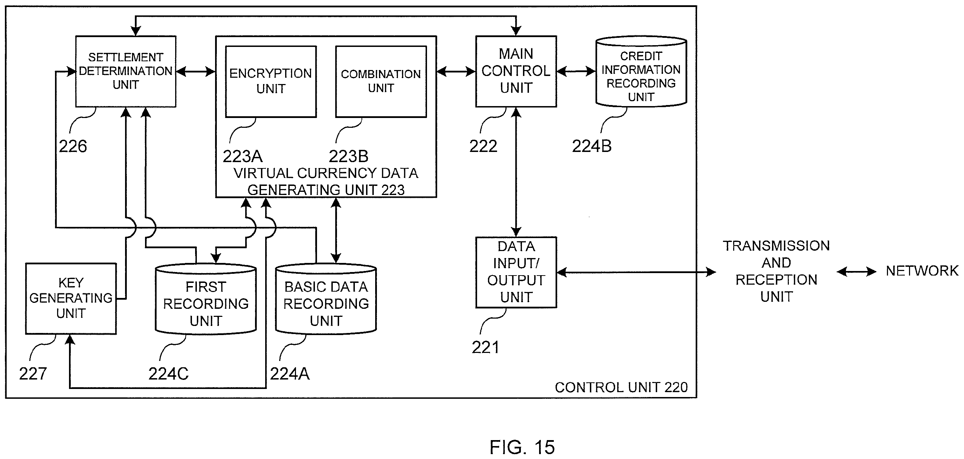

Even in the settlement device 200 of Modification Example 1, as described in the first embodiment, a control unit 220 serving as a functional block is generated therein by execution of a computer program. As shown in FIG. 15, functional blocks generated in the control unit 220 in Modification Example 1 are substantially the same as those in the first embodiment, and the functions carried out by the same functional blocks are the same as those in the first embodiment except for the encryption unit 223A. The functional blocks generated in the control unit 220 in Modification Example 1 include a key generating unit 227, which is different from the first embodiment.

The key generating unit 227 generates a key to be used by the encryption unit 223A to perform the process of encrypting the original data or the original data for confirmation, and provides the key to the encryption unit 223A. A method of generating the key and a timing for providing the key to the encryption unit 223A will be described.

A timing at which the key generating unit 227 supplies the key to the encryption unit 223A is a timing at which the encryption unit 223A performs the encryption processing. As described above, when the original data shown in FIG. 12(A) is generated to generate the virtual currency encryption data, the encryption unit 223A transmits the data for requesting the key generating unit 227 to generate the key. Upon receiving the data, the key generating unit 227 generates a key and sends data of the generated key to the encryption unit 223A. The encryption unit 223A encrypts the original data shown in FIG. 12(A) using an invariant algorithm and the provided key, and further extracts, in conformity with a predetermined rule, the character string obtained by encrypting the original data to generate a new character string, thereby obtaining virtual currency encryption data.

For example, the key generating unit 227 generates a key as follows. The key is generated as a "solution" in the following description, and is generated as an enumeration of at least one of alphabetic characters, numbers, and symbols. The solution can be, for example, a pseudo-random number sequence which is always the same under the same condition and has initial value dependency. An example of the solution is a publicly known and well-known one-time password generation method in which one-time passwords are continuously generated from a certain initial value.

In order to generate the solution in this embodiment, a method of substituting a past solution into a predetermined function using a certain initial value (which may be two or more initial values) and thereby sequentially creating a new solution may be executed each time the solution is required. Thereby, the solution, which is the above "value", can be continuously generated. Such a solution becomes a pseudo-random number having initial value dependency.

Examples of the function used for creating the above-described "solution" include the following (a) to (c). Each of the following (a) to (c) is an expression for creating $X_N$ that is the N-th "solution". Moreover, P, Q, R, and S are natural numbers.

(a)

$$(X_N) = (X_{N-1})^P + (X_{N-2})^Q$$

(b)

$$(X_N) = (X_{N-1})^P$$

(c)

$$(X_N) = (X_{N-1})^P (X_{N-2})^Q (X_{N-3})^R (X_{N-4})^S$$

The expression (a) generates a new "solution" using past two "solutions" to add them raised to the P-th power and the Q-th power, respectively. It should be noted that, precisely, when the past two "values" are used and the values raised to the P-th power and the Q-th power are added, the number of digits increases, and thus the new "solution" is actually generated by extracting the appropriate number of digits from the beginning of an obtained value, extracting the appropriate number of digits from the end of the value, or extracting the appropriate number of digits from an appropriate portion of the value or the like.

The expression (b) has a new "solution" using one past "solution" to arrange the number of digits of the value raised to the P-th power as described above.

The expression (c) has a new "solution" using four past "solutions" to take the product of them raised to the P-th power, the Q-th power, the R-th power, and the S-th power, respectively, and then arranging the number of digits as described above.

The above-described (a) to (c) are an example of an algorithm for generating the solution, and a change can be added to the algorithm when the solution is generated, for example, a change can also be added in which the above-described (a) to (c) are used in rotation or the like.

If the solution is generated by such a method, a first solution generated based on a certain initial value is always the same, a second solution generated is also always the same, and similarly an N-th solution generated is also always the same. This is the initial value dependency.

Through use of the solution generated as described above as the key, the encryption unit 223A encrypts the original data, and further extracts a part from a character string generated therefrom, thereby generating the virtual currency encryption data. As in the case of the first embodiment, a combination unit 232B adds several plaintext data to the virtual currency encryption data, and thus virtual currency data is generated.

Such virtual currency data is sent from the settlement device 200 to the user terminal 100 as in the case of the first embodiment.

A method of using the virtual currency data is the same as in the first embodiment. The virtual currency data is delivered from the user terminal 100 to the settlement terminal 300 and is sent from the settlement terminal 300 to the settlement device 200 together with a settlement terminal ID.

The virtual currency data is sent from the main control unit 222 to the settlement determination unit 226 together with the settlement terminal ID as in the case of the first embodiment.

Here, similar to the case of the first embodiment, the settlement determination unit 226 requests the encryption unit 223A to generate the encryption data for confirmation. In the case of such a request, the settlement determination unit 226 reads, from the first recording unit 224C, the original data for confirmation including the same serial number information as the serial number information included in the virtual currency data, and sends, to the encryption unit 223A, the original data for confirmation as data serving as an origin of the encryption data for confirmation, similar to the case in the first embodiment.

The encryption unit 223A having received such a request encrypts the original data for confirmation received from the settlement determination unit 226. However, in Modification Example 1, since the encryption method used to encrypt the virtual currency encryption data is different among the original data, the encryption unit 223A should specify the encryption method to be used to encrypt the original data for confirmation. That is, the encryption unit 223A is required to obtain the same key as the key used when encrypting the original data identical to the original data for confirmation received from the settlement determination unit 226, as the key for encrypting the original data for confirmation. The encryption unit 223A having received the virtual currency data sends, to the key generating unit 227, data for requesting generation of data on the key. The encryption unit 223A then attaches, to the data, the serial number information included in the original data for confirmation in a plaintext state.

As described above, the serial number information in this embodiment is a serial number of a multi-digit number starting from 1 represented in hexadecimal notation. That is, the number specified by such serial number information indicates the order of generation of the key used previously by the encryption unit 223A to encrypt the original data identical to the original data for confirmation that the encryption unit 223A is scheduled to encrypt. Upon receipt of the serial number information, the key generating unit 227 continuously performs arithmetic operations using the above-described mathematical expressions (a) to (c) to obtain the solution in the order specified by the serial number information. As a result, the key generating unit 227 can generate the same key (identical solution) as that previously used when the same original data as the original data for confirmation including the serial number information was encrypted. The key generating unit 227 then sends the key, which is the generated solution, to the encryption unit 223A.

Accordingly, the encryption unit 223A can perform the process of encrypting the original data for confirmation identical to the original data, using the same key as that used when the encryption unit 223A previously encrypted the original data and generated the virtual currency encryption data based on the encrypted data. That is, in Modification Example 1, the serial number information also serves as encryption condition data as referred to in the present invention.

Note that also in the first embodiment and in Modification Example 1, the serial number information is plaintext. However, since the serial number information in Modification Example 1, the virtual currency encryption data also serves as the encryption condition data specifying the condition when the virtual currency encryption data is encrypted, there may be a possibility of causing a safety problem if the information is included, as plaintext, in the virtual currency data. Accordingly, in Modification Example 1, the encryption condition data included in the virtual currency data may be in a state of being encrypted. However, in a case of encryption of the encryption condition data, the encryption method is identically applied to the encryption condition data included all of the virtual currency data in practice. The reason is because, if the encryption condition data included in each virtual currency data is encrypted by different methods (for example, using different keys), a decryption condition (encryption condition when the encrypted encryption condition data is encrypted) is required in a case of decrypting each encryption condition data. In the settlement device 200 in Modification Example 1, although not limited to this, the main control unit 222 encrypts the encryption condition data when the virtual currency data is generated and issued, and the main control unit 222 decrypts the encryption condition data when the settlement determination is performed. When the encryption method and the decryption method are the same, it is naturally possible for the same main control unit 222 to perform the encryption and the decryption.

The encryption unit 223A encrypts the original data for confirmation upon request of the settlement determination unit 226 and subsequent processes in Modification Example 1 are the same as those in the first embodiment.

In Modification Example 1, the serial number information is used as the encryption condition data as referred to in the present invention. That is, the serial number information, which is a part of the issue subject information, is also used as the encryption condition data.

Alternatively, for example, the serial number information is not used as the encryption condition data (in this case, the serial number information need not be a serial number.), and information different from the serial number information can be included in the virtual currency data in a plaintext state or in an encrypted state. The data is data serial number data indicating what number key is generated by the key generating unit 227 to be used when the virtual currency encryption data is generated.

In addition, the combination unit 223B adds the key itself used when the encryption unit 223A performs the encryption processing to the virtual currency encryption data encrypted by the key, and thus the encryption condition data can also be included in the virtual currency data. Since such virtual currency data is attached with a key that can be used to decrypt the virtual currency encryption data included in the virtual currency data, there is a risk that the virtual currency encryption data is decrypted by a malicious third party. However, unless the algorithm used for encryption and decryption is known to the third party, the malicious third party cannot decrypt the virtual currency encryption data, and thus tentative safety can be maintained. When the encryption condition data is the key itself, the encryption unit 223A can encrypt the original data for confirmation using the key when the settlement determination unit 226 performs settlement determination, and thus the encryption unit 223A needs not to receive the key from the key generating unit 227 when performing the process of encrypting the original data for confirmation.

Note that the encryption condition data does not depend on the above description. For example, the solution is determined by the date and time when the above-described solution is generated. In other words, when the key generating unit 227 uses an algorithm, which can always reproduce the solution later if a certain date is specified, to generate the solution, the encryption condition data can be information for specifying the date and time when the solution used by the encryption unit 223A is generated by the key generating unit 227. That is, the above-described timing information can be used as encryption condition data. When the settlement determination unit 226 notifies the encryption unit 223A, and further the encryption unit 223A notifies the key generating unit 227, of the timing information specifying the date and time, the key generating unit 227 can generate the same solution as the key provided by the encryption unit 223A to encrypt the original data, and then the same key as the key provided by the encryption unit 223A to encrypt the original data can be provided by the encryption unit 223A to encrypt the original data for confirmation. That is, the encryption unit 223A can use the same key as the key used when encrypting certain original data, for encrypting the original data for confirmation identical to the original data.

As described above, the key generating unit 227 may be what can continuously generate a result always identical when generated under the same condition. The key generating unit 227 in Modification Example 1 adopts "order" as the condition, and the solution generated from the same initial solution is always the same only if the generation is in the same order. Such a solution generation method is adopted by a technique for generating a random number independently among apart places, and typically, by a technique of one-time password. The technique of one-time password encompasses event synchronization that adopts "order" as the condition as described above, and temporal synchronization that adopts "date and time" as the condition. The key generating unit 227 in the present invention may be capable of continuously generating a result always identical when generated under the same condition by temporal synchronization, unlike the event synchronization as described above.

In the case where the key generating unit 227 uses the temporal synchronization, an arithmetic operation as will be described below can be performed, for example. What is obtained as a result of the arithmetic operation to be described below is a character string serving as an origin of the solution. Provided that the character string is X, X is obtained as will be described below according to A.D. year, month, day, hour, and minute at the time point. $X_1$, $X_2$, $X_3$, $X_4$, and $X_5$ in the following arithmetic expressions are five initial solutions. The number of initial solutions is five in the following example, because the solution is changed according to the five elements that are A.D. year, month, day, hour, and minute.

$$X = X_1{}^P + X_2{}^Q + X_3{}^R + X_4{}^S + X_5{}^T$$

Here, P = lower two-digit numbers of A.D. year, Q = number of month, R = number of day, S = number of hour, and T = number of minute. Accordingly, a different numerical sequence can be obtained according to the time point at that time.

The encryption condition data in the case of using such temporal synchronization is not the serial number specifying the order of generating the solution, but should be timing information specifying the date and time when the solution is generated.

Adoption of the temporal synchronization instead of event synchronization also applies to the key generating unit 227 to be described below, and also applies to a key generating unit 116 to be described below.

<Modification Example 2>

A settlement system according to Modification Example 2 is almost the same as the settlement system according to the first embodiment. In particular, configurations of the user terminal 100 and the settlement terminal 300 and processes executed by it are no different from those in the first embodiment. Further, a data structure of virtual currency data is also basically the same as that in the first embodiment.

The difference between Modification Example 2 and the first embodiment is a configuration of the settlement device 200 and a process executed by it. Nevertheless, the configuration of the settlement device 200 according to Modification Example 2 and the process executed by it are mostly the same as those in the case of the first embodiment.

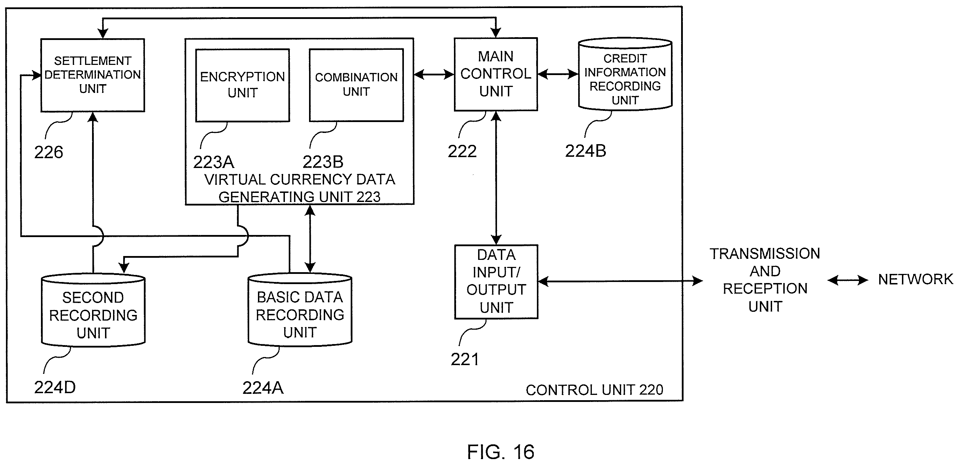

Even in the settlement device 200 according to Modification Example 2, as described in the first embodiment, a control unit 220 serving as a functional block is generated therein by execution of a computer program. As shown in FIG. 16, functional blocks generated in the control unit 220 of Modification Example 2 are substantially the same as those in the first embodiment, and the functions carried out by the same functional blocks are the same as those in the first embodiment except for some functions of the virtual currency data generating unit 223. The functional blocks generated in the control unit 220 in Modification Example 2 do not include the first recording unit 224C in the first embodiment, but include a second recording unit 224D that is not in the first embodiment.

The first recording unit 224C records the original data for confirmation, but as will be described below, the second recording unit 224D records the encryption data for confirmation. In the first embodiment, after the virtual currency data is sent from the settlement terminal 300 or the like to the settlement device 200 for the sake of settlement, the original data for confirmation recorded in the first recording unit 224C is encrypted to generate the encryption data for confirmation. On the other hand, in Modification Example 2, irrespective of the timing when the virtual currency data is sent from the settlement terminal 300 or the like to the settlement device 200, the encryption data for confirmation is typically generated before the virtual currency data is sent from the settlement terminal 300 or the like to the settlement device 200 and is recorded in the second recording unit 224D in advance. This point is a main difference between the first embodiment and Modification Example 2.

The processes executed by the virtual currency data generating unit 223 and the settlement determination unit 226 in the settlement device 200 in Modification Example 2 are slightly different from those in the first embodiment. Also in consideration of this point, the functions of the virtual currency data generating unit 223, the settlement determination unit 226 and the second recording unit 224D in Modification Example 2, and processes executed by the former two will be described.

First, the description will be made with respect to the virtual currency data generating unit 223. The function of the virtual currency data generating unit 223 of Modification Example 2 and the process executed performed by it are almost the same as those in the first embodiment. The virtual currency data generating unit 223 includes an encryption unit 223A and a combination unit 223B as in the case of the first embodiment. The function of the combination unit 223B and the process performed by it are the same as those in the first embodiment.

Similar to the case in the first embodiment, the original data shown in FIG. 12(A) is encrypted, and some characters are extracted, in conformity with a predetermined rule, from the character string obtained by such encryption to generate a new character string, thereby allowing the encryption unit 223A to generate the virtual currency encryption data. As in the case of the first embodiment, such virtual currency encryption data is sent to the combination unit 223B, the combination unit 223B adds the plaintext data described in the first embodiment to the virtual currency encryption data, and thus virtual currency data is generated. To allow the settlement device 200 to perform a process of sending the virtual currency data from the settlement device 200 to the user terminal 100, the virtual currency data generating unit 223 in the first embodiment sends the virtual currency data to the main control unit 222, and at the same time, the virtual currency data generating unit 223 in Modification Example 2 sends the virtual currency data also to the second recording unit 224D.

The sent virtual currency data is recorded in the second recording unit 224D. Since the virtual currency data includes the virtual currency encryption data, the virtual currency encryption data is recorded as a part of the virtual currency data in the second recording unit 224D. The virtual currency encryption data in a state of being recorded in the second recording unit 224D is referred to as encryption data for confirmation. Since such a process is repeatedly performed, the second recording unit 224D is typically brought into a state where multiple virtual currency data are recorded therein. Note that in Modification Example 2, recording of the virtual currency data in the second recording unit 224D is performed substantially simultaneously with transmission of the virtual currency data from the settlement device 200 to the user terminal 100.

The virtual currency data sent to the main control unit 222 is sent from the settlement device 200 to the user terminal 100 as in the case of the first embodiment.

A method of using such virtual currency data is the same as that in the first embodiment, and the virtual currency data is delivered from the user terminal 100 to the settlement terminal 300 and is sent from the settlement terminal 300 to the settlement device 200 together with a settlement terminal ID.

The virtual currency data is sent from the main control unit 222 to the settlement determination unit 226 together with the settlement terminal ID as in the case of the first embodiment.

The settlement determination unit 226 has a function of performing the settlement determination similar to that of the first embodiment, the function confirming whether the received virtual currency data is authentic, or more specifically, whether the virtual currency encryption data included in the received virtual currency data is authentic. This confirmation is actually performed, in the first embodiment, by determination of whether or not the virtual currency encryption data included in the virtual currency data sent from the settlement terminal 300 to the settlement device 200 coincides with the encryption data for confirmation generated by the encryption unit 223A in response to the request issued by the settlement determination unit 226, however, the settlement determination unit 226 in Modification Example 2 performs the confirmation in different way with that.

The settlement determination unit 226 having received the virtual currency data from the main control unit 222 searches the virtual currency data recorded in the second recording unit 224D. As a result, when the same virtual currency data as the virtual currency data received from the main control unit 222 is recorded in the second recording unit 224D or when the encryption data for confirmation identical to the virtual currency encryption data included in the virtual currency data received from the main control unit 222 is recorded in the second recording unit 224D, it is determined that the virtual currency encryption data received from the main control unit 222 and in turn the virtual currency data are authentic. When the same virtual currency data as the virtual currency data received from the main control unit 222 is not recorded in the second recording unit 224D or when the encryption data for confirmation identical to the virtual currency encryption data included in the virtual currency data received from the main control unit 222 is not recorded in the second recording unit 224D, it is determined that the virtual currency encryption data received from the main control unit 222 and in turn the virtual currency data are not authentic. As described above, in Modification Example 2, according to whether the virtual currency data received from the main control unit 222 coincides with the virtual currency data recorded in advance in the second recording unit 224D or when the virtual currency encryption data included in the virtual currency data received from the main control unit 222 coincides with the encryption data for confirmation recorded in advance in the second recording unit 224D, the determination of authenticity of the virtual currency data sent to the settlement device 200 from the settlement terminal 300 and in turn the virtual currency encryption data included therein. In a case where, among such determinations, the method considering coincidence between the virtual currency encryption data included in the virtual currency data received from the main control unit 222 and the encryption data for confirmation recorded in advance in the second recording unit 224D is adopted, the data recorded in the second recording unit 224D is not necessarily the entire virtual currency data but may be only the virtual currency encryption data as the encryption data for confirmation.

Note that also in Modification Example 2, it is desirable that among the virtual currency data recorded in the second recording unit 224D, the data determined to be identical to the virtual currency data received by the settlement determination unit 226 from the main control unit 222 be erased from the second recording unit 224D after the payment to the administrator or the like of the settlement terminal 300 using the corresponding virtual currency data is completed, for example.

The determination of authenticity of the virtual currency encryption data and, in turn, the virtual currency data performed by the settlement determination unit 226 in Modification Example 2 can be as described above, but the settlement determination unit 226 in Modification Example 2 can also perform additional determination as described in the first embodiment. To perform such additional determination, the settlement determination unit 226 may determine whether a data identical to the plaintext data added to the virtual currency encryption data in the virtual currency data transmitted from the main control unit 222 is included in the plaintext data in the virtual currency data recorded in the second recording unit 224D or not. Such determination in Modification Example 2 can be performed similarly to the case in the first embodiment.

That is, all subsequent processes can be made the same as those in the first embodiment, and thus these processes are applied to Modification Example 2.

The subsequent description will not be made.

Note that the settlement device 200 in Modification Example 2 also includes the key generating unit 227 described in Modification Example 1, thereby allowing the key used in the encryption unit 223A for generating all the virtual currency data to be changed, for example.

<<Second embodiment>>

A settlement system according to a second embodiment will be described.

Similar to the case of the first embodiment, the settlement system according to the second embodiment includes a user terminal 100, a settlement device 200 and a settlement terminal 300, which are each connectable to the network 400.

The crucial difference between the settlement system in the second embodiment and the settlement system in the first embodiment is that in the settlement system in the first embodiment, the virtual currency data is generated and issued by the settlement device 200, while in the settlement system in the second embodiment, the virtual currency data is generated and issued by each user terminal 100. That is, the user terminal 100 in the second embodiment corresponds to the virtual currency data generating device in the present invention, and the settlement device 200 in the second embodiment corresponds to the settlement device in the present invention. Unlike the first embodiment, the settlement device 200 in the second embodiment does not have characteristics as the virtual currency data generating device in the present invention.

The settlement terminal 300 in the first embodiment and the settlement terminal 300 in the second embodiment may be the same as each other. Although the settlement terminal 300 in the second embodiment may be the same as the settlement terminal 300 in the first embodiment, the functions of the user terminal 100 and the settlement device 200 and the processes executed therein are different between the first embodiment and the second embodiment, on the basis of presence of the above-described difference. However, the user terminals 100 and the settlement devices 200 in the first embodiment and the second embodiment are not different from each other in the hardware configuration.

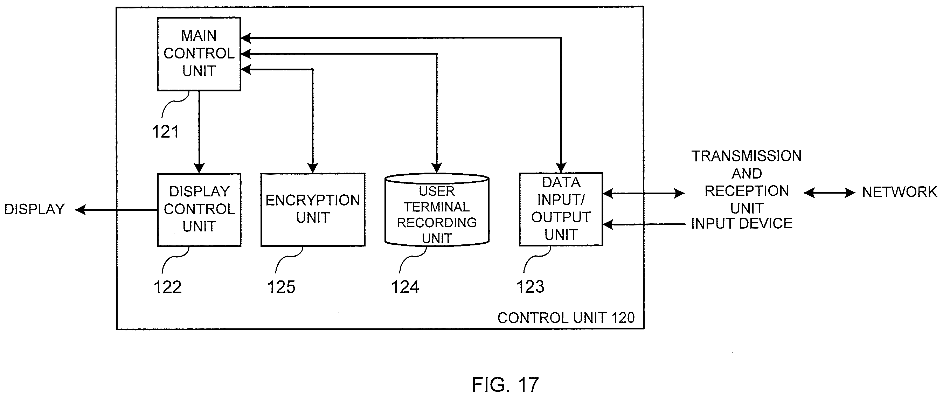

Also in the user terminal 100 in the second embodiment, functional blocks are generated within the user terminal 100 when the CPU 111 executes the computer program. Such functional blocks are shown in FIG. 17. It should be noted that while the following functional blocks may be generated with functions of the computer program alone for causing the user terminal 100 to function as the virtual currency data generating device of the present invention, the blocks may be generated in cooperation with such a computer program, and OS and other computer programs installed in the user terminal 100.

In relation to the functions of the present invention, in the user terminal 100, a control unit 120 as to be described below is generated, and a main control unit 121, a display control unit 122, a data input/output unit 123, a user terminal recording unit 124 and an encryption unit 125 are generated in the control unit 120.

The control unit 120 executes information processing as will be described below.

The main control unit 121 performs overall control within the control unit 120. For example, the main control unit 121 controls the display control unit 122 based on data received from the data input/output unit 123 to be detailed below.

The main control unit 121 receives start information, amount information, payment information, transfer information, and a user ID, which are input from the input device 102, from the data input/output unit 123 in some cases, and upon receipt thereof, the main control unit 121 performs processes as to be described below. For example, upon receiving the start information, the main control unit 121 sends an instruction to the display control unit 122 to performing a process for causing the display 101 to display an indication for prompting the user to input data required to generate virtual currency data, such as amount information. Upon receiving the amount information, the main control unit 121 adopts the information as it is or adds data other than the amount information, if required, and generates original data as to be described below. The main control unit 121 sends the generated original data to the encryption unit 125. The main control unit 121 sends the amount information and the user ID to the data input/output unit 123. The amount information and the user ID are sent from the data input/output unit 123 via the transmission and reception unit and the network 400 to the settlement device 200. Data required to specify the original data generated by the main control unit 121 may be further added to the amount information and the user ID sent to the settlement device 200. Usage of such data will be described below.

The main control unit 121 receives permission information, to be described below, from the data input/output unit 123, to be described below, in some cases. Upon receiving the information, the main control unit 121 sends an instruction for encrypting the original data, to the encryption unit 125. Such an instruction may be sent to the encryption unit 125 together with the above-described original data, although not limited thereto, this applies to this embodiment.

As will be described below, the main control unit 121 receives the virtual currency encryption data from the encryption unit 125, in some cases. Upon receiving the data, the main control unit 121 adopts the data as it is or adds data other than the virtual currency encryption data, if required, and generates virtual currency data. The generated virtual currency data is sent to the user terminal recording unit 124, or an instruction for causing the display 101 to perform an indication to be described below based on the virtual currency data is sent to the display control unit 122. In some cases, the main control unit 121 reads the virtual currency data from the user terminal recording unit 124 as will be described below. The main control unit 121 having read the data sends, to the display control unit 122, an instruction for causing the display 101 to perform an indication based on the virtual currency data, and alternatively, in some cases, it is sent to the data input/output unit 123.

The display control unit 122 is subjected to control by the main control unit 121, while controlling an image displayed on the display 101. An image based on the data sent from the display control unit 122 is displayed on the display 101. The main control unit 121 sends, to the display control unit 122, an indication of which image to be displayed on the display 101.

The data input/output unit 123 inputs and outputs data to/from the control unit 120. Specifically, the data input/output unit 123 receives the input from the input device 102. What is input from the input device 102 to the data input/output unit 123 is, for example, the start information, amount information, payment information, transfer information, and user ID. Such information is sent from data input/output unit 123 to the main control unit 121.

In addition, the data input/output unit 123 receives, from the transmission and reception unit, the permission information sent from the settlement device 200 via the network 400. The data input/output unit 123 sends the received permission information to the main control unit 121.

The data input/output unit 123 receives the amount information and the user ID from the main control unit 121, in some cases. The data input/output unit 123, having received them, sends the amount information and the user ID to the transmission and reception unit, and the amount information and the user ID are sent from the transmission and reception unit via the network 400 to the settlement terminal 300. The data input/output unit 123 receives the virtual currency data from the main control unit 121, in some cases. The data input/output unit 123, having received the data, sends the virtual currency data to the transmission and reception unit, and the virtual currency data is sent from the transmission and reception unit to another user terminal 100 or settlement terminal 300, for example. As will be described below, the transmission destination of the virtual currency data is designated by the main control unit 121 according to an input from the input device 102.

As described above, the user terminal recording unit 124 receives the virtual currency data generated by the main control unit 121 from the main control unit 121, and records the data. When viewed as hardware, the user terminal recording unit 124 is configured by a part of the RAM 113.

In addition, the virtual currency data recorded in the user terminal recording unit 124 may be read by the main control unit 121 at a timing to be described below.

As described above, the encryption unit 125 receives the original data from the main control unit 121, in some cases. The encryption unit 125 has a function of, upon receipt of the original data from the main control unit 121, encrypting the data, and further extracting, in conformity with a predetermined rule, some characters from the character string obtained by encrypting the original data, to generate a new character string, thereby generating virtual currency encryption data. The process that is executed by the encryption unit 125 and generates the virtual currency encryption data from the original data may be the same as the process executed in the encryption unit 223A in the first embodiment, and this applies to this embodiment. The encryption process executed by the encryption unit 125 in each user terminal 100 may be different. Since the encryption process is, typically, defined by the algorithm used for encryption and the key, at least one of the algorithm used for encryption executed by each user terminal 100 and the key is unique among the user terminals 100.

Although the details of the encryption process executed by the encryption unit 125 of each user terminal 100 will be described below, the encryption method in each user terminal 100 in the second embodiment is assumed to be one fixed method.

The encryption unit 125 sends the generated virtual currency encryption data to the main control unit 121.

The settlement device 200 will be described below. Although not limited thereto, the settlement device 200 in this embodiment has a function of executing credit determination that is determination of whether or not virtual currency data having a value corresponding to a certain amount of money may be issued in each user terminal 100, and settlement determination that is determination of whether or not settlement may be accepted based on the virtual currency data when another device other than what has issued the virtual currency data (although not limited thereto, in this embodiment, the user terminal 100 or the settlement terminal 300) sent the virtual currency data. The credit determination and the settlement determination will be described in detail.

The settlement device 200 is a general computer, and as mentioned above, the hardware configuration is not different from that of the settlement device 200 in the first embodiment.

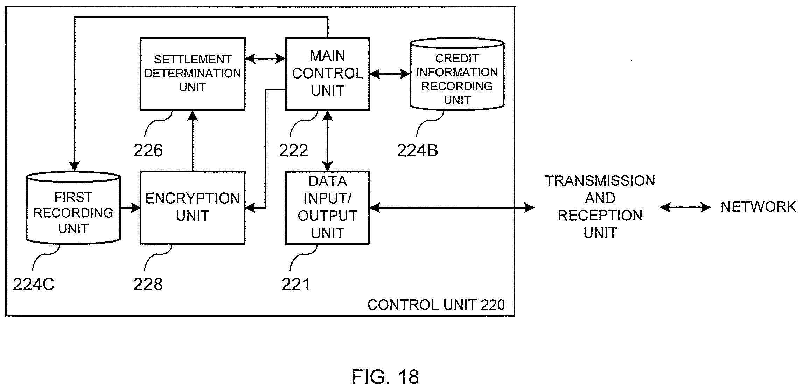

Functional blocks are generated within the settlement device 200 when the CPU 211 executes the computer program. FIG. 18 shows the functional blocks generated in the settlement device 200. It should be noted that while the following functional blocks may be generated with functions of the above-described computer program alone for causing the settlement device 200 to function as the settlement device of the present invention, the following functional blocks may be generated in cooperation with the above-described computer program and the OS and other computer programs installed in the settlement device 200.

A control unit 220 is generated in the settlement device 200. A data input/output unit 221, a main control unit 222, a credit information recording unit 224B, an encryption unit 228, a first recording unit 224C, and a settlement determination unit 226 are generated in the control unit 220.

The data input/output unit 221 inputs and outputs data to/from the control unit 220. Specifically, the data input/output unit 221 receives various data to be described below, from the main control unit 222.

For example, the data input/output unit 221 receives permission information from the main control unit 222. The received permission information is sent to the transmission and reception unit from the data input/output unit 221, and is sent to the user terminal 100 via the network 400.

The data input/output unit 221 also receives various data to be described below, which are received by the transmission and reception unit from the user terminal 100 or the settlement terminal 300 via the network 400, from the transmission and reception unit, and sends the received data to the main control unit 222. For example, the data input/output unit 221 may receive virtual currency data or amount information from the transmission and reception unit, and the data input/output unit 221, which has received any one of the virtual currency data and the amount information, sends any one to the main control unit 222.

The main control unit 222 performs overall control within the control unit 220. For example, the main control unit 222 executes a process of credit determination to be described below. The main control unit 222 also performs a settlement process to be described below. Upon acceptance, from the settlement terminal 300 or the like, of the virtual currency data through which the settlement device 200 requests settlement, the main control unit 222 sends required data to the settlement determination unit 226 and the encryption unit 228, thereby causing these units to perform a process of settlement determination required for the settlement process.

As described above, the main control unit 222 receives the amount information from the data input/output unit 221, in some cases. The main control unit 222 having received the information executes the process of credit determination. For executing the process of credit determination, the main control unit 222 uses the data recorded in the credit information recording unit 224B to do this process. Data for credit determination for each user is recorded in the credit information recording unit 224B. The content of the data recorded in the credit information recording unit 224B, and the process of credit determination performed by the main control unit 222 may be similar to those in the first embodiment, and this applies to this embodiment. When the main control unit 222 determines, as a result of credit determination, that the virtual currency data having a monetary value specified by the amount information may be generated by the user's user terminal 100 having transmitted the amount information, this unit generates permission information, and on the contrary, when it is not determined that the data may be generated by the user's user terminal 100 having transmitted the amount information, the permission information is not generated. Although not limited thereto in this embodiment, when the permission information is not generated, the main control unit 222 generates de facto non-permission information having content that the user terminal 100 is not permitted to issue the virtual currency data. In any case, when the permission information or the non-permission information is generated, the main control unit 222 sends the information to the data input/output unit 221. Note that when the result of credit determination is negative, the main control unit 222 does not generate the non-permission information and may stop the process here.

As described above, in some cases, the main control unit 222 receives, from the data input/output unit 221, the virtual currency data sent to the settlement device 200 from the settlement terminal 300 or the like for requesting settlement, and the main control unit 222 having received the data sends the virtual currency data (only the virtual currency encryption data included therein in some cases) to the settlement determination unit 226, and further sends an instruction for encryption, together with the user ID included in the virtual currency data, to the encryption unit 228.

The main control unit 222 receives the final determination data to be described below, from the settlement determination unit 226 in some cases. The final determination data is data similar to that in the case of the first embodiment, and is data indicated any one of acceptance of settlement, and non-acceptance of settlement. In each of cases where the content is positive and negative, the process executed by the main control unit 222 having received the final determination data is similar to that in the first embodiment.

The main control unit 222 in the second embodiment has a function of generating the original data. The original data is plaintext data generated in the user terminal 100 as will be described below, and is data serving as an origin of the virtual currency encryption data included in the virtual currency data generated and issued in the user terminal 100 in this embodiment. The original data generated in the settlement device 200 is generated based on the user ID and the amount information sent by the user terminal 100 to the settlement device 200 requesting issuance of the permission information and sent via the transmission and reception unit and the data input/output unit 221 to the main control unit 222. The original data generated by the main control unit 222 is the same as the original data generated by the user terminal 100. The process of generating the original data executed by the main control unit 222 will be described below. Hereinafter, the original data generated by the main control unit 222 is referred to as original data for confirmation in order to distinguish this data from the original data generated in the user terminal 100. The main control unit 222 records the generated original data for confirmation, in the first recording unit 224C. The first recording unit 224C is a recording means that records multiple original data for confirmation written in the main control unit 222.

As described above, the encryption unit 228 receives an instruction for encryption together with the user ID, from the main control unit 222, in some cases.

Upon receiving such an instruction, the encryption unit 228 reads the original data for confirmation from the first recording unit 224C, and encrypts the data. What is generated by encrypting the original data for confirmation by the encryption unit 228 is the encryption data for confirmation. The encryption data for confirmation is the same as the virtual currency encryption data generated by the encryption unit 125 of the user terminal 100 on the basis of the original data.

The details of the process for encryption that include which one is read by the encryption unit 228 from among multiple original data for confirmation recorded in the first recording unit 224C, and how the original data for confirmation read by the encryption unit 228 from the first recording unit 224C is encrypted to generate the encryption data for confirmation, will be described below.

The encryption unit 228 sends the generated encryption data for confirmation to the settlement determination unit 226.

As described above, the virtual currency data (or the virtual currency encryption data included therein) from the main control unit 222, and at least one piece of encryption data for confirmation from the encryption unit 228, are sent to the settlement determination unit 226. Upon receiving them, the settlement determination unit 226 performs settlement determination that is determination of whether settlement may be permitted or not. As a result, the settlement determination unit 226 generates final determination data that is data including any one of the content of accepting settlement and the content of not accepting the settlement.

The process of such settlement determination is different between the first embodiment and the second embodiment. It will be described below how the settlement determination unit 226 in the second embodiment generates the final determination data.

In any case, after the final determination data is generated, the settlement determination unit 226 sends the data to the main control unit 222.

Since the configuration and the function of the settlement terminal 300 are the same as those in the first embodiment, the description thereof will not be made.

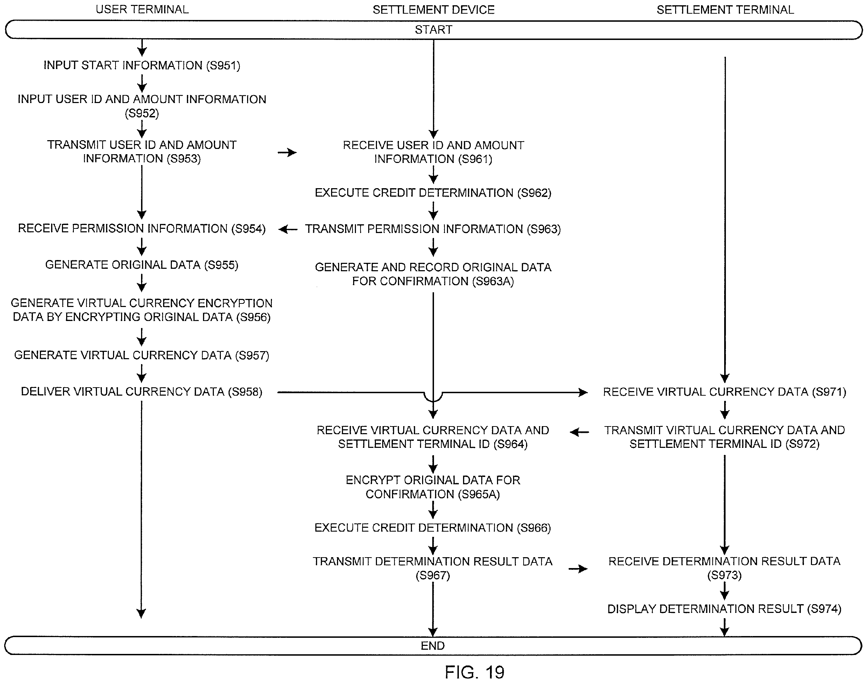

A method of using the settlement system as described above in the second embodiment and an operation thereof will be described below with reference to FIG. 19.

First, as preparation for using such a system, a user ID is set in each of the user terminals 100 and a settlement terminal ID is set in each of the settlement terminals 300.

The user ID is an ID unique to each of the user terminals 100 for identifying each of the user terminals 100, and is generally an enumeration of alphabetic characters, numbers, and symbols. The same also applies to the settlement terminal ID. In order to avoid duplication of a large number of user IDs, the settlement device 200 (or the administrator thereof or the like) may issue a user ID to each of the user terminals 100. The same also applies to the settlement terminal ID. Alternatively, an individual identification number embedded in the hardware of the user terminal 100 from the time of shipment can be used as the user ID. The same also applies to the settlement terminal ID.

The administrator of each of the user terminals 100 inputs the user ID for the user terminal 100 by operating the input device 102. Note that such an input is not necessary when the individual identification number is used as the user ID. Data on the user ID is sent from the input device 102 to the interface 114 and sent from the interface 114 to the control unit 120. The data input/output unit 123 of the control unit 120 receives the data and sends it to the main control unit 121. The main control unit 121 retains the data, or records it in the main control unit 121.

On the other hand, the main control unit 121 sends the user ID data to the data input/output unit 123. The user ID data is sent therefrom to the transmission and reception unit, and then sent to the settlement device 200 via the network 400.

The settlement device 200 receives the user ID data at the transmission and reception unit. Data on the user ID is sent from the transmission and reception unit to the interface 214 and sent from the interface 214 to the control unit 220. The data input/output unit 221 of the control unit 220 receives the data and sends it to the main control unit 222. The main control unit 222 retains the data, or records it in the main control unit 222. When all the user terminals 100 perform this processing, the main control unit 222 has a list of all the user terminals 100. Using such a list, the settlement device 200 specifies that the virtual currency data is generated for anybody (who owns any user terminal 100).

The administrator of each of the settlement terminals 300 inputs the settlement terminal ID for the settlement terminal 300 by operating the input device. Data on the settlement terminal ID is sent from the input device to the interface 314 and sent from the interface 314 to the control unit 320. The data input/output unit 323 of the control unit 320 receives the data and sends it to the main control unit 321. The main control unit 321 retains the data, or records it in the main control unit 321.

On the other hand, the main control unit 321 sends data on the settlement terminal ID to the data input/output unit 323. The data on the settlement terminal ID is sent therefrom to the transmission and reception unit, and then sent to the settlement device 200 via the network 400.

The settlement device 200 receives the data on the settlement terminal ID at the transmission and reception unit. The data on the settlement terminal ID is sent from the transmission and reception unit to the interface 214 and sent from the interface 214 to the control unit 220. The data input/output unit 221 of the control unit 220 receives the data and sends it to the main control unit 222. The main control unit 222 retains the data, or records it in the main control unit 222. When all the settlement devices 200 perform this processing, the main control unit 222 has a list of all the settlement terminals 300. Using such a list, the settlement device 200 specifies that payment (settlement) is accepted for anybody (administrator of any settlement terminal 300).

First, the virtual currency data is generated.

Although not limited thereto, in the second embodiment, generation of the virtual currency data starts when the user inputs start information in the own user terminal 100 (S951).

In order to start input of the start information, for example, the user may touch an icon (not shown) displayed on the display 101. Then, according to the content of the operation, the start information is generated, the generated start information is sent from the input device 102 to the main control unit 121 via the interface 114 and the data input/output unit 123.

Upon receipt of the start information, the main control unit 121 sends an instruction to the display control unit 122 to display an image for urging the user to input the user ID or the like on the display 101. The display control unit 122, which has accepted this instruction, displays, on the display 101, an image for urging the user to input the user ID and the amount of money for specifying the monetary value that the virtual currency data is allowed to have and the user intends to issue (for example, the amount of money to be paid to others), as shown in FIG. 10(A) similar to the case of the first embodiment, for example. The user inputs the user ID in a rectangular frame right to a field indicated as "User ID" on the display 101, and inputs the amount of money described above in a rectangular frame right to a field indicated as "Amount of money (yen)" (S952). The data about the user ID and the amount information for specifying the amount of money, which have been input by the user, are input from the input device 102 via the interface 114 into the data input/output unit 123, and are sent to the main control unit 121. Since the user ID and the amount information, which are input by the user, are displayed on the display 101, also including during the input, under control of the display control unit 122 controlled by the main control unit 121, the user can input the user ID and the amount information while checking the display 101. Similar to the case of the first embodiment, also according to the second embodiment, as shown in FIG. 10(B), the user intends to pay 25,000 yen using this settlement system.

When the input of the user ID and the amount information is completed, the user clicks a button of "Decision" displayed on the display 101.

The data to be input after input of the start information is the user ID and the amount information, as described above, in this embodiment. However, the user ID is not required to be input every time the user generates virtual currency data at the user terminal 100, and for example, input of the user ID every time when the virtual currency data is generated can be omitted, by recording the user ID in advance in the main control unit 121. In addition to the user ID and the amount information, other information may be compulsorily input by the user.

When the user clicks the button of "Decision", the user ID and the amount information are sent from the data input/output unit 123 to the main control unit 121.

Upon receipt of the user ID and the amount information, the main control unit 121 sends them to the data input/output unit 123. The user ID and the amount information are sent from the transmission and reception unit to the settlement device 200 via the network 400 (S953).

Note that similar to the case of the first embodiment, also in the second embodiment, the entire communication through the network 400 may be encrypted communication.

The settlement device 200 causes the transmission and reception unit to receive the user ID and the amount information (A961). The transmission and reception unit sends these user ID and amount information to the data input/output unit 221, and the data input/output unit 221 sends the data to the main control unit 222.

The main control unit 222 performs credit determination, which is determination of whether or not the user having the user terminal 100 specified by the user ID is allowed to generate virtual currency data having a monetary value of the amount of money specified by the amount information (S962). As will be described below, if there is no particular problem, the settlement device 200 sends, to the user terminal 100, permission information for permitting issuance of the virtual currency data, but since the virtual currency data is data having a monetary value, determination as to whether such virtual currency data may be issued to the user, who has sent the user ID and the amount information, is performed in advance. Such credit determination is performed by the settlement device 200 before the user terminal 100 issues virtual currency data, thereby improving the credibility of virtual currency data issued thereafter by the user terminal 100.

Although not limited thereto, similar to the case of the first embodiment, the main control unit 222 in this embodiment uses the data recorded in the credit information recording unit 224B when performing the credit determination. For example, similar to the case of the first embodiment, data as shown in FIG. 11(A) is recorded in the credit information recording unit 224B.

The process of credit determination executed by the main control unit 222 using such data may be the same as that in the first embodiment as described above.

In any case, when the credit of the user is accepted, the main control unit 222 generates permission information.

The main control unit 222 sends the generated permission information to the data input/output unit 221. The data input/output unit 221 sends the permission information to the transmission and reception unit, and sends it to the user terminal 100 via the network 400 (S963).

The user terminal 100 causes the transmission and reception unit to receive the permission information (S954). The transmission and reception unit sends the permission information to the data input/output unit 123, and the data input/output unit 123 sends it to the main control unit 121.

Upon receipt of the permission information, the main control unit 121 generates original data on the basis of the user ID and the amount information, which have been already received (S955). In the second embodiment, the original data includes at least the amount information. Although not limited thereto, in this embodiment, the main control unit 121 adopt, as original data, what is obtained by simply concatenating the amount information and the user ID with each other. Note that the original data necessarily includes the amount information, the user ID may be included, and other information may further be included. For example, timing information on the date and time when the user input the start information, and position information on the position of the user terminal 100 (for example, in a case of a smartphone, it is easy to detect the position information of the user terminal 100 using the function of the GPS (Global Positioning System) regularly installed into it) when the user input the start information can be included in the original data. A password set by the user, and information about the user attributes, such as the gender, and phone number, can be included in the original data. In this embodiment, the original data is as described above.

The original data is sent from the main control unit 121 to the encryption unit 125. Note that the main control unit 121 can execute the generation of the original data any time, only in a state where the main control unit 121 has received the user ID and the amount information from which the original data is originated. Consequently, even before the main control unit 121 receives the permission information sent from the settlement device 200, or more specifically, even immediately after the process of S952 about the input of the user ID and the amount information is executed, the main control unit 121 can execute the process of S955 about generation of the original data.

As described above, non-permission information is sometimes sent from the settlement device 200 to the user terminal 100. In this case, the main control unit 121 of the user terminal 100 does not generate the original data, and even if the original data is generated before the non-permission information is obtained, this unit does not send the data to the encryption unit 125. That is, the user terminal 100 having received the non-permission information does not generate virtual currency encryption data or virtual currency data as will be described below. The non-permission information may include information indicating the reason of non-permission. An image indicating the reason of non-permission based on such information may be displayed on the display 101 of the user terminal 100, thereby allowing the user to check the reason of non-permission, such as insufficient funds in the own deposit account, for example, through viewing the display 101.

Upon receipt of the original data from the main control unit 121, the encryption unit 125 applies encryption or the like to the original data to generate virtual currency encryption data (S956).

As described above, the encryption unit 125 of each user terminal 100 executes the encryption process according to the respective different methods. Although not limited thereto, the encryption method executed by the encryption unit 125 of each user terminal 100 in this embodiment is a fixed method. Although not limited thereto, in this embodiment, to execute the different encryption processes at the respective user terminals 100, the algorithm used for the encryption process executed by the encryption unit 125 of each user terminal 100 is the same, but keys used for the encryption process are different from each other.

The encryption unit 125 encrypts the original data received from the main control unit 121, using the algorithm and the key, and generates a certain character string. Some characters are extracted, in conformity with a predetermined rule, from the character string obtained by encrypting the original data, thereby generating a new character string. Such a new character string is the virtual currency encryption data. The encryption unit 125 thus converts the original data into the virtual currency encryption data. The process of converting the original data executed by the encryption unit 125 into the virtual currency encryption data may be similar to the process executed in the encryption unit 223A in the first embodiment.

The encryption unit 125 sends the generated virtual currency encryption data to the main control unit 121.

The main control unit 121 generates virtual currency data based on such virtual currency encryption data (S957).

The main control unit 121 adopts the virtual currency encryption data itself as the virtual currency data in some cases in some cases, although in this embodiment, a plaintext user ID is added to the virtual currency encryption data to generate the virtual currency data. That is, in this embodiment, for example, a combination of the plaintext user ID added at the beginning, and the virtual currency encryption data added after the user ID, is adopted as virtual currency data. The virtual currency data is data having a monetary value that the user uses for payment, and the virtual currency encryption data is the main body thereof.

The virtual currency data may be sent as it is to the data input/output unit 123, although typically, the data is sent from the main control unit 121 to the user terminal recording unit 124 and is recorded therein.

Generation or issuance of the virtual currency data is thus completed.

As described above, upon receipt of the permission information from the settlement device 200, the user terminal 100 generates and issues the virtual currency data in response to the reception. On the other hand, in the settlement device 200 in the second embodiment, the above-described original data for confirmation is generated in parallel to that issuance.

As described above, in S961, the settlement device 200 receives the user ID and the amount information from the user terminal 100. The user ID and the amount information are received by the main control unit 222. Based thereon, the main control unit 222 generates the original data for confirmation, and records the data in the first recording unit 224C (S963A). It is herein configured such that in the user terminal 100 having sent the user ID and the amount information serving as the origin of the original data for confirmation, the original data for confirmation is the same as the original data generated by the main control unit 121 of the user terminal 100 having received the permission information generated based on the user ID and the amount information.

As described above, the original data generated by the main control unit 121 of the user terminal 100 is a simple combination of the user ID and the amount information. Since the user ID and the amount information are sent from the user terminal 100, the main control unit 222 of the settlement device 200 combines them and can thereby generate the original data for confirmation identical to the original data generated by the user terminal 100.

However, in some cases, the original data generated by the user terminal 100 includes information other than the user ID and the amount information, for example, timing information, position information, information about the user attributes and the like, in the original data. Also in such cases, the original data for confirmation generated in the main control unit 222 is required to be the same as the original data generated by the user terminal 100. For example, in the case of information about the user attributes, if the user registers the information in advance in the settlement device 200 in association with the user ID, for example, the main control unit 222 of the settlement device 200 can generate the original data for confirmation identical to the original data generated by the main control unit 121 of the user terminal 100 without being provided with the information anew by the user terminal 100 when generating the original data for confirmation. On the other hand, as for the timing information, in a non-strict manner, the settlement device 200 can use, as they are, the date and time when the user ID and the amount information sent from the user terminal 100 were received, in the settlement device 200. However, as for the position information which is generated by a GPS or the like of the user terminal 100 and specifies the position of the user terminal 100 when the user inputs the start information, the main control unit 222 of the settlement device 200 cannot generate the original data for confirmation identical to the original data generated by the main control unit 121 of the user terminal 100 without being provided with the information by the user terminal 100 when generating the original data for confirmation. Consequently, in such a case, the settlement device 200 is required to be provided by the user terminal 100 with the information for generating the original data for confirmation identical to the original data generated by the main control unit 121 of the user terminal 100.

Note that in the second embodiment, since the encryption method executed by the encryption unit 125 is one fixed method, if the original data includes only the user ID and the amount information, data having the same amount information included in the original data serving as the origin of the virtual currency encryption data, among the virtual currency encryption data included in the virtual currency data generated by the same user terminal 100, are the same as each other. To prevent it, multiple original data generated by the same user terminal 100 are required to be unique to each other. For example, irrespective of which example described above is adopted, only if the timing information is included in the original data or the serial number information described in Modification Example 1 is included in the original data, the virtual currency encryption data are different from each other even with the encryption method executed by the encryption unit 125 being always the same. If the number serving as the serial number indicates that, for example, the sequential order of the permission information which is received by the user terminal 100 from the settlement device 200 and based on which the virtual currency data including the serial number is generated, counting of the number of pieces of permission information sent to the same user terminal 100 with respect to each user terminal 100 in association with the user ID of each user terminal 100 enables the settlement device 200 to generate the same serial number as the serial number generated by the user terminal 100.

Such an arrangement is made between the user terminal 100 and the settlement device 200 in advance, and a process according to such an arrangement is executed between the user terminal 100 and the settlement device 200. Note that information for allowing the main control unit 222 of the settlement device 200 to generate the same original data for confirmation as the original data generated by the main control unit 121 of the user terminal 100 may be provided by the user terminal 100 for the settlement device 200 at any timing from the same timing as the timing of S953 for transmission of the user ID and the amount information from the user terminal 100 to the settlement device 200 to the timing immediately before generation of the original data for confirmation at the settlement device 200.

In any case, the original data for confirmation is recorded in the first recording unit 224C. Multiple original data for confirmation are recorded in the first recording unit 224C, and these are the same as the multiple original data respectively generated by many user terminals 100.

The description is returned to the processes in the user terminal 100.

When the virtual currency data is issued, the user delivers the virtual currency data from the user terminal 100 to the settlement terminal 300 managed by, for example, a clerk of a store as a counterpart of payment (S958) Such delivery of the virtual currency data may be performed, immediately after the virtual currency data is generated by the user terminal 100, or after a certain lapse of time, for example, several days or several months. The user freely determines when such delivery of the virtual currency data is performed.

Although not limited thereto, in this embodiment, similar to the case of the first embodiment, the virtual currency data is delivered by capturing the image of the two-dimensional barcode displayed on the display 101 of the user terminal 100 with a camera provided in the settlement terminal 300.

The data on the image captured by the camera is sent from the camera of the settlement terminal 300 to the data input/output unit 323 via the interface 314 and then sent from the data input/output unit 323 to the main control unit 321. The main control unit 321 generates (reconstructs) virtual currency data from the two-dimensional barcode reflected in the image data. Thereby, the settlement terminal 300 receives the virtual currency data from the user terminal 100 (S971).

In any case, the main control unit 321 temporarily records the virtual currency data, for example, at least until payment due to the virtual currency data is completed. Such recording is performed on the RAM 313 as hardware.

Upon receipt of the virtual currency data from the user, the administrator or the like of the settlement terminal 300 operates the input device of the settlement terminal 300 to perform an operation for sending the virtual currency data to the settlement device 200.

When such an operation is performed, the operation content is sent from the input device to the main control unit 321 via the data input/output unit 323. When the operation content is input, the main control unit 321 sends the virtual currency data to the data input/output unit 323. The data input/output unit 323 sends the data to the transmission and reception unit, and the transmission and reception unit sends the data to the settlement device 200 via the network 400 (S972). At this time, the settlement terminal 300 sends the settlement terminal ID, together with the virtual currency data, to the settlement device 200. Also in the following description, the settlement terminal 300 intending to receive acceptance of settlement sends the settlement terminal ID, together with the virtual currency data, to the settlement device 200.

The settlement device 200 receives the data on the settlement terminal ID and the virtual currency data at the transmission and reception unit (S964). As described above, also in the second embodiment, similar to the case of the first embodiment, the virtual currency data is send from the user terminal 100 to the settlement device 200 via the settlement terminal 300.

The virtual currency data assigned the settlement terminal ID is sent to the main control unit 222 via the interface 214 and the data input/output unit 221.

The main control unit 222, having received them, sends the data on the settlement terminal ID and the virtual currency data (the virtual currency encryption data included in the virtual currency data in some cases) to the settlement determination unit 226, and sends the user ID included in the virtual currency data, together with an instruction for encryption, to the encryption unit 228.

The encryption unit 228, which has received the instruction for encryption together with the user ID included in the virtual currency data, executes a process of encrypting the original data for confirmation, and generates the encryption data for confirmation from the original data for confirmation (S965).

At this time, the encryption unit 228 reads, from the first recording unit 224C, the original data for confirmation that is the target of encryption. The original data for confirmation includes the user ID, as described above. The original data for confirmation read from the first recording unit 224C is the original data for confirmation including the user ID and sent from the main control unit 222. If multiple original data for confirmation including the user ID received by the encryption unit 228 from the main control unit 222 reside in the first recording unit 224C, the encryption unit 228 reads all the original data for confirmation.

The encryption unit 228 then applies the same process as that executed by the encryption unit 125 of the user terminal 100, to the original data for confirmation read from the first recording unit 224C if the number of pieces of data is one, or to all the original data for confirmation if the number of data is two or more, and converts the original data for confirmation into the encryption data for confirmation.

The encryption process in this case is the same as that used when the virtual currency encryption data included in the virtual currency data sent from the settlement terminal 300 for settlement is encrypted by the encryption unit 125 of the user terminal 100. The encryption unit 228 retains an algorithm for the encryption process used commonly when the encryption process is executed by the encryption units 125 of all the user terminal 100. The encryption unit 228 retains the unique key used by each encryption unit 125 when the encryption process is executed by the encryption unit 125 of each user terminal 100, in association with the user ID of each user terminal 100. For encryption of the original data for confirmation, the encryption unit 228 executes the encryption process, using the above-described algorithm for the encryption process, and the key retained by the encryption unit 228 associated with the same user ID as the user ID sent from the main control unit 222.

As a result, the original data for confirmation is encrypted to generate a certain character string. The encryption unit 228 extracts some characters from the generated character string on the basis of a predetermined rule, and generates a new character string, thereby generating encryption data for confirmation. The generated encryption data for confirmation is and, in the case of multiple generated encryption data for confirmation, all the data are sent from the encryption unit 228 to the settlement determination unit 226.

The settlement determination unit 226 receives the virtual currency data (or the virtual currency encryption data included therein) from the main control unit 222, and receives at least one piece of encryption data for confirmation from the encryption unit 228.

The settlement determination unit 226 having received them executes settlement determination (S966). Although the object itself to determine the authenticity of the virtual currency encryption data is not different from that of the first embodiment, the method of determination executed in the second embodiment is different from the case of the first embodiment.

Upon receipt of the virtual currency data from the main control unit 222, the settlement determination unit 226 takes the virtual currency encryption data therefrom, and compares the virtual currency encryption data with at least one piece of encryption data for confirmation received from the settlement determination unit 226. As a result, when at least one piece of the encryption data for confirmation coincides with the virtual currency encryption data, the settlement determination unit 226 determines that this virtual currency encryption data is authentic. On the contrary, when none of the encryption data for confirmation coincides with the virtual currency encryption data, the settlement determination unit 226 determines that the virtual currency encryption data is not authentic. Note that as described above, the target of determination of identicalness to the encryption data for confirmation by the settlement determination unit 226 is not the virtual currency data itself but is the virtual currency encryption data. Consequently, what is sent from the main control unit 222 to the settlement determination unit 226 is not the virtual currency data itself, but may be the virtual currency encryption data.

The determination of authenticity of the virtual currency encryption data can be achieved by such a method because of the following reason. The virtual currency encryption data generated by the user terminal 100 is generated by encrypting the original data at the encryption unit 125. On the other hand, the encryption data for confirmation generated by the settlement device 200 is generated by encrypting the original data for confirmation at the encryption unit 228. Here, the original data and the original data for confirmation are the same as each other as described above. The encryption method executed by the encryption unit 125 of the user terminal 100 and the encryption method executed by the encryption unit 228 are controlled using the user ID so as to be the same, as described above. That is, the virtual currency encryption data generated by the same method from the same data should be the same as the encryption data for confirmation. However, multiple virtual currency data generated by the user terminal 100 may be present in some cases. However, even in such cases, the original data for confirmation recorded in the first recording unit 224C of the settlement device 200 conforms to the original data included in a form of the virtual currency encryption data encrypted in all the virtual currency data generated by all the user terminals 100, and since the encryption data for confirmation read by the first recording unit 224C to performs encryption at the encryption unit 228 are all data issued by the user terminal 100 corresponding to the user ID included in the virtual currency data sent from the settlement terminal 300, all the original data for confirmation read from the first recording unit 224C are encrypted according to a correct method by the encryption unit 228 to generate, based thereon, encryption data for confirmation that is a part of the encrypted data, thereby allowing at least one piece of the resultantly generated encryption data for confirmation to coincide with the virtual currency encryption data unless the virtual currency encryption data is not falsified.

In short, since the encryption method is performed based on the same data, and furthermore, a part of data is extracted therefrom in conformity with the same rule, thereby allowing the same data to be obtained or allowing the same data to be reproduced, the settlement determination unit 226 in the second embodiment determines the authenticity of the virtual currency encryption data.

Note that the additional determination performed in the first embodiment may freely apply also to the settlement determination in the second embodiment.

Also in the second embodiment, similar to the case of the first embodiment, if the settlement determination unit 226 determines that the virtual currency encryption data is authentic, the settlement determination unit 226 generates final determination data indicating positive content that accepts the payment of the amount of money specified by the amount information, and if not determined as such, the settlement determination unit 226 generates final determination data that indicates negative content that does not accept the payment of the amount of money specified by the amount information.

In any case, the generated final determination data is sent from the settlement determination unit 226 to the main control unit 222.

The main control unit 222 receives the final determination data and performs the following processing.

When the final determination data is positive, the main control unit 222 executes a process of paying the amount of money specified by the final determination data to the administrator of the settlement terminal 300.

When the final determination data is positive, the main control unit 222 generates positive determination result data that is data including at least information on the fact that payment has been made and the amount of money.

On the other hand, when the final determination data is negative, the main control unit 222 does not perform the settlement processing.

In any case, the determination result data is sent from the main control unit 222 to the transmission and reception unit via the data input/output unit 221 and is transmitted to the settlement terminal 300 via the network 400 (S967). Although the transmission of the determination result data to the settlement terminal 300 can be omitted, but will be normally performed.

The determination result data is received by the transmission and reception unit of the settlement terminal 300 (S973).

The determination result data received by the transmission and reception unit is sent to the main control unit 321 as in the previous cases.

The main control unit 321 instructs the display control unit 322 to perform displaying on the display according to the determination result data. As a result, the display control unit 322 causes the display to perform displaying according to the determination result data (S974). The display may be similar to that in the process of S934 in the first embodiment.

The determination result data can also be transmitted to the user terminal 100, and the image based on the determination result data can be displayed on the display 101 even in the user terminal 100.

Thus, the payment processing using the virtual currency data from the user to the administrator of the settlement terminal 300 is completed.

Note that although the description is omitted above, the original data determined to be the same as the encryption data for confirmation by the settlement determination unit 226 can be removed from the first recording unit 224C. This can be achieved as follows: the settlement determination unit 226 notifies the main control unit 222 which original data is determined to be the same as the encryption data for confirmation by the settlement determination unit 226; and the main control unit 222 having received such a notification removes, from the first recording unit 224C, the original data for confirmation specified by such a notification. Since each of virtual currency data serves as a target of settlement only once at the settlement device 200, the original data for confirmation corresponding to the virtual currency data serving as a target of settlement is never used again. The above-described process has an object to remove such unnecessary original data for confirmation. In other words, such a process has an object to prevent dual use of the virtual currency data or original data for confirmation which has once been used for payment.

Note that in the above-described process, the determination of authenticity of the virtual currency encryption data executed by the settlement determination unit 226 requires comparison between one piece of virtual currency encryption data and one or more piece of encryption data for confirmation. On the other hand, the determination of authenticity executed by the settlement determination unit 226 may be performed by one-to-one comparison between one piece of virtual currency encryption data and one piece of encryption data for confirmation.

This can be achieved by including the serial number having already been described in the second embodiment, into the virtual currency data generated by the user terminal 100. The virtual currency data in this case includes, for example, the user ID, the serial number, and the virtual currency encryption data. The serial number is a plaintext. However, the serial number may be encrypted according to the same method by all the user terminals 100.

In a case of using such virtual currency data, the data recorded in the first recording unit 224C is not only the original data for confirmation, and is association between the original data for confirmation and the serial number corresponding to the original data for confirmation. As described above, since the main control unit 222 can generate the serial number, the main control unit 222 can record such information in the first recording unit 224C.

In the case of using such virtual currency data, when the virtual currency data is sent to the settlement device 200 from the settlement terminal 300 or the like, the main control unit 222 sends an instruction for the encryption unit 228 for encryption together not only with the user ID but also with the serial number, to the encryption unit 228. The encryption unit 228 having received them reads, from the first recording unit 224C, the original data for confirmation in which the same user ID as the user ID received from the main control unit 222 is included in the original data for confirmation and which is associated with the serial number received from the main control unit 222.

Since the number of piece of original data for confirmation satisfying such a condition is only one, as a result, at the encryption unit 228, one piece of encryption data for confirmation is generated from the one piece of original data for confirmation.

By sending such one piece of original data for confirmation from the encryption unit 228 to the settlement determination unit 226, the settlement determination unit 226 compares the one piece of virtual currency encryption data and one piece of encryption data for confirmation, in order to determine the authenticity of the virtual currency encryption data.

<Modification Example 3>

A settlement system according to Modification Example 3 is almost the same as the settlement system according to the second embodiment. In particular, the configuration of the settlement terminal 300 and processes executed by it are no different from those in the second embodiment.

Meanwhile, in Modification Example 3, the data structure of virtual currency data is slightly different from that in the second embodiment. The virtual currency data in the second embodiment is a combination of the virtual currency encryption data and the user ID, and the virtual currency encryption data is data obtained by extracting some characters from the character string obtained by encrypting the original data made of a combination of the amount information and the user ID. Meanwhile, the virtual currency data in Modification Example 3 includes: the virtual currency encryption data and the user ID as in the case of the second embodiment; and the encryption condition data in the present invention that is not included in the virtual currency data in the first embodiment.

The configurations of the user terminal 100 and the settlement device 200 in Modification Example 3 and processes executed in them are slightly different from those in the first embodiment. However, most of the configurations of the user terminal 100 and the settlement device 200 in Modification Example 3 and the processes executed in them are the same as those in the first embodiment.

In the settlement system in the second embodiment, the encryption method performed by the encryption unit 125 of the user terminal 100 to generate the virtual currency encryption data included in each of the multiple virtual currency data is identically applied to all the cases of generating the virtual currency encryption data. On the other hand, in Modification Example 3, a plurality of encryption methods are executed to obtain the virtual currency encryption data from the original data by the encryption unit 125 of each user terminal 100, or the encryption method changes at predetermined timing.

Consequently, the encryption process in the case of generating the encryption data for confirmation from the original data for confirmation executed by the encryption unit 228 of the settlement device 200 in Modification Example 3 is also required to be appropriately changed in conformity with (or in synchronization with) the encryption method executed by the user terminal 100 even in a case of generating the same encryption data for confirmation as the virtual currency encryption data included in the virtual currency data issued by the identical user terminal 100. More specifically, to intend to generate the same encryption data for confirmation as the virtual currency encryption data included in the virtual currency data received from the settlement terminal 300, the encryption unit 228 of the settlement device 200 is required to grasp not only which one of the user terminals 100 has issued the virtual currency encryption data serving as the target of determination of authenticity, but also which method among the plurality of encryption methods executable by the encryption unit 125 of the user terminal 100. This is enabled by the difference between the settlement device 200 in Modification Example 3 and the settlement device 200 in the second embodiment.

Although roughly speaking, the relationship between Modification Example 3 and the second embodiment is the same as the relationship between Modification Example 1 and the first embodiment.

Hereinafter, a focus is placed on the difference from the second embodiment, and the configurations of the user terminal 100 and the settlement device 200 in Modification Example 3 and processes executed by them will be described. What is specifically referred to is absence of difference.

First, the configuration of the user terminal 100 and the processes executed by it will be described.

As described above, in Modification Example 3, encryption performed by the encryption unit 125 is changed at predetermined timing. For example, every three times of encryption of the original data or every time when the date at a place where the settlement device 200 is installed changes, the method used to encrypt the original data at the encryption unit 125 of each user terminal 100 is changed. Although not limited thereto, in Modification Example 3, every time when the encryption unit 125 of each user terminal 100 performs a process of encrypting the original data and generating virtual currency encryption data, each user terminal 100 changes the encryption method. Consequently, as will be described below, the encryption process in the case of generating the encryption data for confirmation from the original data for confirmation by the encryption unit 228 of the settlement device 200 changes accordingly.

To change the encryption method, there are three types of measures that include changing the algorithm, changing the key, and changing both of them, and although any of them can be adopted, the key is changed also in Modification Example 3, similar to Modification Example 1.

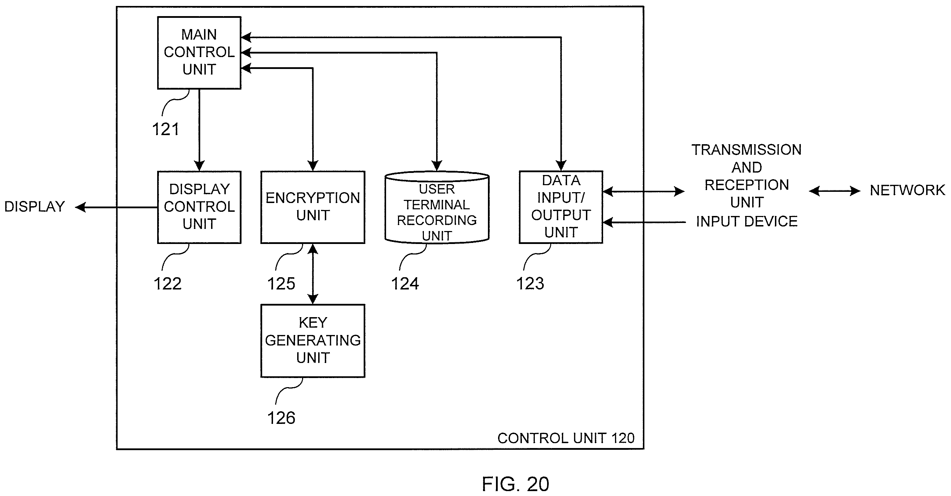

To allow the user terminal 100 to change the key, there is a key generating unit 126 among functional blocks in the user terminal 100 as shown FIG. 20. The key generating unit 126 generates the key to be used when the encryption unit 125 executes the encryption process. The key generating unit 126 is the same as the key generating unit 227 described in Modification Example 1, and can continuously generate a solution (key) as a pseudo-random number.

Next, a key generating method executed by the key generating unit 126 of the user terminal 100 in Modification Example 3, and timing at which the key is provided for the encryption unit 125, are described.

The timing at which the key generating unit 126 provides the encryption unit 125 with the key is timing immediately before the encryption unit 125 applies the encryption process to the original data.

As described above, upon receipt of the original data from the main control unit 121, the encryption unit 125 performs a process of encrypting the original data, and subsequently performs a process of extracting a part from the character string obtained by encryption. Upon receipt of the original data, the encryption unit 125 in Modification Example 3 sends data for requesting key generation to the key generating unit 126 before performing the process of encrypting the original data. The key generating unit 126, having receipt of the data, generates the data on the key, and sends the data to the encryption unit 125. The encryption unit 125 encrypts the original data using an unchangeable algorithm and the provided key to thereby obtain a predetermined character string, and extracts a part of the character string to obtain the virtual currency encryption data.

Similar to the case of the second embodiment, such virtual currency encryption data is sent to the main control unit 121. However, in the case of Modification Example 3, the encryption unit 125 sends, to the main control unit 121, not only the virtual currency encryption data, but also a number for specifying the order of generation of the virtual currency encryption data (that is, the order of the key used to encrypt the virtual currency encryption data). Although not limited thereto, for example, such a number may be a serial number starting from 1. This applies to this embodiment. That is, the first generated virtual currency encryption data is assigned a piece of data "1", the second generated virtual currency encryption data is assigned a piece of data "2", and the N-th generated virtual currency encryption data is assigned a piece of data "N". The encryption unit 125 sends these data to the main control unit 121.

The main control unit 121 assigns the user ID and the data on the number described above in a plaintext state, to the virtual currency encryption data. Such data on the number is a unique sequential number that indicates the order of issuance of the virtual currency data in the user terminal 100 having issued the virtual currency data. As a result, this is the same as the serial number information described in Modification Example 1. That is, the virtual currency data in Modification Example 3 is data obtained by assigning the user ID and the serial number to the virtual currency encryption data.

Next, the configuration of the settlement device 200 in the settlement system in Modification Example 3 and processes executed in it will be described.

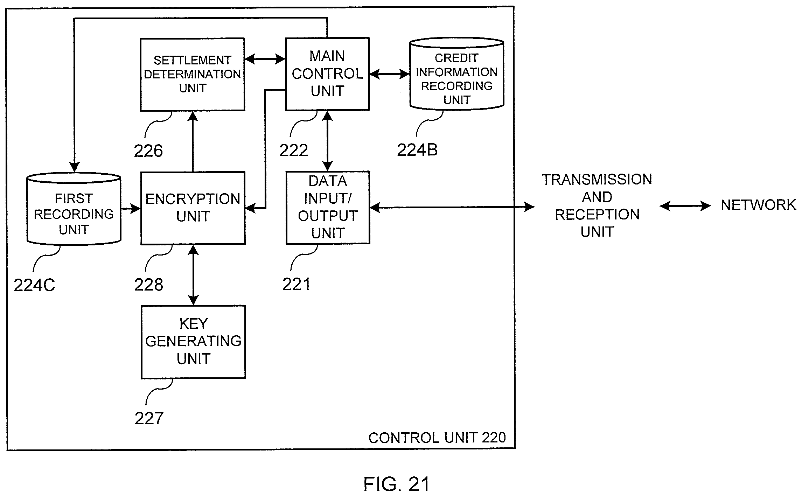

The hardware configuration of the settlement device 200 in Modification Example 3 is the same as that in the second embodiment. In the settlement device 200 in Modification Example 3, functional blocks are generated similarly to the case of the second embodiment. FIG. 21 shows the functional blocks generated in the settlement device 200 in Modification Example 3. The functional blocks in Modification Example 3 include a key generating unit 227, which is not included in the second embodiment.

Similar to the case of the main control unit 222 in the second embodiment, the main control unit 222 in Modification Example 3 also performs overall control within the control unit 220. Similar to the case of the second embodiment, the main control unit 222 in Modification Example 3 also executes the credit determination process, and the settlement process.

Similar to the case of the second embodiment, when the settlement device 200 accepts the virtual currency data for a settlement request issued by the settlement terminal 300 or the like, the main control unit 222 in Modification Example 3 sends the virtual currency data (only the virtual currency encryption data included therein in some cases) to the settlement determination unit 226, and further sends an instruction for encryption, together with the user ID and serial number included in the virtual currency data, to the encryption unit 228.

Similar to the case of the second embodiment, the main control unit 222 in Modification Example 3 performs the credit determination when the main control unit 222 receives the amount information from the data input/output unit 221. In this case, the main control unit 222 uses the data recorded in the credit information recording unit 224B; such use is similar to that in the second embodiment. The data recorded in the credit information recording unit 224B in Modification Example 3 is not different from that in the second embodiment. The process performed by the main control unit 222 after the credit determination is not different from that in the case of the second embodiment.

Similar to the case of the second embodiment, the main control unit 222 in Modification Example 3 receives final determination data from the settlement determination unit 226, in some cases. The processes executed by the main control unit 222 after receipt of the final determination data are not different between the second embodiment and Modification Example 3, irrespective of whether the final determination data is positive or negative.

Similar to the case of the second embodiment, the main control unit 222 in Modification Example 3 has a function of generating the original data for confirmation. The structure of the original data for confirmation and the generation method thereof are similar to those in the second embodiment. Similar to the case of the second embodiment, the main control unit 222 in Modification Example 3 records the generated original data for confirmation, in the first recording unit 224C. However, unlike the case of the second embodiment, in Modification Example 3, what is recorded in the first recording unit 224C includes the original data, and the serial number corresponding thereto.

As described above, the encryption unit 228 receives an instruction for encryption together with the user ID, from the main control unit 222, in some cases.

Upon receipt of such an instruction, the encryption unit 228 reads the original data for confirmation from the first recording unit 224C, encrypts the data, and furthermore, extracts a part from a character string obtained by the encryption and adopts the part as encryption data for confirmation. This itself is the same as that in the second embodiment, however, in Modification Example 3, the encryption method is required to be changed as described above. Accordingly, the encryption method is different in this point from the case of the second embodiment.

When the encryption process is changed, the encryption unit 228 can change the algorithm, the key or both of them. However, in this embodiment, although not limited thereto, the key is changed in a manner similar to the case of Modification Example 1. The key used by the encryption unit 228 for the encryption process is provided by the key generating unit 227. The key generating unit 227 in Modification Example 3 is for providing the key for the encryption unit 228. The timing when the key generating unit 227 generates the key is the timing of acceptance of a key generation request issued by the encryption unit 228, and more specific timing will be described below.

The details of the process that include which one is read by the encryption unit 228 in Modification Example 3 from among multiple original data for confirmation recorded in the first recording unit 224C, and conversion of the original data for confirmation read by the encryption unit 228 from the first recording unit 224C into the encryption data for confirmation, will be described below.

Similar to the case of the second embodiment, the encryption unit 228 sends the generated encryption data for confirmation to the settlement determination unit 226.

As described above, the settlement determination unit 226 performs the settlement determination. The process executed by the settlement determination unit 226 is similar to that in the second embodiment. Similar to the case of the second embodiment, the settlement determination unit 226 generates the final determination data, and sends the data to the main control unit 222.

A method of using the settlement system in Modification Example 3 and an operation thereof will be described.

Among the processes executed by the settlement system in Modification Example 3, all the processes of S971 to S974 executed by the settlement terminal 300 are the same as those in the second embodiment. Among the processes S951 to S958 executed by the user terminal 100 of the settlement system in Modification Example 3, the processes other than S956 for generating the virtual currency encryption data by encrypting the original data is basically the same as that in the second embodiment.

Similar to the case of the second embodiment, also in the settlement system in Modification Example 3, as preparation for using such a system, a user ID is set in each of the user terminals 100 and a settlement terminal ID is set in each of the settlement terminals 300. The processes thereafter are equivalent to the processes shown in FIG. 19 executed in the second embodiment.

First, the user terminal 100 executes the processes of S951 to S953, and the settlement device 200 executes the processes of S961 to S963. All the processes in Modification Example 3 are the same as those in the second embodiment.

On the other hand, in Modification Example 3, the settlement device 200 executes generation of the original data for confirmation, and recording of the original data for confirmation into the first recording unit 224C (S963A). Such processes are basically similar to the case of the second embodiment. The original data for confirmation identical to the original data to be subsequently generated by the user terminal 100 is generated similarly to the case of the second embodiment. The generated original data for confirmation is recorded in the first recording unit 224C by the main control unit 222, and the original data for confirmation recorded in the first recording unit 224C is assigned the serial number as described above.

Similar to the case of the second embodiment, in the user terminal 100, the process of S955 is executed, and similar to the case of the second embodiment, processes of encrypting the original data in S956, and generating the virtual currency encryption data by extracting a part of a character string obtained by encryption, are executed.

In the process of S956, the encryption unit 125 requests the key generating unit 126 to generate the key. Then, in response to such a request, since the key generated by the key generating unit 126 is provided for the encryption unit 125, the encryption unit 125 encrypts the original data using the key and the fixed algorithm. Furthermore, the encryption unit 125 extracts a part from the character string obtained by the encryption, and adopts the part as the virtual currency encryption data.

The obtained virtual currency encryption data is sent from the encryption unit 125 to the main control unit 121, is assigned the user ID and the serial number, and is adopted as the virtual currency data (S957).

The virtual currency data is delivered from the user terminal 100 to the settlement terminal 300 (S958). Then, in the settlement terminal 300, the processes of S971 and S972 are executed, and the settlement device 200 receives the virtual currency data together with the settlement terminal ID from the settlement terminal 300 (S964).

In the settlement device 200, the virtual currency data is sent to the main control unit 222.

The main control unit 222 sends the virtual currency data (only the virtual currency encryption data included therein in some cases; the same applies hereinafter.) to the settlement determination unit 226, and further sends an instruction for encryption, together with the user ID and serial number included in the virtual currency data, to the encryption unit 228.

The encryption unit 228 having received such an instruction reads the original data for confirmation serving as the encryption target, from the first recording unit 224C, in order to encrypt the original data for confirmation. Among the original data for confirmation recorded in the first recording unit 224C, the read original data for confirmation includes the user ID received by the encryption unit 228 from the main control unit 222, and is assigned the serial number received by the encryption unit 228 from the main control unit 222. Such original data for confirmation is only one.

Meanwhile, the encryption unit 228 requests the key generating unit 227 to generate the key. When requesting the key generating unit 227 to generate the key, the encryption unit 228 sends, together with such a request, the user ID and serial number included in the virtual currency data to the key generating unit 227. The key generating unit 227 uses the initial solution associated with the accepted user ID, and the algorithm for generating the solution, and uses the method similar to the case of that in Modification Example 1 to generate the same solution as that generated by the user terminal 100 specified by the user ID. Among solutions, a solution up to which the key generating unit 227 sequentially generates solutions is the solution at the order of "the number specified by the serial number". The key generating unit 227 sends the last generated solution, as the solution to be used for encryption, to the encryption unit 228.

The encryption unit 228 encrypts one piece of original data for confirmation read from the first recording unit 224C, using one key received from the key generating unit 227, and the fixed algorithm (S965A). The encryption unit 228 extracts a part of a character string obtained as a result, and generates the encryption data for confirmation. The encryption unit 228 sends the obtained one piece of encryption data for confirmation to the settlement determination unit 226.

According to coincidence between the virtual currency encryption data included in the virtual currency data sent from the main control unit 222 and the encryption data for confirmation accepted from the encryption unit 228, the settlement determination unit 226 then performs determination similar to that executed by the settlement determination unit 226 in the second embodiment (S966).

Subsequently, the process of S967 executed by the settlement device 200 and the processes of S973 and S974 executed by the settlement terminal 300, which are described in the second embodiment, are executed also in Modification Example 3.

Note that in Modification Example 3, the virtual currency data generated by the user terminal 100 may be configured not to include the serial number.

In this case, the content of the encryption process executed by the encryption unit 228 is different from that having been described so far in Modification Example 3. The encryption unit 228 having received the instruction for performing the encryption process from the main control unit 222 receives the user ID together with such an instruction, from the main control unit 222.

The encryption unit 228 having received such an instruction reads the original data for confirmation serving as the encryption target, from the first recording unit 224C, in order to encrypt the original data for confirmation. Among the original data for confirmation recorded in the first recording unit 224C, the read original data for confirmation includes the user ID received by the encryption unit 228 from the main control unit 222. Such original data for confirmation is one in some cases, and two or more in other cases.

Meanwhile, the encryption unit 228 requests the key generating unit 227 to generate the key. When requesting the key generating unit 227 to generate the key, the encryption unit 228 sends, together with such a request, the user ID included in the virtual currency data to the key generating unit 227. Here, the key generating unit 227 generates many solutions, using the initial solution associated with the accepted user ID, and the algorithm for generating the solution. The number of solutions is large such that with such a number of solutions (keys), the probability that any of the solutions has been used when the user terminal 100 generates the virtual currency encryption data, is assumed to be substantially 100%. The key generating unit 227 sends all the many solutions (keys) to the encryption unit 228.

The encryption unit 228 executes the process having been described many times; the process encrypts one or more pieces of original data for confirmation read from the first recording unit 224C, using many keys received from the key generating unit 227 and the fixed algorithm, and extracts a part from a character string obtained by the encryption. In a case of multiple original data for confirmation, such a process is executed for every piece of original data for confirmation.

As a result, the encryption unit 228 generates multiple encryption data for confirmation as many as a number obtained by multiplying the number of keys that the key generating unit 227 has generated, by the number of original data for confirmation read by the encryption unit 228 from the first recording unit 224C. All the multiple encryption data for confirmation are sent from the encryption unit 228 to the settlement determination unit 226.

The settlement determination unit 226 then performs settlement determination according to whether the virtual currency encryption data included in the virtual currency data sent from the main control unit 222 coincides with one piece of the multiple encryption data for confirmation accepted from the encryption unit 228 or not. If the virtual currency encryption data coincides with one piece of the multiple encryption data for confirmation, the result of settlement determination is positive, and if the data does not coincide with any of the multiple encryption data for confirmation, the result of settlement determination is negative.

<Modification Example 4>

A settlement system according to Modification Example 4 is almost the same as the settlement system according to the second embodiment. In particular, configurations of the user terminal 100 and the settlement terminal 300 and processes executed by it are no different from those in the second embodiment. Further, a data structure of virtual currency data is also the same as that in the second embodiment.

The main difference is a configuration of the settlement device 200 and a process executed by it. Nevertheless, the configuration of the settlement device 200 according to Modification Example 4 and the process executed by it are mostly the same as those in the case of the second embodiment.

The settlement device 200 in the second embodiment and the settlement device 200 in Modification Example 4 are common in that the generated encryption data for confirmation obtained by encrypting the original data for confirmation is used for settlement determination. However, in the settlement device 200 in the second embodiment, the preliminarily generated original data for confirmation is converted into the encryption data for confirmation by encryption or the like, after the virtual currency data including the virtual currency encryption data generated from the same original data as the original data for confirmation is received from the settlement terminal 300 or the like. Meanwhile, the settlement device 200 in Modification Example 4 is different from the settlement device 200 in the second embodiment in that in the settlement device 200 in Modification Example 4, the generated original data for confirmation is encrypted and converted into the encryption data for confirmation before the virtual currency data including the virtual currency encryption data generated from the same original data as the original data for confirmation is received from the settlement terminal 300 or the like.

Although roughly speaking, the relationship between Modification Example 4 and the second embodiment is the same as the relationship between Modification Example 2 and the first embodiment.

As described above, in Modification Example 4, the configurations of the user terminal 100 and the settlement terminal 300, and processes executed by them are not different from those in the first embodiment. Similar to the case of the first embodiment, the virtual currency data in Modification Example 4 is obtained by assigning the virtual currency encryption data the user ID.

Hereinafter, the configuration of the settlement device 200 in the settlement system in Modification Example 4, which is different from the second embodiment, and processes executed in it will be mainly described.

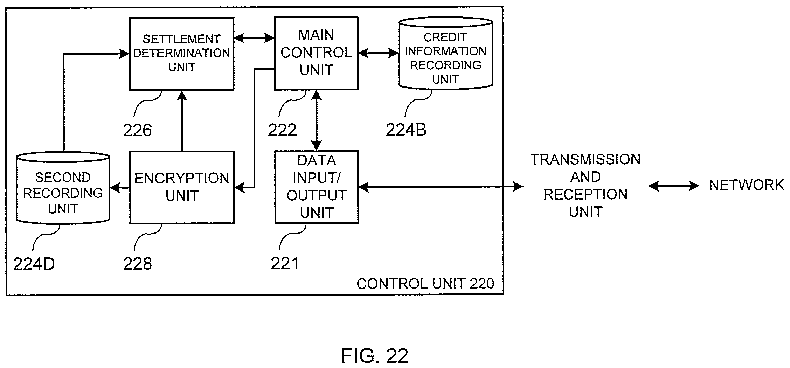

The hardware configuration of the settlement device 200 in Modification Example 4 is the same as that in the second embodiment. In the settlement device 200 in Modification Example 4, functional blocks are generated similarly to the case of the second embodiment. FIG. 22 shows the functional blocks generated in the settlement device 200 in Modification Example 4. The functional blocks in the settlement device 200 in Modification Example 4 are not substantially different from those in the second embodiment, however, the first recording unit 224C that is included in the second embodiment is not included, and the second recording unit 224D is included instead.

Similar to the case of the second embodiment, the main control unit 222 in Modification Example 4 also performs overall control within the control unit 220. Similar to the case of the second embodiment, the main control unit 222 in Modification Example 4 also executes the credit determination process, and the settlement process.

However, in the case of the second embodiment, after the settlement device 200 accepts, from the settlement terminal 300 or the like, the virtual currency data requesting settlement, the main control unit 222 sends not only the virtual currency data (only the virtual currency encryption data included therein in some cases) to the settlement determination unit 226, but also an instruction for encryption together with the user ID included in the virtual currency data to the encryption unit 228. On the contrary, after the settlement device 200 accepts, from the settlement terminal 300 or the like, the virtual currency data requesting settlement, the main control unit 222 in Modification Example 4 sends the virtual currency data (only the virtual currency encryption data included therein in some cases) to the settlement determination unit 226, but does not sends an instruction for encryption to the encryption unit 228. Sending the instruction for encryption to the encryption unit 228 by the main control unit 222 in Modification Example 4 is not related to whether or not the settlement device 200 accepts, from the settlement terminal 300 or the like, the virtual currency data requesting settlement, and for example, at a timing before acceptance of the virtual currency data, although not limited thereto, in this embodiment, at a timing immediately after the main control unit 222 generates permission information. For sending the instruction for encryption to the encryption unit 228, the main control unit 222 in Modification Example 4 sends such an instruction and also the original data for confirmation, to the encryption unit 228.

Similar to the case of the second embodiment, the main control unit 222 in Modification Example 4 performs the credit determination when the main control unit 222 receives the amount information from the data input/output unit 221. In this case, the main control unit 222 uses the data recorded in the credit information recording unit 224B; such use is similar to that in the second embodiment. The data recorded in the credit information recording unit 224B in Modification Example 4 is not different from that in the second embodiment. The process performed by the main control unit 222 after the credit determination is not different between the second embodiment and Modification Example 4.

Similar to the case of the second embodiment, the main control unit 222 in Modification Example 4 receives final determination data from the settlement determination unit 226, in some cases. The processes executed by the main control unit 222 after receipt of the final determination data are not different between the second embodiment and Modification Example 4, irrespective of whether the final determination data is positive or negative.

Similar to the main control unit 222 in the second embodiment, the main control unit 222 in Modification Example 4 has a function of generating the original data for confirmation. Such functions that the main control unit 222 in Modification Example 4 has are the same as those in the case of the second embodiment.

As described above, the encryption unit 228 receives the original data for confirmation from the main control unit 222, in some cases.

Upon receipt of such an instruction, the encryption unit 228 encrypts the original data for confirmation received from the main control unit 222, and extracts a character string from the character string obtained by encryption, in conformity with a predetermined rule, thereby generating the encryption data for confirmation. The encryption data for confirmation is the same as the virtual currency encryption data generated by the encryption unit 125 of the user terminal 100 on the basis of the original data.

The details of the method of generating the encryption data for confirmation about how the encryption unit 228 converts the original data for confirmation received from the main control unit 222 into the encryption data for confirmation will be described below.

The encryption unit 228 records the generated encryption data for confirmation, in the second recording unit 224D. In the second recording unit 224D, multiple encryption data for confirmation are recorded.

As described above, the virtual currency data (or the virtual currency encryption data included therein) is sent to the settlement determination unit 226 from the main control unit 222, in some cases. Upon receipt of this, the settlement determination unit 226 performs settlement determination. As a result, the settlement determination unit 226 generates final determination data that is data including any one of the content of accepting settlement and the content of not accepting the settlement.

The process of such settlement determination is different between the second embodiment and Modification Example 4. It will be described below how the settlement determination unit 226 in Modification Example 4 generates the final determination data.

In any case, after the final determination data is generated, the settlement determination unit 226 sends the data to the main control unit 222.

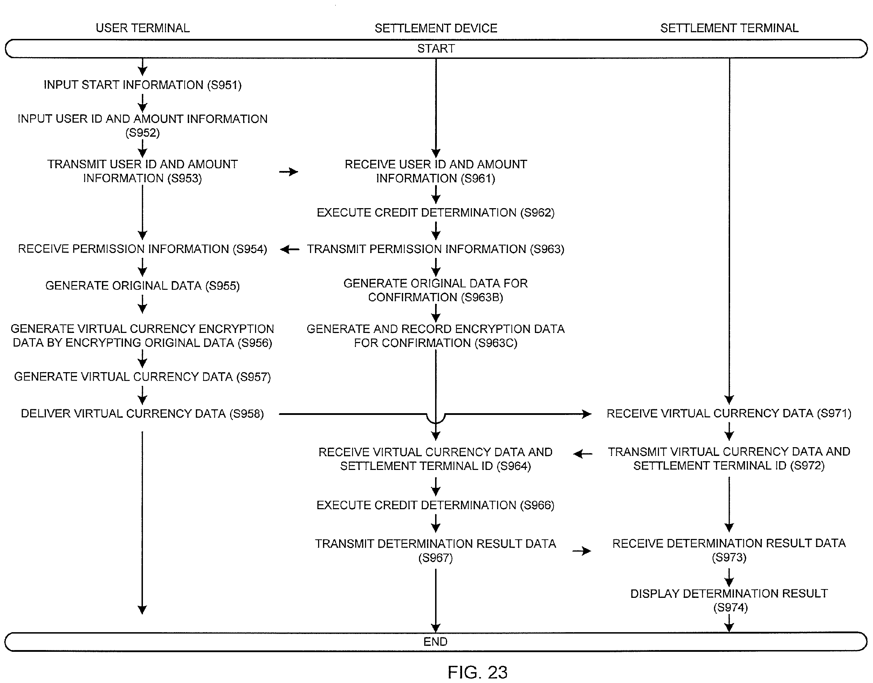

A method of using the settlement system in Modification Example 4 and an operation thereof will be described below with reference to FIG. 23.

Similar to the case of the second embodiment, also in Modification Example 4, as preparation for using such a system, a user ID is set in each of the user terminals 100 and a settlement terminal ID is set in each of the settlement terminals 300.

The processes of S951 to S958 subsequently executed by the user terminal 100 are the same as those in the second embodiment, and the processes of S971 to S974 executed by the settlement terminal 300 are also the same as those in the second embodiment. The processes of S961 to S963 and the processes of S964 and S967 executed by the settlement device 200 are also the same as those in the second embodiment.

Hereinafter, description will be made, with these processes being included.

Also in Modification Example 4, the virtual currency data is generated.

Similar to the case of the second embodiment, also in Modification Example 4, although not limited thereto, generation of the virtual currency data starts when the user inputs start information in the own user terminal 100 (S951).

According to display on the display 101, the user inputs the user ID and the amount information, respectively (S952). Next, the user ID and the amount information are sent from the data input/output unit 123 to the main control unit 121. The user ID and the amount information are sent from the transmission and reception unit to the settlement device 200 via the network 400 (S953).

The settlement device 200 causes the transmission and reception unit to receive the user ID and the amount information (S961). The transmission and reception unit sends these user ID and amount information to the data input/output unit 221, and the data input/output unit 221 sends the data to the main control unit 222.

The main control unit 222 performs credit determination (S962). Such a credit determination process is not different between the second embodiment and Modification Example 4. For performing credit determination, the main control unit 222 uses the data recorded in the credit information recording unit 224B.

In any case, when the credit of the user is accepted, the main control unit 222 generates permission information. The permission information is sent to the user terminal 100 via the network 400 (S963).

The user terminal 100 causes the transmission and reception unit to receive the permission information (S954).

Upon receipt of the permission information, the main control unit 121 of the user terminal 100 generates original data on the basis of the user ID and the amount information, which have already been received (S955). Similar to the case of the second embodiment, the original data is sent to the encryption unit 125, and the encryption unit 125 having received the data encrypts the original data and adopts the encrypted data as the virtual currency encryption data (S956). Similar to the case of the second embodiment, also in Modification Example 4, the encryption method executed by the encryption unit 125 of each user terminal 100 is a fixed method. The main control unit 121 then generates virtual currency data based on such virtual currency encryption data (S957).

As described above, upon receipt of the permission information from the settlement device 200, the user terminal 100 generates and issues the virtual currency data in response to the reception. Meanwhile, in Modification Example 4, in parallel thereto, generation of the original data for confirmation (S963B), and generation of the encryption data for confirmation by encrypting the original data for confirmation and recording the data in the second recording unit 224D (S963C) are performed. These processes of S963B and S963C are performed immediately after the process of S963 for transmission of the permission information, for example.

As described above, in S961, the settlement device 200 receives the user ID and the amount information from the user terminal 100. The user ID and the amount information are received by the main control unit 222. Based on them, similar to the case of the second embodiment, the main control unit 222 generates the original data for confirmation (S963B). It is herein configured such that the original data for confirmation generated in the settlement device 200 is same as the original data generated by the main control unit 121 of the user terminal 100 which has sent the user ID and the amount information to the settlement device 200 and received the permission information generated based on the user ID and the amount information.

The main control unit 222 transmits the generated original data for confirmation together with an instruction for encryption, to the encryption unit 228.

The encryption unit 228, having received the instruction for encryption together with the original data for confirmation, performs a process of encrypting the original data for confirmation, and of extracting, in conformity with a predetermined rule, a partial character string from the character string obtained by the encryption, and generates the encryption data for confirmation from the original data for confirmation (S963C).

The original data for confirmation includes the user ID, as described above. Meanwhile, the encryption unit 228 retains the key used in every user terminal 100 in association with the user ID. For performing the encryption process, the encryption unit 228 uses the key to be used by the user terminal 100 specified by the user ID, and the fixed algorithm for the encryption process.

As a result, the original data for confirmation is encrypted, and then a part of the obtained character string is extracted, thereby converting the data into the encryption data for confirmation. The encryption unit 228 writes the generated encryption data for confirmation in the second recording unit 224D.

On the other hand, when the virtual currency data is issued, the user delivers the virtual currency data from the user terminal 100 to the settlement terminal 300 managed, for example, a clerk of a store as a counterpart of payment (S958).

The settlement terminal 300 receives the virtual currency data from the user terminal 100 (S971).

The virtual currency data, together with the settlement terminal ID, is sent from the settlement terminal 300 to the settlement device 200 via the network 400 (S972).

The settlement device 200 receives the data on the settlement terminal ID and the virtual currency data at the transmission and reception unit (S964). The virtual currency data assigned the settlement terminal ID is sent to the main control unit 222, similarly to the case of the second embodiment.

The main control unit 222 having received them sends data on the settlement terminal ID, and the virtual currency data (the virtual currency encryption data included in the virtual currency data in some cases) to the settlement determination unit 226.

The settlement determination unit 226 receives the virtual currency data (or the virtual currency encryption data included therein) from the main control unit 222.

The settlement determination unit 226 having received it executes settlement determination (S966). Although the object itself to determine the authenticity of the virtual currency encryption data is not different from that of the second embodiment, the method of determination executed in Modification Example 4 is slightly different from the case of the second embodiment.

Upon receipt of the virtual currency data from the main control unit 222, the settlement determination unit 226 takes the virtual currency encryption data therefrom, and compares the virtual currency encryption data with multiple encryption data for confirmation recorded in the second recording unit 224D. If at least one piece of the multiple encryption data for confirmation coincides with the virtual currency encryption data, this virtual currency encryption data is determined to be authentic. On the contrary, if none of the encryption data for confirmation coincides with the virtual currency encryption data, the virtual currency encryption data is not determined to be authentic.

The determination of authenticity of the virtual currency encryption data can be achieved by such a method because of the reason similar to the case of the second embodiment. Although repetitively described, since the second embodiment and Modification Example 4 are different only in the timing when the original data for confirmation is encrypted to generate the encryption data for confirmation, the determination of authenticity of the virtual currency encryption data can be archived also in Modification Example 4, because of the reason having already been described in the second embodiment capable of determining the authenticity of the virtual currency encryption data using the encryption data for confirmation.

Similar to the case of the second embodiment, the generated final determination data is sent from the settlement determination unit 226 to the main control unit 222.

The main control unit 222 receives the final determination data, and performs the settlement process similarly to the second embodiment. Similar to the case of the second embodiment, the settlement device 200 generates determination result data, and transmits the determination result data to the settlement terminal 300 via the network 400 (S967).

The determination result data is received by the transmission and reception unit of the settlement terminal 300 (S973). As a result, display according to the determination result data is performed on the display of the settlement terminal 300 (S974).

Thus, the payment process using the virtual currency data from the user to the administrator of the settlement terminal 300 according to Modification Example 4 is completed.

Note that although the above description assumes that the virtual currency data includes the user ID, such a user ID is not used in S966 pertaining to execution of the settlement determination. That is, in Modification Example 4, since the user ID does not function and is in a suspended state, in actuality, in Modification Example 4, the virtual currency data is not required to include a plaintext user ID.

However, the user ID included in the virtual currency data can be used as follows. In this case, the data recorded in the second recording unit 224D is slightly changed. As described above, in the second recording unit 224D, multiple encryption data for confirmation generated by the encryption unit 228 are recorded. For using the user ID, the encryption unit 228 is at least configured so as to record, in the second recording unit 224D, the user ID included in the original data for confirmation serving as the origin of the encryption data for confirmation, in association with the encryption data for confirmation. Accordingly, the encryption data for confirmation recorded in the second recording unit 224D is in a state of being tagged with respect to each user ID.

When the settlement determination unit 226 searches the second recording unit 224D for the encryption data for confirmation identical to the virtual currency encryption data included in the virtual currency data received from the main control unit 222, the settlement determination unit 226 searches only for the encryption data for confirmation tagged with the same user ID as the user ID included in the virtual currency data, the encryption data being adopted as a search target for the encryption data for confirmation identical to the virtual currency encryption data. This configuration can reduce the number of pieces of data serving as targets of determination of identicalness to the virtual currency encryption data, among multiple encryption data for confirmation recorded in the second recording unit 224D.

Similar to the case of the second embodiment, also in Modification Example 4, encryption data for confirmation having already been used, that is, coinciding with the virtual currency encryption data can be removed from the second recording unit 224D.

<Modification Example 5>

A settlement system in Modification Example 5 is almost the same as that in Modification Example 4.

In Modification Example 4, the encryption method executed to generate the virtual currency encryption data by the encryption unit 125 of the user terminal 100, and the encryption method executed to generate the encryption data for confirmation by the encryption unit 228 of the settlement device 200 are each the single fixed method. On the contrary, in Modification Example 5, both the encryption methods are each multiple methods, or are changed. This is the difference between Modification Example 4 and Modification Example 5.

Modification Example 5 is the same as the Modification Example 4 except the above point. The configuration of the settlement terminal 300 and all the processes executed therein may be the same as those in Modification Example 4, and this applies to Modification Example 5. The configuration of the user terminal 100 and all the processes executed therein are the same as those in the user terminal 100 in Modification Example 3.

Hereinafter, the configuration of the settlement device 200 in the settlement system in Modification Example 5, which is different from Modification Example 4, and processes executed in it will be mainly described.

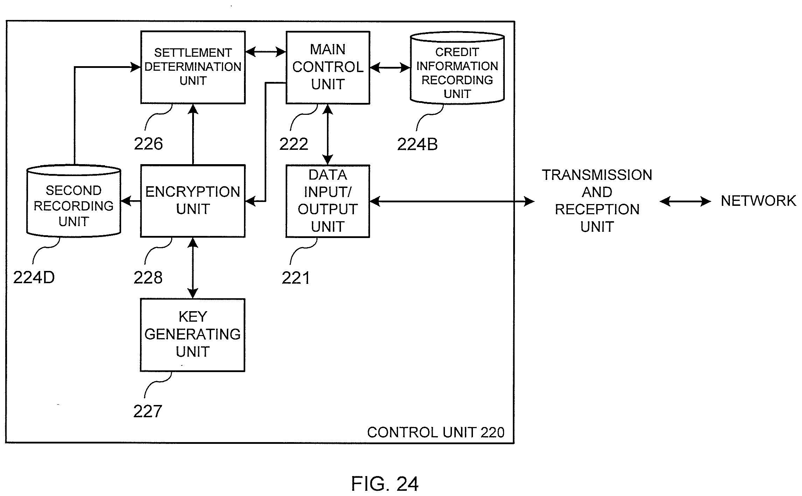

The hardware configuration of the settlement device 200 in Modification Example 5 is the same as that in Modification Example 4. In the settlement device 200 in Modification Example 5, functional blocks substantially identical to those in the case of Modification Example 4 are generated, however, these are different only in that the key generating unit 227 is present (FIG. 24).

Similar to the case of the main control unit 222 in Modification Example 4, the main control unit 222 in Modification Example 5 also performs overall control within the control unit 220. Similar to the case of Modification Example 4, the main control unit 222 in Modification Example 5 also executes the credit determination process, and the settlement process. The credit determination process and the settlement process are the same as those in the case of Modification Example 4. The data recorded in the credit information recording unit 224B, and the use of the data for credit determination are also the same as those in Modification Example 4.

Similar to the case of Modification Example 4, the main control unit 222 in Modification Example 5 has a function of generating the original data for confirmation. The structure of the original data for confirmation and the generation method thereof are similar to those in Modification Example 4. Similar to the case of Modification Example 4, the main control unit 222 in Modification Example 5 sends the generated original data for confirmation together with the instruction for encryption, to the encryption unit 228.

As described above, the encryption unit 228 receives the instruction for encryption together with the original data for confirmation, from the main control unit 222, in some cases.

Upon receipt of such an instruction, the encryption unit 228 encrypts the original data for confirmation received from the main control unit 222, and extracts characters from the character string obtained by the encryption, in conformity with a predetermined rule, thereby generating the encryption data for confirmation. Although this itself is the same as that in Modification Example 4, since in Modification Example 5, the encryption method is required to be changed as described above, the encryption method is different in this point from the case of Modification Example 4.

When the encryption process is changed, the encryption unit 228 can change the algorithm, the key or both of them. However, in this Modification Example, although not limited thereto, the key is changed. Similar to the case of Modification Example 3, the key used by the encryption unit 228 for the encryption process is provided by the key generating unit 227. The timing when the key generating unit 227 generates the key is the timing of acceptance of the key generation request issued by the encryption unit 228.

The details of the method of generating the encryption data for confirmation about how the encryption unit 228 in Modification Example 5 encrypts the original data for confirmation and converts the data into the encryption data for confirmation will be described below.

Similar to the case of Modification Example 4, the encryption unit 228 writes the generated encryption data for confirmation in the second recording unit 224D.

As described above, the settlement determination unit 226 performs the settlement determination. The process executed by the settlement determination unit 226 is similar to that in Modification Example 4. Similar to the case of Modification Example 4, the settlement determination unit 226 generates the final determination data, and sends the data to the main control unit 222.

A method of using the settlement system in Modification Example 5 and an operation thereof will be described.

The processes executed by the settlement system in Modification Example 5 are basically identical to the flow indicated in FIG. 23 that shows the flow of processes executed in the settlement system in Modification Example 4. The main difference between Modification Example 4 and Modification Example 5 is details of the process of S963C in the settlement device 200.

Similar to the case of Modification Example 4, also in the settlement system in Modification Example 5, as preparation for using such a system, a user ID is set in each of the user terminals 100 and a settlement terminal ID is set in each of the settlement terminals 300.

First, the user terminal 100 executes the processes of S951 to S953, and the settlement device executes the processes of S961 to S963. All the processes in Modification Example 5 are the same as those in Modification Example 4.

The user terminal 100 causes the transmission and reception unit to receive the permission information (S954).

Hereafter, in the user terminal 100, the processes of S954 to S957 are executed, and the virtual currency data is generated or issued. These processes are the same as the processes executed in the user terminal 100 that have been described in Modification Example 4.

As described above, upon receipt of the permission information from the settlement device 200, the user terminal 100 generates and issues the virtual currency data in response to the reception. Meanwhile, similar to Modification Example 4, in Modification Example 5, in parallel thereto, generation of the original data for confirmation (S963B), and generation of the encryption data for confirmation by encrypting the original data for confirmation and recording the data in the second recording unit 224D (S963C) are performed. Similar to the case of Modification Example 4, these processes of S963B and S963C are performed immediately after the process of S963 for transmission of the permission information, for example.

As described above, in S961, the settlement device 200 receives the user ID and the amount information from the user terminal 100. Similar to Modification Example 4, based on them, the main control unit 222 generates the original data for confirmation (S963B).

The main control unit 222 transmits the generated original data for confirmation together with an instruction for encryption, to the encryption unit 228.

The encryption unit 228, which has received the instruction for encryption together with the original data for confirmation, executes a process of encrypting the original data for confirmation, and generates the encryption data for confirmation from the original data for confirmation (S963C).

The encryption unit 228 requests the key generating unit 227 to generates a key, in order to obtain the key for encrypting the original data for confirmation. At this time, the encryption unit 228 sends the user ID included in the original data for confirmation, together with the key generation request, to the key generating unit 227.

Similar to the case of Modification Example 3, the key generating unit 227 uses the initial solution associated with the accepted user ID, and the algorithm for generating the solution, to generate the same solution as that generated by the user terminal 100 specified by the user ID. Here, among solutions, the solution up to which the key generating unit 227 sequentially generates solutions is "the solution next to the immediately previously generated solution". Since the solution generated by the user terminal 100, and the solution generated by the settlement terminal 300 are synchronized with each other such that the solutions generated at the same order are identical to each other of they are compared, the key generating unit 227 of the settlement terminal 300 can generate the same key as that of the key generating unit 126 of the user terminal 100.

The key generating unit 227 sends the last generated solution, as the solution to be used for encryption, to the encryption unit 228.

The encryption unit 228 encrypts the original data for confirmation received from the main control unit 222, using the key received from the key generating unit 227, and the fixed algorithm for the encryption process. The encryption unit 228 extracts, in conformity with a predetermined rule, some characters from the character string obtained by the encryption, thereby generating a new character string. The new character string is the encryption data for confirmation.

The encryption unit 228 writes the generated encryption data for confirmation in the second recording unit 224D.

All the processes executed thereafter by the settlement device 200 and the settlement terminal 300 are the same as those in Modification Example 4.

Note that the above description assumes that the virtual currency data includes the user ID, however, because of the reason similar to that in the case of Modification Example 4, the virtual currency data is not required to include the user ID. However, also in Modification Example 5, the user ID included in the virtual currency data can be used for the purpose and in modes in a manner similar to the case of Modification Example 4.

Similar to the case of Modification Example 4, also in Modification Example 5, encryption data for confirmation having already been used can be removed from the second recording unit 224D.

## Claims

1. A data structure of virtual currency data which is electronic data having a monetary value and is sent to a settlement device via a predetermined network to be settled by the settlement device,
   the data structure allowing the settlement device having received the virtual currency data to perform processing by including virtual currency encryption data which is a character string extracted, in conformity with a predetermined rule, from a character string obtained by encrypting plaintext original data which is data including at least amount information specifying a monetary value of the virtual currency data,
   wherein the processing generates encryption data for confirmation which is a character string extracted, in conformity with a rule identical to the predetermined rule used when the virtual currency encryption data is generated, from a character string obtained by encrypting, according to a method identical to a method used when the original data is encrypted, original data for confirmation which is original data identical to the original data serving as an origin of the virtual currency encryption data included in the received virtual currency data, and when the virtual currency encryption data coincides with the encryption data for confirmation, the processing determines that the virtual currency encryption data is authentic, and accepts settlement.

2. The data structure of virtual currency data according to claim 1, wherein
   the original data includes issue subject information including at least information on an issuer of the virtual currency data.

3. The data structure of virtual currency data according to claim 1, wherein
   encryption condition data which is information for specifying a condition when the original data is encrypted, is further attached.

4. A recording medium recorded with virtual currency data having the data structure of virtual currency data according to any one of claims 1 to 3.

5. A receiving device comprising:

a terminal device receiving means that receives data via the network, the recording medium according to claim 4 built therein, wherein

the virtual currency data is recorded on the recording medium after being received by the terminal device receiving means.

6. A transmission device comprising

a transmission device transmitting means that transmits data via the network, the recording medium according to claim 4 built therein, wherein

the virtual currency data is transmitted to the settlement device via the network by the transmission device transmitting means.

7. A settlement device, comprising:

a settlement device receiving means that receives virtual currency data from a predetermined device for requesting settlement, via a network, the virtual currency data including virtual currency encryption data which is a character string extracted, in conformity with a predetermined rule, from a character string obtained by encrypting plaintext original data which is data including at least amount information specifying a monetary value of the virtual currency data;

a settlement device encryption means that generates encryption data for confirmation which is a character string extracted, in conformity with a rule identical to the predetermined rule used when the virtual currency encryption data is generated, from a character string obtained by encrypting, according to a method identical to a method used when the original data is encrypted, original data for confirmation which is original data identical to the original data serving as an origin of the virtual currency encryption data included in the received virtual currency data;

a determination means that compares the virtual currency encryption data included in the virtual currency data received by the settlement device receiving means with the encryption data for confirmation generated by the settlement device encryption means, and determines that the virtual currency data including the virtual currency encryption data is authentic, when both the data coincide with each other; and

a settlement means that accepts settlement of an amount of money specified by the amount information included in the original data, when the determination means determines that the virtual currency data is authentic.

8. The settlement device according to claim 7, further comprising

a first recording means that records the original data for confirmation, wherein

when the settlement device receiving means receives the virtual currency data, the settlement device encryption means reads, from the first recording means, original data for confirmation identical to the original data serving as an origin of the virtual currency encryption data included in the virtual currency data, and generates the encryption data for confirmation, based on the read original data for confirmation.

9. The settlement device according to claim 7, further comprising

a second recording means that records the encryption data for confirmation, wherein

when the settlement device receiving means receives the virtual currency data, the determination means compares the encryption data for confirmation recorded in the second recording means with the virtual currency encryption data included in the virtual currency data received by the settlement device receiving means, and when the encryption data for confirmation identical to the virtual currency encryption data is recorded in the second recording means, the determination means determines that the virtual currency data including the virtual currency encryption data is authentic.

10. The settlement device according to claim 7, wherein

the virtual currency data includes encryption condition data which is information for specifying a condition when the original data is encrypted, and

when the original data for confirmation is encrypted, the settlement device encryption means determines a method of encrypting the original data for confirmation, based on the encryption condition data included together with the virtual currency encryption data in the virtual currency data.

11. A settlement method executed by a settlement device capable of receiving data via a network and including a computer for performing data processing, the settlement method including steps executed by the computer of:

a settlement device receiving step of receiving virtual currency data from a predetermined device for requesting settlement, via a network, the virtual currency data including virtual currency encryption data which is a character string extracted, in conformity with a predetermined rule, from a character string obtained by encrypting plaintext original data which is data including at least amount information specifying a monetary value of the virtual currency data;
a settlement device encryption step of generating encryption data for confirmation which is a character string extracted, in conformity with a rule identical to the predetermined rule used when the virtual currency encryption data is generated, from a character string obtained by encrypting, according to a method identical to a method used when the original data is encrypted, original data for confirmation which is original data identical to the original data serving as an origin of the virtual currency encryption data included in the received virtual currency data;
a determination step of comparing the virtual currency encryption data included in the virtual currency data received by the settlement device receiving step with the encryption data for confirmation generated by the settlement device encryption step, and of determining that the virtual currency data including the virtual currency encryption data is authentic, when both the data coincide with each other; and
a settlement step of accepting settlement of an amount of money specified by the amount information included in the original data, when the determination step determines that the virtual currency data is authentic.

12. A computer program for causing a computer capable of receiving data via a network and performing data processing to function as a settlement device, the computer program causing the computer to function as:

a settlement device receiving step of receiving virtual currency data from a predetermined device for requesting settlement, via a network, the virtual currency data including virtual currency encryption data which is a character string extracted, in conformity with a predetermined rule, from a character string obtained by encrypting plaintext original data which is data including at least amount information specifying a monetary value of the virtual currency data;
a settlement device encryption step of generating encryption data for confirmation which is a character string extracted, in conformity with a rule identical to the predetermined rule used when the virtual currency encryption data is generated, from a character string obtained by encrypting, according to a method identical to a method used when the original data is encrypted, original data for confirmation which is original data identical to the original data serving as an origin of the virtual currency encryption data included in the received virtual currency data;
a determination step of comparing the virtual currency encryption data included in the virtual currency data received by the settlement device receiving step with the encryption data for confirmation generated by the settlement device encryption step, and of determining that the virtual currency data including the virtual currency encryption data is authentic, when both the data coincide with each other; and
a settlement step of accepting settlement of an amount of money specified by the amount information included in the original data, when the determination step determines that the virtual currency data is authentic.

13. A virtual currency data generating device, comprising
a generating device encryption means that generates virtual currency encryption data which is a character string extracted, in conformity with a predetermined rule, from a character string obtained by encrypting plaintext original data which is data including at least amount information specifying a monetary value of the virtual currency data, and thus being capable of generating virtual currency data which includes the virtual currency encryption data and is data on virtual currency having a monetary value.

14. A virtual currency data generating device, comprising
a generating device encryption means that generates virtual currency encryption data which is a character string extracted, in conformity with a predetermined rule, from a character string obtained by encrypting plaintext original data which is data including at least amount information specifying a monetary value of the virtual currency data, and thus being capable of generating virtual currency data which includes the virtual currency encryption data and is data on virtual currency having a monetary value, wherein
the virtual currency data generating device is integrated with the settlement device according to any one of claims 7 to 10.

15. A method executed by a virtual currency data generating device including a computer and capable of generating virtual currency data which is data on virtual currency having a monetary value, the method including a step executed by the computer of
generating virtual currency encryption data which is a character string extracted, in conformity with a predetermined rule, from a character string obtained by encrypting plaintext original data which is data including at least amount information specifying a monetary value of the virtual currency data,
and thus generating virtual currency data which includes the virtual currency encryption data and is data on virtual currency having a monetary value.

16. A computer program of causing a compute to function as a virtual currency data generating device capable of generating virtual currency data which is data on virtual currency having a monetary value, the computer program causing the computer to execute:

a step of generating virtual currency encryption data which is a character string extracted, in conformity with a predetermined rule, from a character string obtained by encrypting plaintext original data which is data including at least amount information specifying a monetary value of the virtual currency data,
and thus generating virtual currency data which includes the virtual currency encryption data and is data on virtual currency having a monetary value.

FIG. 1

100

101

102

FIG. 2

111    112    113

| CPU | ROM | RAM |

116

INTERFACE

114

FIG. 3

FIG. 4

2 1 1        2 1 2        2 1 3

| CPU | ROM | RAM |

2 1 6

| HDD | INTERFACE |

2 1 5        2 1 4

FIG. 5

FIG. 6

311          312          313

```
+-----------+  +-----------+  +-----------+
|           |  |           |  |           |
|    CPU    |  |    ROM    |  |    RAM    |
|           |  |           |  |           |
+-----------+  +-----------+  +-----------+
```

316

```
        +--------------+
        |              |
        |  INTERFACE   |
        |              |
        +--------------+
```

314

FIG. 7

FIG. 8

| USER TERMINAL | SETTLEMENT DEVICE | SETTLEMENT TERMINAL |
|---|---|---|

START

START GENERATION OF GENERATION REQUEST INFORMATION (S911)

INPUT USER ID AND AMOUNT INFORMATION (S912)

TRANSMIT GENERATION REQUEST INFORMATION (S913) → RECEIVE GENERATION REQUEST INFORMATION (S921)

EXECUTE CREDIT DETERMINATION (S922)

GENERATE VIRTUAL CURRENCY DATA (S923)

RECEIVE VIRTUAL CURRENCY DATA (S914) ← TRANSMIT VIRTUAL CURRENCY DATA (S924)

RECORD ORIGINAL DATA IN FIRST RECORDING UNIT (S925)

DELIVER VIRTUAL CURRENCY DATA (S915) → COLLECT VIRTUAL CURRENCY DATA (S931)

RECEIVE VIRTUAL CURRENCY DATA AND SETTLEMENT TERMINAL ID (S926) ← TRANSMIT VIRTUAL CURRENCY DATA AND SETTLEMENT TERMINAL ID (S932)

GENERATE ENCRYPTION DATA FOR CONFIRMATION BASED ON ORIGINAL DATA FOR CONFIRMATION (S927)

EXECUTE SETTLEMENT DETERMINATION (S928)

TRANSMIT DETERMINATION RESULT DATA (S929) → RECEIVE DETERMINATION RESULT DATA (S933)

DISPLAY RESULT OF DETERMINATION (S934)

END

FIG. 9

（A）

START OF
SETTLEMENT    (DECISION)

USER ID: [          ]

AMOUNT OF
MONEY (YEN): [          ]

（B）

START OF
SETTLEMENT    (DECISION)

USER ID: [ d2af1apfa ]

AMOUNT OF
MONEY (YEN): [ 25, 000 ]

FIG. 10

(A)

| USER ID | BALANCE OF DEPOSIT ACCOUNT (YEN) |
|---|---|
| kgpi4649a | 2500 |
| LP000ddaa | 0 |
| d2af1apfa | 100000 |
| 220piiai1 | 25000 |
| iaorzkk00 | 300000 |
| . | . |
| . | . |
| . | . |

(B)

| SERIAL NUMBER | CREDIT INFORMATION |
|---|---|
| 000000001 | 2500YEN |
| 000000002 | 10000YEN |
| 000000003 | 100000YEN |
| 000000004 | 25000YEN |
| 000000005 | 300000YEN |
| . | . |
| . | . |
| . | . |

FIG. 11

（A）

| ISSUE SUBJECT INFORMATION | AMOUNT INFORMATION | CREDIT INFORMATION |
|---|---|---|

（B）

| ISSUE SUBJECT INFORMATION | AMOUNT INFORMATION | CREDIT INFORMATION | SERIAL NUMBER INFORMATION | AMOUNT INFORMATION |
|---|---|---|---|---|

FIG. 12

VIRTUAL CURRENCY DATA

25000YEN   SERIAL NUMBER; 000000004

10000YEN   SERIAL NUMBER; 00000112B

4000YEN   SERIAL NUMBER; 00000C2F3

101

FIG. 13

VIRTUAL CURRENCY DATA

25000YEN
SERIAL NUMBER; 000000004

101

FIG. 14

FIG. 15

FIG. 16

FIG. 17

FIG. 18

FIG. 19

USER TERMINAL — SETTLEMENT DEVICE — SETTLEMENT TERMINAL

INPUT START INFORMATION (S951)

INPUT USER ID AND AMOUNT INFORMATION (S952)

TRANSMIT USER ID AND AMOUNT INFORMATION (S953)

RECEIVE USER ID AND AMOUNT INFORMATION (S961)

EXECUTE CREDIT DETERMINATION (S962)

TRANSMIT PERMISSION INFORMATION (S963)

RECEIVE PERMISSION INFORMATION (S954)

GENERATE AND RECORD ORIGINAL DATA FOR CONFIRMATION (S963A)

GENERATE ORIGINAL DATA (S955)

GENERATE VIRTUAL CURRENCY ENCRYPTION DATA BY ENCRYPTING ORIGINAL DATA (S956)

GENERATE VIRTUAL CURRENCY DATA (S957)

DELIVER VIRTUAL CURRENCY DATA (S958)

RECEIVE VIRTUAL CURRENCY DATA (S971)

TRANSMIT VIRTUAL CURRENCY DATA AND SETTLEMENT TERMINAL ID (S972)

RECEIVE VIRTUAL CURRENCY DATA AND SETTLEMENT TERMINAL ID (S964)

ENCRYPT ORIGINAL DATA FOR CONFIRMATION (S965A)

EXECUTE CREDIT DETERMINATION (S966)

TRANSMIT DETERMINATION RESULT DATA (S967)

RECEIVE DETERMINATION RESULT DATA (S973)

DISPLAY DETERMINATION RESULT (S974)

FIG. 20

FIG. 21

FIG. 22

| USER TERMINAL | SETTLEMENT DEVICE | SETTLEMENT TERMINAL |
|---|---|---|
| START | | |

INPUT START INFORMATION (S951)

INPUT USER ID AND AMOUNT INFORMATION (S952)

TRANSMIT USER ID AND AMOUNT INFORMATION (S953) → RECEIVE USER ID AND AMOUNT INFORMATION (S961)

EXECUTE CREDIT DETERMINATION (S962)

RECEIVE PERMISSION INFORMATION (S954) ← TRANSMIT PERMISSION INFORMATION (S963)

GENERATE ORIGINAL DATA (S955)    GENERATE ORIGINAL DATA FOR CONFIRMATION (S963B)

GENERATE VIRTUAL CURRENCY ENCRYPTION DATA BY ENCRYPTING ORIGINAL DATA (S956)    GENERATE AND RECORD ENCRYPTION DATA FOR CONFIRMATION (S963C)

GENERATE VIRTUAL CURRENCY DATA (S957)

DELIVER VIRTUAL CURRENCY DATA (S958) → RECEIVE VIRTUAL CURRENCY DATA (S971)

RECEIVE VIRTUAL CURRENCY DATA AND SETTLEMENT TERMINAL ID (S964) ← TRANSMIT VIRTUAL CURRENCY DATA AND SETTLEMENT TERMINAL ID (S972)

EXECUTE CREDIT DETERMINATION (S966)

TRANSMIT DETERMINATION RESULT DATA (S967) → RECEIVE DETERMINATION RESULT DATA (S973)

DISPLAY DETERMINATION RESULT (S974)

| END | | |

FIG. 23

SETTLEMENT DETERMINATION UNIT

MAIN CONTROL UNIT

CREDIT INFORMATION RECORDING UNIT

226

222

224B

SECOND RECORDING UNIT

ENCRYPTION UNIT

DATA INPUT/ OUTPUT UNIT

TRANSMISSION AND RECEPTION UNIT

NETWORK

224D

228

221

KEY GENERATING UNIT

227

CONTROL UNIT 220

FIG. 24